(19) Europäisches Patentamt
European Patent Office
Office européen des brevets

(11) **EP 1 837 942 A1**

(12) **EUROPEAN PATENT APPLICATION**
published in accordance with Art. 158(3) EPC

(43) Date of publication:
**26.09.2007 Bulletin 2007/39**

(51) Int Cl.:
*H01M 8/06* (2006.01)    *H01M 8/04* (2006.01)
*H01M 8/10* (2006.01)    *C01B 3/32* (2006.01)
*C25B 1/02* (2006.01)    *C25B 9/08* (2006.01)
*C25B 15/02* (2006.01)

(21) Application number: **05851009.0**

(22) Date of filing: **26.12.2005**

(86) International application number:
**PCT/JP2005/024209**

(87) International publication number:
**WO 2006/070910 (06.07.2006 Gazette 2006/27)**

(84) Designated Contracting States:
**DE FR GB**

(30) Priority: **28.12.2004  JP 2004381871**
**24.05.2005  JP 2005151125**

(71) Applicant: **GS Yuasa Corporation**
**Kyoto-shi, Kyoto 601-8520 (JP)**

(72) Inventors:
• **OKUYAMA, Ryoichi,**
**c/o GS YUASA CORPORATION**
**Kyoto-shi,**
**Kyoto; 6018520 (JP)**

• **YAMAMOTO, Yoshihiro,**
**c/o GS YUASA CORPORATION**
**Kyoto-shi,**
**Kyoto; 6018520 (JP)**
• **ASHIDA, Katsuji,**
**c/o GS YUASA CORPORATION**
**Kyoto-shi,**
**Kyoto; 6018520 (JP)**

(74) Representative: **Vossius & Partner**
**Siebertstrasse 4**
**81675 München (DE)**

(54) **STAND-ALONE HYDROGEN PRODUCTION SYSTEM**

(57)    A standalone hydrogen generating system is provided using a hydrogen generating device which can generate a hydrogen-containing gas at a low temperature and can be operated only by electric energy supplied from a fuel cell and does not require large electric energy.

In the standalone hydrogen generating system provided with at least a hydrogen generating cell (10) constituting a hydrogen generating device, auxiliary machines (16), (17) for operating the hydrogen generating device, and a fuel cell (33) for supplying electric energy to the auxiliary machines (16), (17), the hydrogen generating device is to generate a gas containing hydrogen by decomposing a fuel containing an organic compound, comprising a partition membrane (11), a fuel electrode (12) provided on one surface of the partition membrane (11), means for supplying a fuel containing the organic compound and water to the fuel electrode (12), an oxidizing electrode (14) provided on the other surface of the partition membrane (11), means for supplying an oxidizing agent to the oxidizing electrode (14), and means for generating and collecting the gas containing hydrogen from the fuel electrode (12). There are cases in the hydrogen generating device: (a) the hydrogen generating cell (10) in the hydrogen generating device is an open circuit having neither means for withdrawing electric energy to outside from the cell (10), nor means for providing electric energy from outside to the cell (10); (b) means for withdrawing electric energy to outside with the fuel electrode (12) serving as a negative electrode and the oxidizing electrode (14) as a positive electrode; and (c) means for providing electric energy from outside with the fuel electrode (12) serving as cathode and the oxidizing electrode (14) as anode.

FIG. 1 (a)

EP 1 837 942 A1

**Description**

TECHNICAL FIELD

The present invention relates to a standalone hydrogen generating system for generating a hydrogen-containing gas by decomposing a fuel containing an organic compound at a low temperature.

Currently, as measures against problems of environment and natural resources, development of a fuel cell automobile is actively pursued. A fuel cell automobile on which a vessel storing hydrogen gas or hydrogen in the form of a hydrogen storing alloy is mounted has been developed as the fuel cell automobile, and a system (device) combining a reformer for generating hydrogen from a fuel (fuel processing device) and a fuel cell is proposed as a system for supplying hydrogen to this fuel cell automobile (See Patent Document 1 and 2).

[Patent Document 1] Japanese Unexamined Patent Application Publication No. 2002-337999
[Patent Document 2] Japanese Unexamined Patent Application Publication No. 2004-200042

In Patent Document 1, the invention is described that a fuel supply system for a fuel supply station for automobile having storing equipment of hydrocarbon fuel, comprising hydrogen supply means for supplying hydrogen to a hydrogen storing vessel of an automobile using hydrogen as a fuel and a fuel cell power generating system with the hydrocarbon fuel as an original fuel, characterized in that the fuel cell power generating system has at least a reformer for generating hydrogen from the hydrocarbon fuel and a fuel cell and further comprises a refining device for refining a hydrogen-containing gas on the downstream of the reformer, a booster for raising the pressure of the hydrogen gas obtained by refining by the refining device, and means for guiding the hydrogen gas whose pressure has been raised by the booster to the hydrogen supply means." (Claim 1). According to this invention, "the power generated at the fuel cell system is supplied to the fuel supply station for automobile and exhaust heat of the fuel cell system can be used in the thermoelectric release form." (Paragraph [0027]), but since the reformer for generating hydrogen from the hydrocarbon fuel obtains hydrogen from naphtha or kerosene by reforming reaction such as steam reforming reaction using a reforming catalyst or partial oxidization reaction (See Paragraphs [0022] to [0023]), there are problems that the reforming temperature is high, the catalyst is easily deteriorated, the device size is large and maintenance/operation is difficult.

In Patent Document 2, the invention is described that "A fuel cell device characterized in that a branch line is branched from a line for supplying a hydrogen rich gas to a fuel cell itself from a fuel processing device, and a hydrogen refining device, a hydrogen storing device ,and a hydrogen supplying device are provided at the branch line." (Claim 1), and according to this invention, "by power generated by a fuel cell itself 2 or 6, power required for raising the pressure of the hydrogen (rich) gas to a predetermined pressure can be provided for hydrogen refining and hydrogen storing." (Paragraph [0038]), but since the fuel cell itself used is limited to those using hydrogen as a fuel, and since the fuel processing device is "provided with a desulfurizer, a reformer, a carbon monoxide transformer, and a carbon monoxide remover" (See Claims 2 to 4) and normally reforms a hydrocarbon fuel, there are problems that various devices are needed, the reforming temperature is high, and maintenance/operation is difficult.

Also, with regard to the fuel to be reformed by the reformer, development of a methanol reformer with a low reforming temperature has progressed other than the above fuels, and three reforming methods are currently employed: steam reforming, partial oxidization reforming and reforming using the both (See Non-patent Document 1). However, with any of the reforming method being employed, reforming should be performed at a high temperature of 200°C or above in order to manufacture a gas including hydrogen, and there are problems of poisoning of reforming catalyst, removal of CO contained in the reformed gas (gas containing hydrogen), mixture of nitrogen in the air into the reformed gas obtained by partial oxidization reform or reform using the both methods.

[Non-patent Document 1] "Development and Practical Application of Solid Polymer type Fuel Cell", PP 141 to 166, May 28, 1999, published by Technical Information Institute, Co., Ltd.

On the other hand, instead of reforming a fuel containing an organic compound as above, a system is being developed that hydrogen is generated by electrolysis of water and stored in a hydrogen storage tank and the hydrogen is supplied to a hydrogen storing vessel mounted on a fuel cell automobile (See Patent Documents 3 and 4, for example).

According to this system, a high temperature to reform the fuel containing an organic compound is not needed but there is a problem that a large amount of power is required.

[Patent Document 3] Japanese Unexamined Patent Application Publication No. 2002-161998
[Patent Document 4] Japanese Unexamined Patent Application Publication No. 2002-363779

Also, hydrogen is used in a process for thermal treatment of a wafer in manufacturing of a semiconductor device such as an integrated circuit. Typical processing includes annealing a wafer in a hydrogen gas atmosphere and oxidization of a wafer surface in a wet oxidized atmosphere containing steam composed by a hydrogen gas and an oxygen gas. In a conventional heat treatment device using a hydrogen gas in this type of a semiconductor device manufacturing process, the hydrogen gas is normally guided from a storing vessel storing a large quantity of hydrogen gas at a high pressure such as a hydrogen cylinder in which the hydrogen gas is filled at a high pressure and a hydrogen curdle in which a plurality of such hydrogen cylinders are collected to the heat treatment device via gas piping to be used for the heat treatment. But since this heat treatment device is installed and used in a clean room with high sealing performance insulated from the outside in general, there is a problem of a high risk of accident such as an explosion of the hydrogen caused by leakage of the hydrogen gas. Then, in order to solve this problem, a technology to provide a semiconductor wafer heat treatment device in which a fear of hydrogen gas leakage in a clean room is reduced, by which the hydrogen gas can be used safely has been developed (See Patent Document 5).

[Patent Document 5] Japanese Unexamined Patent Application Publication No. 7-45602

Patent Document 5 describes the invention that "A semiconductor wafer heat treatment device for heat treatment of a semiconductor wafer using a hydrogen gas directly or indirectly in a semiconductor device manufacturing process, characterized in that a water electrolysis device for generating a hydrogen gas and an oxygen gas by electrolysis of water is provided, and the semiconductor wafer is heat-treated using the hydrogen gas or the hydrogen gas and the oxygen gas obtained by the water electrolysis device.", and the effect is exerted that "since the semiconductor wafer heat treatment device of the present invention is provided with a water electrolysis device for generating hydrogen, there is no need to install a hydrogen cylinder or curdle storing a large amount of hydrogen at a high pressure outside a clean room and to guide the hydrogen from the hydrogen cylinder or curdle with a long piping, and thus, there is little danger of hydrogen gas leakage and moreover, since generation of a hydrogen gas is immediately stopped by shutting down power of the water electrolysis device, there is no danger of hydrogen gas leakage by shutting down the power at an earthquake or fire but the device can be stopped safely." (paragraph [0055]), but there is a problem that a large amount of electric energy should be supplied from the outside.

Moreover, an invention of a method for generating hydrogen by electrochemical reaction (See Patent Documents 6, 8) and an invention of a fuel cell using hydrogen generated by an electrochemical method (See Patent Documents 7 to 9) are also known.

[Patent Document 6] Japanese Patent No. 3328993

[Patent Document 7] Japanese Patent No. 3360349

[Patent Document 8] united States Patents Publications Nos. 6,299,744, 6,368,492, 6,432,284, 6,533,919, and United States Patent Publication No. 2003/0226763

[Patent Document 9] Japanese Unexamined Patent Application Publication No 2001-297779

Patent Document 6 cited above describes (Claim 1), "a method for generating hydrogen comprising providing a pair of electrodes on the two opposite surfaces of a cation exchange membrane, contacting a fuel containing at least methanol and water with one electrode having a catalyst, applying a voltage between the pair of electrodes so that electrons are withdrawn from the electrodes thereby causing a reaction to occur on the electrodes whereby hydrogen ions are generated from methanol and water, and allowing hydrogen ions to be converted on the other electrode, being supplied with electrons, into hydrogen molecules." The same patent document discloses another method (paragraphs [0033] to [0038]) for selectively generating hydrogen using a conversion system, the method comprising supplying water or water vapor together with methanol which serves as a fuel, applying a voltage via an external circuit to cause electrons to be withdrawn from a fuel electrode, so that reaction represented by $CH_3OH + 2H_2O \rightarrow CO_2 + 6e^- + 6H^+$ occurs on the fuel electrode, and allowing hydrogen ions thus produced to pass through a cation exchange membrane to reach the opposite electrode where the hydrogen ions undergo reaction represented by $6H^+ + 6e^- \rightarrow 3H_2$. Patent Document 7 cited above describes (paragraphs [0052] to [0056]) a fuel cell which utilizes hydrogen generated by a method as described above.

According to the inventions described in Patent Document 6 (paragraph [0042]) and Patent Document 7 (paragraph [0080]) cited above, it is possible to generate hydrogen at a low temperature. However, the methods described in those inventions are obviously different from the hydrogen generating device used in a standalone hydrogen generating system of the present invention which will be given below in following points: those methods require the application of voltage, and hydrogen is generated on the electrode opposite to the electrode (fuel electrode) to which fuel is supplied, and no oxidizing agent is supplied to the opposite electrode.

This holds true also for the inventions disclosed by Patent Document 8 cited above similarly to Patent Documents 6 and 7 cited above. Those inventions use a system for generating hydrogen where protons generated on anode 112 serving as fuel electrode pass through partition membrane 110 to reach cathode 114 opposite to the anode, and according to the system, voltage from DC power source 120 is provided between anode (fuel electrode) and cathode (opposite electrode) to decompose organic fuel such as methanol or the like electrochemically. In addition, hydrogen is generated on the electrode opposite to the fuel electrode, and no oxidizing agent is supplied to the opposite electrode.

Patent Document 9 cited above discloses a fuel cell system incorporating a hydrogen generating device. According to the disclosure (Claim 1) of the invention, "Liquid fuel containing alcohol and water is supplied to porous electrode 1 (fuel electrode), air is supplied to gas diffusion electrode 2 (oxidizing agent-applied electrode) opposite to electrode 1, and a load is inserted between a terminal leading to porous electrode 1 and another terminal leading to gas diffusion electrode 2 to achieve electric connection allowing a positive voltage to be applied to porous electrode 1 via the load from gas diffusion electrode 2 which corresponds to the positive electrode of MEA2 capable of acting as a conventional fuel cell." The same patent document further adds (paragraph [0007]), "As a result, alcohol reacts with water to produce carbon dioxide gas and hydrogen ion, the hydrogen ion passes through an electrolyte membrane 5 to reach a gas diffusion electrode 6 located centrally where the hydrogen ion is converted into hydrogen gas. On the opposite surface of gas diffusion electrode 6 in contact with another electrolyte layer 7, there arises another electrode reaction where hydrogen gas is reconverted into hydrogen ion, and hydrogen ions migrate through electrolyte layer 7 to reach another gas diffusion electrode 2 where hydrogen ions react with oxygen in air to produce water." Thus, with this system, electric energy generated by a fuel cell is utilized to generate hydrogen on the hydrogen generating electrode (gas diffusion electrode 6) which is then supplied to the fuel cell. Moreover, the system is the same with those described in the patent documents 6 to 8 cited above in that hydrogen is generated on the electrode opposite to the fuel electrode.

There are some other known methods for generating hydrogen (See Patent Documents 10 and 11) . According to the inventions, a reaction system with a partition membrane is used where anode (electrode A) and cathode (electrode B) are placed opposite to each other with a proton conducting membrane (ion conductor) inserted therebetween, and where alcohol (methanol) is oxidized with or without concomitant application of voltage, or with concomitant uptake of electric energy. All those methods, however, are based on a method whereby alcohol is oxidized by means of an electrochemical cell (the reaction product includes carbonic diester, formalin, methyl formate, dimethoxymethane, etc.), and not on a method whereby alcohol is converted by reduction into hydrogen."

[Patent Document 10] Japanese Unexamined Patent Application Publications No. 6-73582 (Claims 1 to 3, paragraph [0050])

[Patent Document 11] Japanese Unexamined Patent Application Publications No. 6-73583 (Claims 1 and 8, paragraphs [0006] and [0019])

DISCLOSURE OF THE INVENTION

With a view to give a solution to the above problems, the present invention aims to provide a standalone hydrogen generating system which can generate a hydrogen-containing gas at a low temperature and moreover, can be operated only by electric energy supplied from a fuel cell without requiring a large amount of electric energy.

Proposed to give a solution to the problems, the present invention can be reduced to following constitutive elements.

(1) A standalone hydrogen generating system provided with at least a hydrogen generating cell constituting a hydrogen generating device, an auxiliary machine for driving the hydrogen generating device, and a fuel cell for supplying electric energy to the auxiliary machines, characterized in that the hydrogen generating device is to generate a gas containing hydrogen by decomposing a fuel containing an organic compound, comprising a partition membrane, a fuel electrode provided on one surface of the partition membrane, means for supplying a fuel containing the organic compound and water to the fuel electrode, an oxidizing electrode provided on the other surface of the partition membrane, means for supplying an oxidizing agent to the oxidizing electrode, and means for generating and collecting the gas containing hydrogen from the fuel electrode.

(2) The standalone hydrogen generating system according to the above (1), wherein the hydrogen generating cell in the hydrogen generating device is an open circuit having neither means for withdrawing electric energy to outside from the hydrogen generating cell, nor means for providing electric energy from outside to the hydrogen generating cell.

(3) The standalone hydrogen generating system according to the above (1), wherein the hydrogen generating cell in the hydrogen generating device has means for withdrawing electric energy to outside with the fuel electrode serving as a negative electrode and the oxidizing electrode as a positive electrode.

(4) The standalone hydrogen generating system according to the above (1), wherein the hydrogen generating cell in the hydrogen generating device has means for providing electric energy from outside with the fuel electrode serving as cathode and the oxidizing electrode as anode.

(5) The standalone hydrogen generating system according to the above (1), wherein two or more of hydrogen generating devices selected from a group consisting of a hydrogen generating device, which is an open circuit having neither means for withdrawing electric energy to outside from a hydrogen generating cell, nor means for providing electric energy from outside to the hydrogen generating cell, a hydrogen generating device having means for withdrawing electric energy to outside with the fuel electrode of the hydrogen generating cell serving as a negative electrode and the oxidizing electrode of the cell as a positive electrode, and a hydrogen generating device having means for providing electric energy from outside with the fuel electrode of the hydrogen generating cell serving as cathode and the oxidizing electrode of the cell as anode are combined in use.

(6) The standalone hydrogen generating system according to the above (3) or (5), wherein instead of the whole or a part of the electric energy supplied from the fuel cell to the auxiliary machine, the electric energy withdrawn from the hydrogen generating device having means for withdrawing the electric energy to the outside is supplied to the auxiliary machine.

(7) The standalone hydrogen generating system according to any of the above (1) to (6), wherein the fuel cell is a direct methanol fuel cell.

(8) The standalone hydrogen generating system according to any of the above (1) to (6), wherein the fuel cell is a polymer electrolyte fuel cell using hydrogen obtained from the hydrogen-containing gas as a fuel.

(9) The standalone hydrogen generating system according to the above (8), wherein a hydrogen tank storing the hydrogen to be supplied to the polymer electrolyte fuel cell is provided.

(10) The standalone hydrogen generating system according to the above (8) or (9), wherein the hydrogen-containing gas generated by the hydrogen generating device is supplied to the polymer electrolyte fuel cell without being cooled.

(11) The standalone hydrogen generating system according to the above (1), wherein voltage between the fuel electrode and the oxidizing electrode is 200 to 1000 mV in the hydrogen generating device.

(12) The standalone hydrogen generating system according to the above (2), wherein voltage between the fuel electrode and the oxidizing electrode is 300 to 800 mV in the hydrogen generating device.

(13) The standalone hydrogen generating system according to the above (3), wherein voltage between the fuel electrode and the oxidizing electrode is 200 to 600 mV in the hydrogen generating device.

(14) The standalone hydrogen generating system according to the above (3) or (13), wherein voltage between the fuel electrode and the oxidizing electrode and/or the evolution volume of hydrogen-containing gas are/is adjusted by varying the volume of electric energy withdrawn from the hydrogen generating device.

(15) The standalone hydrogen generating system according to the above (4), wherein voltage between the fuel electrode and the oxidizing electrode is 300 to 1000 mV in the hydrogen generating device.

(16) The standalone hydrogen generating system according to the above (4) or (15), wherein voltage between the fuel electrode and the oxidizing electrode and/or the evolution volume of hydrogen-containing gas are/is adjusted by varying the volume of electric energy provided in the hydrogen generating device.

(17) The standalone hydrogen generating system according to any of the above (1) to (16), wherein the evolution volume of hydrogen-containing gas is adjusted by varying voltage between the fuel electrode and the oxidizing electrode in the hydrogen generating device.

(18) The standalone hydrogen generating system according to any of the above (1) to (17), wherein voltage between the fuel electrode and the oxidizing electrode and/or the evolution volume of hydrogen-containing gas are/is adjusted by varying the supply volume of the oxidizing agent in the hydrogen generating device.

(19) The standalone hydrogen generating system according to any of the above (1) to (18), wherein voltage between the fuel electrode and the oxidizing electrode and/or the evolution volume of hydrogen-containing gas are/is adjusted by varying the concentration of the oxidizing agent in the hydrogen generating device.

(20) The standalone hydrogen generating system according to any of the above (1) to (19), wherein voltage between the fuel electrode and the oxidizing electrode and/or the evolution volume of hydrogen-containing gas are/is adjusted by varying the supply volume of fuel containing an organic compound and water in the hydrogen generating device.

(21) The standalone hydrogen generating system according to any of the above (1) to (20), wherein voltage between the fuel electrode and the oxidizing electrode and/or the evolution volume of hydrogen-containing gas are/is adjusted by varying the concentration of fuel containing an organic compound and water in the hydrogen generating device.

(22) The standalone hydrogen generating system according to any of the above (1) to (21), wherein the operation temperature of the hydrogen generating device is not higher than 100°C.

(23) The standalone hydrogen generating system according to the above (22), wherein the operation temperature is between 30 and 90°C.

(24) The standalone hydrogen generating system according to any of the above (1) to (23), wherein the organic compound supplied to the fuel electrode of the hydrogen generating cell in the hydrogen generating device is one or two or more organic compounds selected from a group consisting of alcohol, aldehyde, carboxyl acid and ether.

(25) The standalone hydrogen generating system according to the above (24), wherein the alcohol is methanol.

(26) The standalone hydrogen generating system according to any of the above (1) to (25), wherein the oxidizing agent supplied to the oxidizing electrode of the hydrogen generating cell in the hydrogen generating device is an oxygen-containing gas or oxygen.

(27) The standalone hydrogen generating system according to the above (26), wherein the oxidizing agent supplied to the oxidizing electrode of the hydrogen generating cell in the hydrogen generating device is an exhaust air exhausted from the fuel cell or the hydrogen generating cell.

(28) The standalone hydrogen generating system according to any of the above (1) to (25), wherein the oxidizing agent supplied to the oxidizing electrode of the hydrogen generating cell in the hydrogen generating device is a liquid containing hydrogen peroxide solution.

(29) The standalone hydrogen generating system according to any of the above (1) to (28), wherein the partition membrane of the hydrogen generating cell in the hydrogen generating device is a proton conducting solid electrolyte membrane.

(30) The standalone hydrogen generating system according to the above (29), wherein the proton conducting solid electrolyte membrane is a perfluorocarbon sulfonate-based solid electrolyte membrane.

(31) The standalone hydrogen generating system according to any of the above (1) to (30), wherein a catalyst of the fuel electrode of the hydrogen generating cell in the hydrogen generating device is made of platinum-ruthenium alloy supported by carbon powder serving as a base.

(32) The standalone hydrogen generating system according to any of the above (1) to (31), wherein a catalyst of the oxidizing electrode of the hydrogen generating cell in the hydrogen generating device is made of platinum supported by carbon powder serving as a base.

(33) The standalone hydrogen generating system according to any of the above (1) to (32), wherein the hydrogen generating cell in the hydrogen generating device has a fuel electrode separator provided with a channel groove for flowing the fuel and an oxidizing electrode separator provided with a channel groove for flowing the oxidizing agent.

(34) The standalone hydrogen generating system according to the above (33), wherein the fuel electrode separator and the oxidizing electrode separator of the hydrogen generating cell in the hydrogen generating device have the channel grooves of the both provided with displacement so that the channel groove of the fuel electrode separator is opposed to a ridge portion other than the channel groove of the oxidizing electrode separator at least partially.

(35) The standalone hydrogen generating system according to any of the above (1) to (32), wherein the hydrogen generating cell in the hydrogen generating device has an oxidizing electrode separator provided with a channel groove for flowing the oxidizing agent and does not have a fuel electrode separator.

(36) The standalone hydrogen generating system according to any of the above (1) to (35), wherein means for circulating fuel containing the organic compound and water is provided at the hydrogen generating device.

(37) The standalone hydrogen generating system according to any of the above (1) to (36), wherein a carbon dioxide absorbing portion for absorbing carbon dioxide contained in the generated hydrogen-containing gas is provided at the hydrogen generating device.

(38) The standalone hydrogen generating system according to any of the above (1) to (37), wherein a hydrogen permeable membrane is provided at an outlet of the hydrogen-containing gas of the hydrogen generating device.

(39) The standalone hydrogen generating system according to any of the above (1) to (38), wherein an insulating material for insulating a heat generated by the hydrogen generating device is not provided.

Here, the hydrogen generating device used in the standalone hydrogen generating system in the above (2) to (4) has the means for supplying the fuel and the oxidizing agent to the hydrogen generating cell, and as this means, auxiliary machines such as a pump, a blower or the like can be used. Besides that, in the case of the above (3), the discharge control means for withdrawing electric energy from the hydrogen generating cell is provided, and in the case of the above (4), the electrolytic means for providing the electric energy to the hydrogen generating cell is provided. The case of the above (2) is an open circuit having neither discharge control means for withdrawing electric energy from the hydrogen generating cell, nor electrolyse means for providing electric energy to the hydrogen generating cell. And the hydrogen generating device used in the standalone hydrogen generating system in the above (1) includes the hydrogen generating device used in the standalone hydrogen generating system in the above (2) to (4). Two or more of these hydrogen generating devices may be used in combination. Moreover, these hydrogen generating devices have a function to control the supply volume or concentration of the fuel and the oxidizing agent and the electric energy to be withdrawn (in the case of the above (3)) or the electric energy to be provided (in the case of the above (4)) by monitoring the voltage of the hydrogen generating cell (open circuit voltage or operation voltage) and/or the evolution volume of hydrogen-containing gas. The basic construction of the hydrogen generating cell constituting the hydrogen generating device is that the fuel electrode is provided on one surface of the partition membrane, a structure for supplying the fuel to the fuel electrode, while the oxidizing electrode is provided on the other surface of the partition membrane, a structure for supplying the oxidizing agent to the oxidizing electrode.

EFFECT OF THE INVENTION

Since the standalone hydrogen generating system of the present invention uses the hydrogen generating device which can reform the fuel at 100°C or less from a room temperature, which is extremely lower than the conventional reforming temperature, both time required for start and energy amount to raise the temperature of a reformer can be reduced. Thus, such effects are exerted that an insulating material for insulating a heat generated by the reforming device can be made unnecessary, and since the hydrogen-containing gas generated from the hydrogen generating device does not contain CO, a CO removing device is not needed.

The hydrogen generating device used in the standalone hydrogen generating system of the present invention can generate hydrogen without supplying the electric energy from the outside to the hydrogen generating cell, but even if the means for withdrawing the electric energy to the outside is provided, or the means for providing the electric energy from the outside is provided, hydrogen can be generated.

If the means for withdrawing the electric energy is provided, the electric energy can be used for operating the pump, blower or other auxiliary machines, and its effect is great in terms of effective utilization of energy.

Even if the means for providing the electric energy from the outside is provided, by supplying a small amount of electric energy from the outside to the hydrogen generating cell, hydrogen larger than the inputted electric energy can be generated, which is another effect.

Moreover, in any case, a process control is made possible by monitoring the voltage of the hydrogen generating cell and/or the evolution volume of the hydrogen-containing gas, the size of the hydrogen generating device can be reduced, which can also reduce the manufacturing costs of the standalone hydrogen generating system.

Also, according to the standalone hydrogen generating system of the invention, since the hydrogen generating system can be operated without a commercial power source, hydrogen can be supplied to a fuel cell automobile or the like at any place at any time.

BRIEF DESCRIPTION OF THE DRAWINGS

Fig. 1(a) is a schematic diagram for showing a relation between a hydrogen generating device and a direct methanol fuel cell in a standalone hydrogen generating system of the invention.

Fig. 1(b) is a schematic diagram for showing a relation between the hydrogen generating device and a polymer electrolyte fuel cell in the standalone hydrogen generating system of the invention.

Fig. 1(c) is a schematic diagram for showing an example of layout of constituent equipment in the standalone hydrogen generating system of the invention.

Fig. 2 is a schematic diagram of a hydrogen generating cell (requiring no supply of electric energy from outside) described in Example 1.

Fig. 3 shows a graph for indicating relationship between the flow rate of air and the rate of hydrogen evolution when temperature is varied (30 to 70°C) (hydrogen generating example 1-1).

Fig. 4 shows a graph for indicating relationship between the open-circuit voltage and the rate of hydrogen evolution when temperature is varied (30 to 70°C) (hydrogen generating example 1-1).

Fig. 5 shows a graph for indicating relations of the rate of hydrogen evolution and open-circuit voltage with the flow rate of air when the flow rate of fuel is varied (temperature being kept at 70°C) (hydrogen generating example 1-2).

Fig. 6 shows a graph for indicating relation of the rate of hydrogen evolution with the open-circuit voltage when the flow rate of fuel is varied (temperature being kept at 70°C) (hydrogen generating example 1-2).

Fig. 7 shows a graph for indicating relations of the rate of hydrogen evolution and open-circuit voltage with the flow rate of air when the concentration of fuel is varied (temperature being kept at 70°C) (hydrogen generating example 1-3).

Fig. 8 shows a graph for indicating relation of the rate of hydrogen evolution with the open-circuit voltage when the concentration of fuel is varied(temperature being kept at 70°C) (hydrogen generating example 1-3) .

Fig. 9 shows a graph for indicating relations of the rate of hydrogen evolution and open-circuit voltage with the flow rate of air when the thickness of electrolyte membrane is varied (hydrogen generating example 1-4).

Fig. 10 shows a graph for indicating relation of the rate of hydrogen evolution with the open-circuit voltage when the thickness of electrolyte membrane is varied (hydrogen generating example 1-4).

Fig. 11 shows a graph for indicating relations of the rate of hydrogen evolution and open-circuit voltage with the flow rate of air when the temperature is varied (30 to 90°C) (hydrogen generating example 1-5).

Fig. 12 shows a graph for indicating relation of the rate of hydrogen evolution with the open-circuit voltage when the temperature is varied (30 to 90°C) (hydrogen generating example 1-5).

Fig. 13 shows a graph for indicating relations of the rate of hydrogen evolution and open-circuit voltage with the flow rate of air when the flow rate of fuel is varied (temperature: 50°C) (hydrogen generating example 1-6).

Fig. 14 shows a graph for indicating relation of the rate of hydrogen evolution with the open-circuit voltage when the flow rate of fuel is varied (temperature: 50°C) (hydrogen generating example 1-6).

Fig. 15 shows a graph for indicating relations of the rate of hydrogen evolution and open-circuit voltage with the flow rate of air when the concentration of fuel is varied (temperature: 50°C) (hydrogen generating example 1-7).

Fig. 16 shows a graph for indicating relation of the rate of hydrogen evolution with the open-circuit voltage when the concentration of fuel is varied (temperature: 50°C) (hydrogen generating example 1-7).

Fig. 17 shows a graph for indicating relations of the rate of hydrogen evolution and open-circuit voltage with the flow rate of oxidizing gas when the concentration of oxygen is varied (temperature: 50°C) (hydrogen generating example 1-8).

Fig. 18 shows a graph for indicating relation of the rate of hydrogen evolution with the open-circuit voltage when the concentration of oxygen is varied (temperature: 50°C)(hydrogen generating example 1-8).

Fig. 19 shows a graph for indicating relations of the rate of hydrogen evolution and open-circuit voltage with the flow rate of H$_2$O$_2$ when the temperature is varied (30 to 90°C) (hydrogen generating example 1-10).

Fig. 20 shows a graph for indicating relation of the rate of hydrogen evolution (oxidizing agent: H$_2$O$_2$) with the open-circuit voltage when the temperature is varied (30 to 90°C generating example 1-10).

Fig. 21 is a schematic diagram of a hydrogen generating cell (with means for withdrawing electric energy) described in Example 2.

Fig. 22 shows a graph for indicating relation of the operation voltage (discharging: temperature at 50°C) with the current density withdrawn when the flow rate of air is varied (hydrogen generating example 2-1).

Fig. 23 shows a graph for indicating relation of the rate of hydrogen evolution (discharging: temperature at 50°C) with the operation voltage when the flow rate of air is varied (hydrogen generating example 2-1).

Fig. 24 shows a graph for indicating relation of the operation voltage (discharging: temperature at 30°C) with the current density withdrawn when the flow rate of air is varied (hydrogen generating example 2-2).

Fig. 25 shows a graph for indicating relation of the rate of hydrogen evolution (discharging: temperature at 30°C) with the operation voltage when the flow rate of air is varied (hydrogen generating example 2-2).

Fig. 26 shows a graph for indicating relation of the operation voltage (discharging: temperature at 70°C) with the current density withdrawn when the flow rate of air is varied (hydrogen generating example 2-3).

Fig. 27 shows a graph for indicating relation of the rate of hydrogen evolution (discharging: temperature at 70°C) with the operation voltage when the flow rate of air is varied (hydrogen generating example 2-3).

Fig. 28 shows a graph for indicating relation of the operation voltage (discharging: temperature at 90°C) with the current density withdrawn when the flow rate of air is varied (hydrogen generating example 2-4).

Fig. 29 shows a graph for indicating relation of the rate of hydrogen evolution (discharging: temperature at 90°C) with the operation voltage when the flow rate of air is varied (hydrogen generating example 2-4).

Fig. 30 shows a graph for indicating relation of the operation voltage (discharging: flow rate of air at 50 ml/min) with the current density withdrawn when the temperature is varied.

Fig. 31 shows a graph for indicating relation of the rate of hydrogen evolution (discharging: flow rate of air at 50 ml/min) with the operation voltage when the temperature is varied.

Fig. 32 shows a graph for indicating relation of the operation voltage (discharging: flow rate of air at 100 ml/min) with the current density withdrawn when the temperature is varied.

Fig. 33 shows a graph for indicating relation of the rate of hydrogen evolution (discharging: flow rate of air at 100 ml/min) with the operation voltage when the temperature is varied.

Fig. 34 shows a graph for indicating relation of the operation voltage (discharging: temperature at 50°C) with the current density withdrawn when the flow rate of fuel is varied (hydrogen generating example 2-5).

Fig. 35 shows a graph for indicating relation of the rate of hydrogen evolution (discharging: temperature at 50°C) with the operation voltage when the flow rate of fuel is varied (hydrogen generating example 2-5) .

Fig. 36 shows a graph for indicating relation of the operation voltage (discharging: temperature at 50°C) with the current density withdrawn when the concentration of fuel is varied (hydrogen generating example 2-6).

Fig. 37 shows a graph for indicating relation of the rate of hydrogen evolution (discharging: temperature at 50°C) with the operation voltage when the concentration of fuel is varied (hydrogen generating example 2-6).

Fig. 38 shows a graph for indicating relation of the operation voltage (discharging: temperature at 50°C) with the current density withdrawn when the concentration of oxygen is varied (hydrogen generating example 2-7).

Fig. 39 shows a graph for indicating relation of the rate of hydrogen evolution (discharging: temperature at 50°C) with the operation voltage when the concentration of oxygen is varied (hydrogen generating example 2-7).

Fig. 40 shows a graph for indicating relation of the operation voltage (discharging: oxidizing agent of H$_2$O$_2$) with the Current density withdrawn when the temperature is varied (hydrogen generating example 2-8) .

Fig. 41 shows a graph for indicating relation of the rate of hydrogen evolution (discharging: oxidizing agent of H$_s$O$_2$) with the operation voltage when the temperature is varied (hydrogen generating example 2-8).

Fig. 42 is a schematic diagram of a hydrogen generating cell (with means for providing external electric energy) described in Example 3.

Fig. 43 shows a graph for indicating relation of the rate of hydrogen evolution (charging: temperature at 50°C) with the current density applied when the flow rate of air is varied (hydrogen generating example 3-1).

Fig. 44 shows a graph for indicating relation of the rate of hydrogen evolution (charging: temperature at 50°C) with the operation voltage when the flow rate of air is varied (hydrogen generating example 3-1).

Fig. 45 shows a graph for indicating relation of the operation voltage (charging: temperature at 50°C) with the current density applied when the flow rate of air is varied (hydrogen generating example 3-1).

Fig. 46 shows a graph for indicating relation of the energy efficiency (charging: temperature at 50°C) with the operation voltage when the flow rate of air is varied (hydrogen generating example 3-1).

Fig. 47 shows a graph for indicating relation of the rate of hydrogen evolution (charging: temperature at 30°C) with the current density applied when the flow rate of air is varied (hydrogen generating example 3-2).

Fig. 48 shows a graph for indicating relation of the rate of hydrogen evolution (charging: temperature at 30°C) with the operation voltage when the flow rate of air is varied (hydrogen generating example 3-2).

Fig. 49 shows a graph for indicating relation of the energy efficiency (charging: temperature at 30°C) with the operation voltage when the flow rate of air is varied (hydrogen generating example 3-2).

Fig. 50 shows a graph for indicating relation of the rate of hydrogen evolution (charging: temperature at 70°C) with the current density applied when the flow rate of air is varied (hydrogen generating example 3-3).

Fig. 51 shows a graph for indicating relation of the rate of hydrogen evolution (charging: temperature at 70°C) with the operation voltage when the flow rate of air is varied (hydrogen generating example 3-3).

Fig. 52 shows a graph for indicating relation of the energy efficiency (charging: temperature at 70°C) with the operation voltage when the flow rate of air is varied (hydrogen generating example 3-3).

Fig. 53 shows a graph for indicating relation of the rate of hydrogen evolution (charging: temperature at 90°C) with the current density applied when the flow rate of air is varied (hydrogen generating example 3-4).

Fig. 54 shows a graph for indicating relation of the rate of hydrogen evolution (charging: temperature at 90°C) with the operation voltage when the flow rate of air is varied (hydrogen generating example 3-4).

Fig. 55 shows a graph for indicating relation of the energy efficiency (charging: temperature at 90°C) with the operation voltage when the flow rate of air is varied (hydrogen generating example 3-4).

Fig. 56 shows a graph for indicating relation of the rate of hydrogen evolution (charging: flow rate of air at 50 ml/min) with the current density applied when the temperature is varied.

Fig. 57 shows a graph for indicating relation of the rate of hydrogen evolution (charging: flow rate of air at 50 ml/min) with the operation voltage when the temperature is varied.

Fig. 58 shows a graph for indicating relation of the energy efficiency (charging: flow rate of air at 50 ml/min) with the operation voltage when the temperature is varied.

Fig. 59 shows a graph for indicating relation of the rate of hydrogen evolution (charging: temperature at 50°C) with the current density applied when the flow rate of fuel is varied (hydrogen generating example 3-5).

Fig. 60 shows a graph for indicating relation of the rate of hydrogen evolution (charging: temperature at 50°C) with the operation voltage when the flow rate of fuel is varied (hydrogen generating example 3-5).

Fig. 61 shows a graph for indicating relation of the energy efficiency (charging: temperature at 50°C) with the operation voltage when the flow rate of fuel is varied (hydrogen generating example 3-5).

Fig. 62 shows a graph for indicating relation of the rate of hydrogen evolution (charging: temperature at 50°C) with the current density applied when the concentration of fuel is varied (hydrogen generating example 3-6).

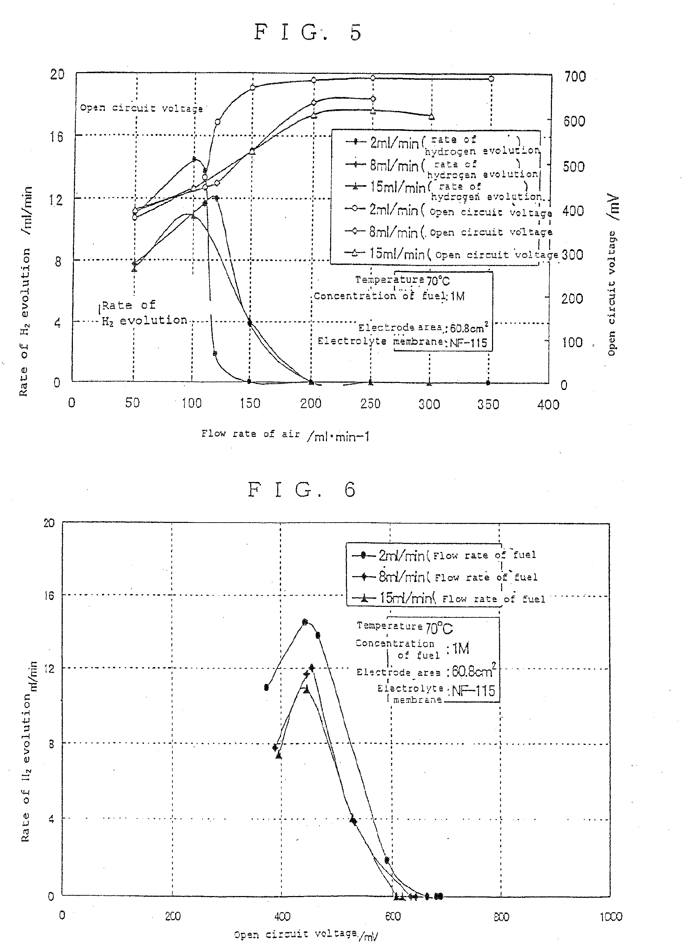

Fig. 6 ; shows a graph for indicating relation of the rate of hydrogen evolution (charging: temperature at 50°C) with the operation voltage when the concentration of fuel is varied (hydrogen generating example 3-6).

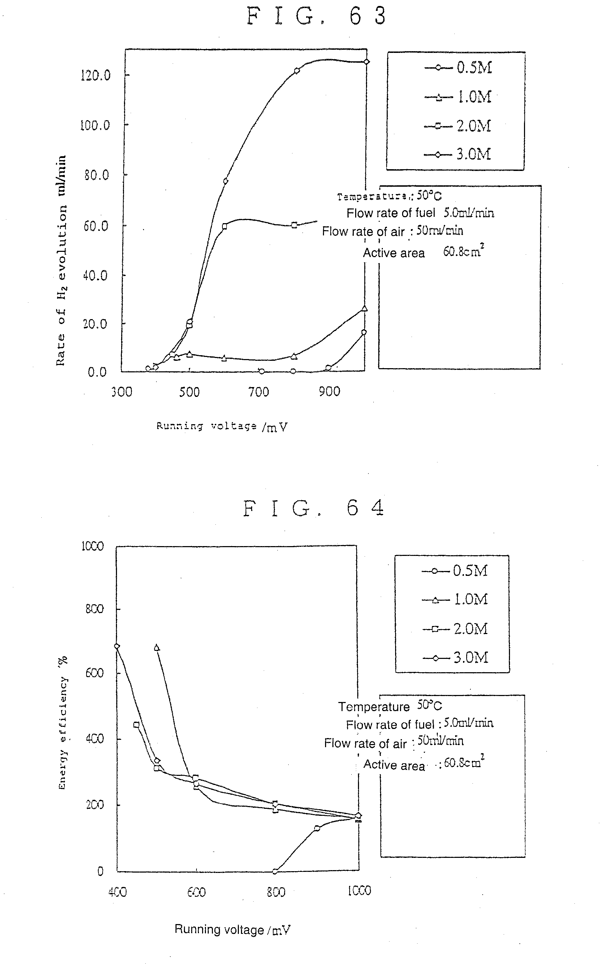

Fig. 64 shows a graph for indicating relation of the energy efficiency (charging: temperature at 50°C) with the operation voltage when the concentration of fuel is varied (hydrogen generating example 3-6).

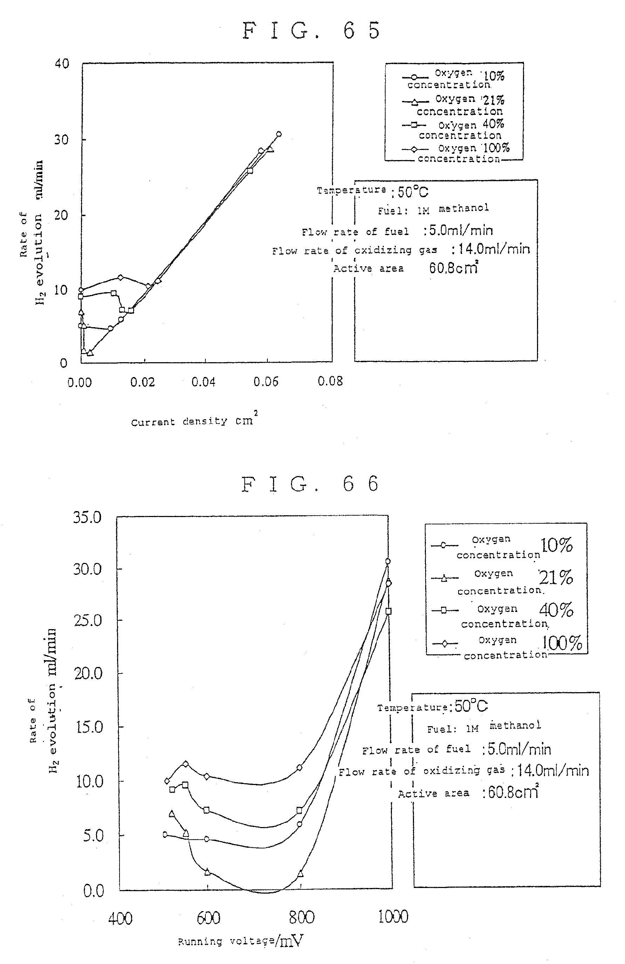

Fig. 65 shows a graph for indicating relation of the rate of hydrogen evolution (charging: temperature at 50°C) with the current density applied when the concentration of oxygen is varied (hydrogen generating example 3-7;.

Fig. 66 shows a graph for indicating relation of the rate of hydrogen evolution (charging: temperature at 50°C) with the operation voltage when the concentration of oxygen is varied (hydrogen generating example 3-7).

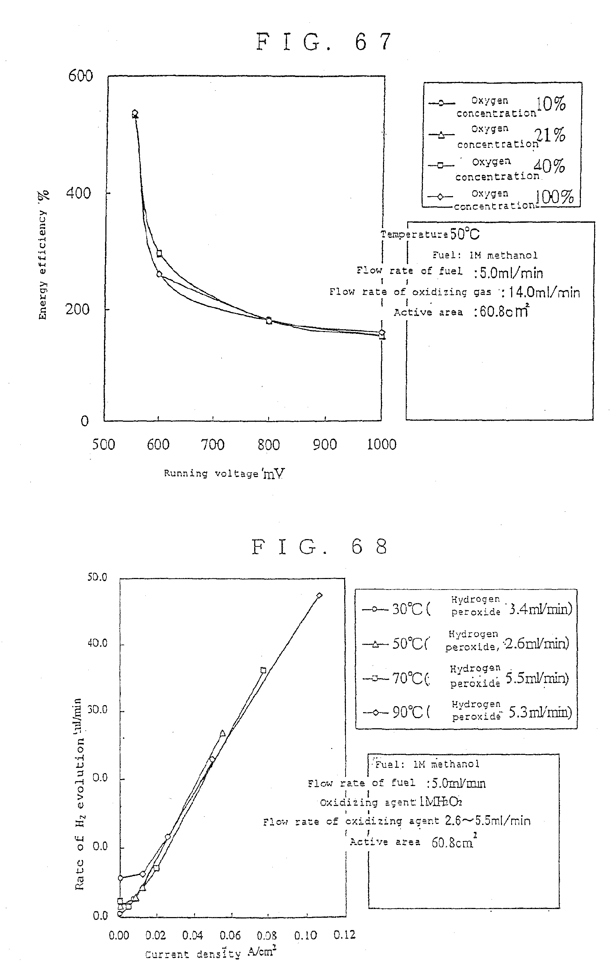

Fig. 67 shows a graph for indicating relation of the energy efficiency (charging: temperature at 50°C) with the operation voltage when the concentration of oxygen is varied (hydrogen generating example 3-7).

Fig. 68 shows a graph for indicating relation of the rate of hydrogen evolution (charging: oxidizing agent of $H_2O_2$) with the current density applied when the temperature is varied (hydrogen generating example 3-8).

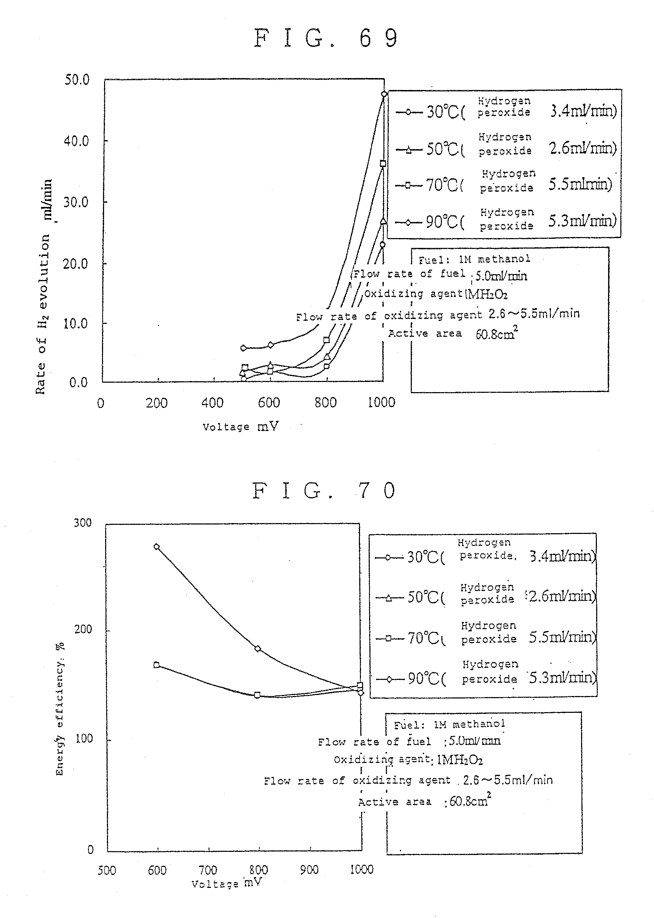

Fig. 69 shows a graph for indicating relation of the rate of hydrogen evolution (charging: oxidizing agent of $H_2O_2$) with the operation voltage when the temperature is varied (hydrogen generating example 3-8).

Fig. 70 shows a graph for indicating relation of the energy efficiency (charging: oxidizing agent of $H_2O_2$) with the operation voltage when the temperature is varied(hydrogen generating example 3-8).

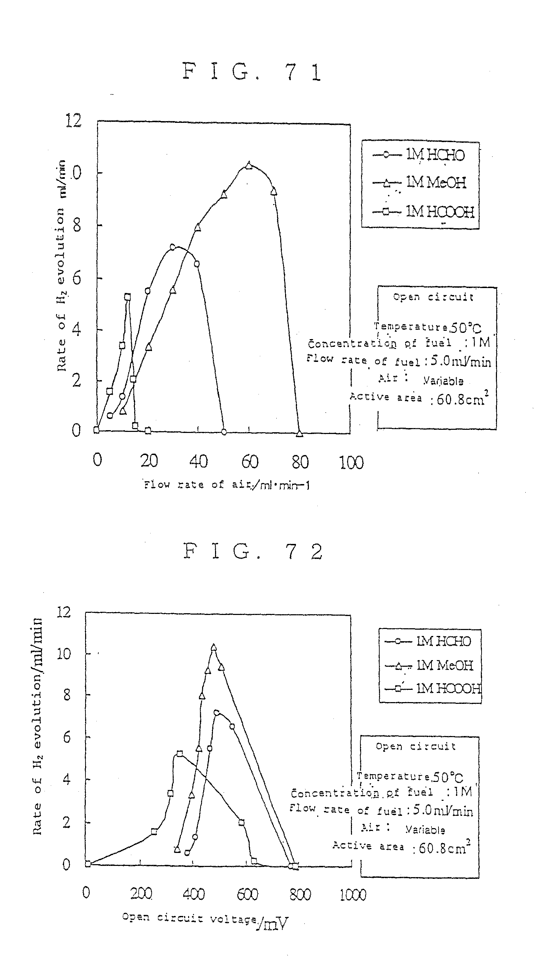

Fig. 71 is a graph for indicating relation of the air flow rate and the rate of hydrogen evolution (open circuit: temperature at 50°C) (Example 8).

Fig. 72 is a graph for indicating relation of the open voltage and the rate of hydrogen evolution (open circuit: temperature at 50°C) (Example 8).

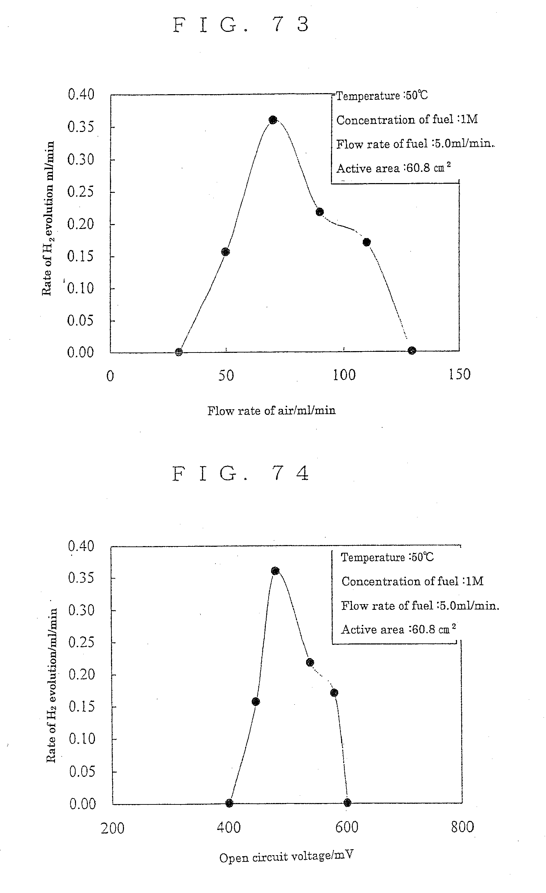

Fig. 73 is a graph for indicating relation of the air flow rate and the rate of hydrogen evolution (open circuit: no fuel electrode separator) (Example 9)

Fig. 74 is a graph for indicating relation of the open voltage and the rate of hydrogen evolution (open circuit: no fuel electrode separator) (Example 9)

REFERENCE NUMERALS

10. Hydrogen generating cell

11. Partition membrane

12. Fuel electrode of hydrogen generating cell 10

13. Feed channel through which fuel containing organic compound and water (aqueous solution of methanol) is supplied to fuel electrode 12

14. Oxidizing electrode (air electrode)

15. Feed channel through which oxidizing agent (air) is supplied to oxidizing electrode (air electrode) 14

16. Fuel pump for hydrogen generating cell 10

17. Air blower

18. Fuel flow control valve for hydrogen generating cell 10

19. Air flow control valve

20. Fuel tank

21. Fuel control vessel

22. Voltage controller

23. Gas/liquid separator (for separating hydrogen-containing gas from unreacted aqueous solution of methanol)

24. Compressor

25. Carbon dioxide removing device

26. Hydrogen permeable membrane

27. Guide tube for returning unreacted aqueous solution of methanol to fuel control vessel 21

28. Gas/liquid separator (for separating generated water and unreacted aqueous solution of methanol from exhaust air)

29. Carbon dioxide removing device

30. Guide tube for returning unreacted aqueous solution of methanol to fuel control vessel 21

31. Fuel pump for direct methanol fuel cell 33

32. Fuel flow control valve for direct methanol fuel cell 33

31'. Hydrogen tank

32'. Hydrogen flow control valve

33. Direct methanol fuel cell

33'. polymer electrolyte fuel cell

34. Solid polymer electrolyte membrane

35. Fuel electrode of fuel cell 33

35'. Hydrogen electrode

36. Feed channel through which aqueous solution of methanol is supplied to fuel electrode 35

36'. Feed channel through which hydrogen is supplied to hydrogen electrode 35'

37. Air electrode

38. Feed channel through which air is supplied to air electrode 37

39. Power converting device for converting direct-current power generated by fuel cell 30 to a predetermined power

40. Control device for controlling the entire generating device

BEST MODE FOR CARRYING OUT THE INVENTION

The most preferred embodiments in the execution of the present invention will be illustrated below.

The hydrogen generating device used in the standalone hydrogen generating system of the invention is basically novel, and the embodiments thereof described herein are given only for the illustrative representation of the invention, and not for limiting the scope of the invention.

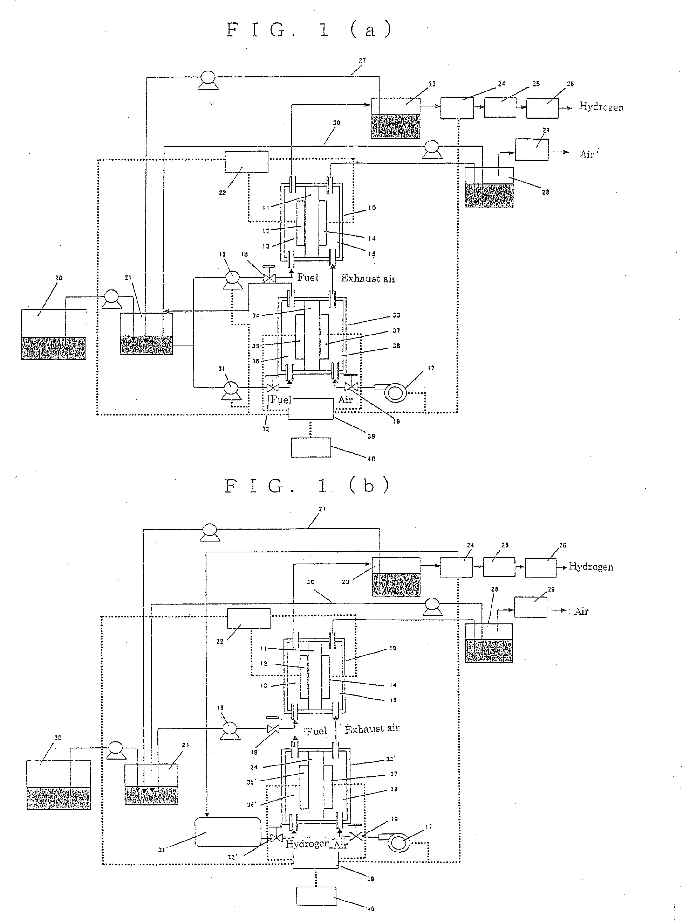

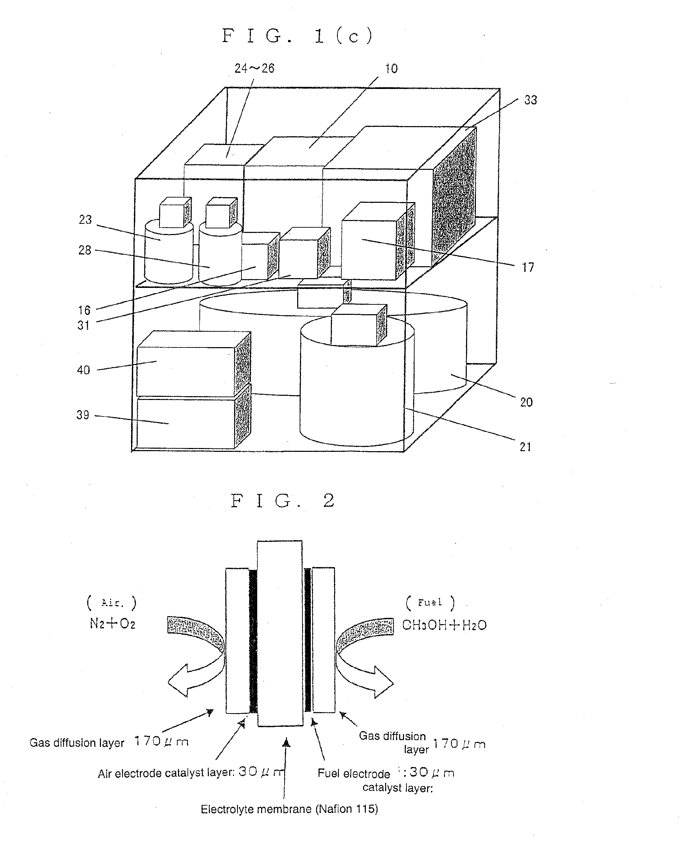

The hydrogen generating device used in the standalone hydrogen generating system of the invention has, as shown in Figs. 1 (a) to 1 (c), auxiliary machines for driving the hydrogen generating cell (10) constituting the hydrogen generating device and the hydrogen generating device.

The structure of the hydrogen generating cell (10) is such that a fuel electrode (12) is provided on one surface of a partition membrane (11), a feed channel (13) for supplying fuel (aqueous solution of methanol) containing an organic compound and water is provided at the fuel electrode (12), an oxidizing electrode (14) is provided on the other surface of the partition membrane (11) and a feed channel (15) is provided for supplying an oxidizing agent (air) to the oxidizing electrode (14).

As the auxiliary machine for driving the hydrogen generating device, a fuel pump (16) for supplying the aqueous solution of methanol is provided at the fuel electrode (12). The feed channel (13) at the fuel electrode is connected to the fuel pump (16) through a flow control valve (18) with a guide tube.

The fuel (100% methanol) is stored in the fuel tank (20) and moved to the fuel control vessel (21) from there, mixed with water in the fuel control vessel (21) and controlled to about a 3% aqueous solution of methanol, for example, and supplied to the fuel electrode (12).

Also, as the auxiliary machine, an air blower (17) is provided for supplying air to the oxidizing electrode (14) directly. In this figure, air is supplied by the air blower (17) to the fuel cell (30) and unreacted air (exhaust air) exhausted from the fuel cell (33) or (33') is used.

Here, by feeding the exhaust air exhausted from an air electrode of the fuel cell (33) or (33') to the hydrogen generating cell (10), an air blower for the hydrogen generating cell (10) is not needed any more. The feed channel (15) at the oxidizing electrode is connected to the air blower (17) through a flow control valve (19) and the fuel cell (30) or (33').

Moreover, this exhaust air has substantially the same temperature (about 80°C) with the operation temperature of the fuel cell (33) or (33'), by which the control device (40) can be protected from the heat of the fuel cell (33) or (33') and the heat of the exhaust air can be used as a heat source for heating the hydrogen generating cell (10).

Furthermore, if two or more hydrogen generating devices are used in combination, as air to be supplied to the oxidizing electrode (14) of one of the hydrogen generating cell (10), the exhaust air exhausted from the other hydrogen generating cell (10) (hydrogen generating cell having means for withdrawing electric energy to the outside instead of the fuel cell (33), for example) can be used.

in the hydrogen generating device in the above construction, when electric energy is supplied to the fuel pump (16) and the air blower (17) to operate them, and the flow control valve (18) is opened, the aqueous solution of methanol is supplied by the fuel pump (16) from the fuel control vessel (21) via the feed channel (13) to the fuel electrode (12), and when the flow control valve (19) is opened, the air is supplied to the oxidizing electrode (14) by the air blower (17) via the fuel cell (33) or (33') and the feed channel (15) to the oxidizing electrode (14).

By this, reaction which will be described later occurs between the fuel electrode and the oxidizing electrode (air electrode) and the hydrogen-containing gas is generated from the fuel electrode (12).

Also, the evolution volume of the hydrogen-containing gas can be adjusted by providing a voltage controller (22) for monitoring a voltage (open circuit voltage or operation voltage) of the hydrogen generating cell (10) so as to control a supply volume or concentration of fuel and air and electric energy to be withdrawn or electric energy to be provided.

The generated hydrogen-containing gas is passed through a gas/liquid separator (23) and separated to the hydrogen-containing gas and the unreacted aqueous solution of methanol.

The separated hydrogen-containing gas has its pressure raised by a compressor (24), carbon dioxide therein removed by a carbon dioxide removing device (25), and is made into hydrogen with high purity by a hydrogen permeable membrane (26) and supplied to the destination.

A part or the whole of the separated unreacted aqueous solution of methanol is returned to the fuel control vessel (21) by a guide tube (27) for circulation. Water may be supplied from outside the system depending on the case.

The exhaust air exhausted from the hydrogen generating device contains unreacted aqueous solution of methanol permeated from the fuel electrode by crossover phenomenon with generated water, and this exhaust air is passed through a gas/liquid separator (28) to separate the generated water and the unreacted aqueous solution of methanol, carbon dioxide is eliminated by a carbon dioxide removing device (29) and then, the rest is exhausted to the air.

A part or the whole of the separated generated water and unreacted aqueous solution of methanol is returned to the fuel control vessel (21) by the guide tube (30) for circulation.

In the standalone hydrogen generating system of the invention, in order to operate the auxiliary machines such as the fuel pump (16) and the air blower (17), electric energy is supplied from the fuel cell to these auxiliary machines. As the fuel cell for that purpose, the direct methanol fuel cell (33) or the polymer electrolyte fuel cell (33') can be used.

When the direct methanol fuel cell (33) is to be used, as shown in Fig. 1 (a), by opening a flow control valve (32), an aqueous solution of methanol is supplied by the fuel pump (31) from the fuel control vessel (21) to the fuel electrode (35) through the feed channel (36) for the direct methanol fuel cell. By opening the flow control valve (19), air is supplied by the air blower (17) to the air electrode (37) through the feed channel (38). A reaction of a formula [1] occurs on the fuel electrode side, while a reaction of a formula [2] occurs on the air electrode side, and at the entire fuel cell, a reaction of a formula [3] occurs and water (steam) is generated and electricity (direct current power) is generated.

$$CH_3OH + H_2O \rightarrow CO_2 + 6H^+ + 6e^- \qquad [1]$$

$$3/2O_2 + 6H^+ + 6e^- \rightarrow 3H_2O \qquad [2]$$

$$CH_3OH + H_2O + 3/2O_2 \rightarrow CO_2 + 3H_2O \qquad [3]$$

In this case, the electric energy generated at the direct methanol fuel cell (33) is also supplied to the fuel pump (31).

On the other hand, when the polymer electrolyte fuel cell (33') with hydrogen as a fuel is to be used as shown in Fig. 1(b), the hydrogen-containing gas generated from the hydrogen generating cell (10) is separated by the gas/liquid separator (23), its pressure is raised by the compressor (24) and then, a part of it is stored in the hydrogen tank (31').

To the hydrogen electrode (35') of the polymer electrolyte fuel cell (33'), hydrogen stored in the hydrogen tank (31') is supplied through the flow control valve (32'), while to the air electrode (37), air is supplied through the flow control valve (19) from the air blower (17), and a reaction of a formula [4] occurs at the hydrogen electrode and a reaction of a formula [5] occurs at the air electrode. At the entire fuel cell, a reaction of a formula [6] occurs and water (steam) is generated and electricity (direct current power) is generated.

$$H_2 \rightarrow 2H^+ + 2e^- \qquad [4]$$

$$(1/2) O_2 + 2H^+ + 2e^- \rightarrow H_2O \qquad [5]$$

$$H_2 + (1/2) O_2 \rightarrow H_2O \qquad [6]$$

The direct methanol fuel cell (33) or the polymer electrolyte fuel cell (33') can be driven at a low temperature below 100°C, and a fuel cell stack in which a plurality of known single cells are laminated may be employed. One single cell comprises a solid polymer electrolyte membrane (34) such as Nafion (trademark of Dupont), the fuel electrode (35) and the air electrode (37) or the hydrogen electrode (35') or the air electrode (37), holding it from both sides, and two separators and the like, not shown, further holding them from both sides. On the both surfaces of the separator, projections and recesses are formed, so as to form fuel feed channels in single cell (36) or (36') and the gas feed channel (38) between the fuel electrode (35) or the hydrogen electrode (35') and the air electrode (37). Among them, the supplied methanol or hydrogen gas flows through the gas feed channel in single cell (36) or (36') formed with the fuel electrode (35) or the hydrogen electrode (35'), while air flows through the gas feed channel in single cell (38) formed with the air electrode (37), respectively.

Power generation by the fuel cell involves heat generation. In the case of the above direct methanol fuel cell (33) or the polymer electrolyte fuel cell (33'), since the polymer electrolyte membrane indicates proton conductivity in the water contained state, when the polymer electrolyte membrane is dried with heat generation of the fuel cell and the water content is lowered, an internal resistance of the fuel cell is increased and power generating capacity is lowered. Therefore, it is necessary to cool the fuel cell and to maintain an appropriate operation temperature (about 80°C) to avoid drying of the polymer electrolyte membrane. On the other hand, since the hydrogen generating device has a higher hydrogen generating efficiency when the temperature is higher, as is shown in an embodiment which will be described later, it is preferable that heat generation of this fuel cell is used for heating of the hydrogen generating device by providing heat exchanging means.

In order to maintain the polymer electrolyte membrane in the wet state, a reform gas and/or reaction air was supplied to the fuel cell after being humidified in the past. However, since the hydrogen generating device used in the invention withdraws the hydrogen-containing gas from the fuel electrode for supplying the fuel containing the organic compound and water (aqueous solution of methanol and the like) and hydrogen to be supplied to the polymer electrolyte fuel cell (33') is humidified, a humidifier is not needed any more. Moreover, since the hydrogen-containing gas generated from the hydrogen generating cell (10) is not at a high temperature as the reform gas generated by the conventional reforming device, it can be supplied to the polymer electrolyte fuel cell (33') without being cooled.

Also, as the fuel to be supplied to the polymer electrolyte fuel cell (33'), there can be a case where only hydrogen generated from the hydrogen generating cell (10) is supplied.

The direct power generated by the fuel cell (33) or (33') is introduced to the power converting device (39), its voltage is raised by a DC/DC converter and used as a driving power source for the auxiliary machines such as the fuel pump (16), (31), the air blower (17) and the like.

In a series of these power Generating operations the control device (40) controls operations of the auxiliary machines such as the voltage controller (22) of hydrogen generating cell (10), the fuel cell (33) or (33'), the power converting device (39), the fuel pump (16), (31), the air blower (17) and the like.

Also, if the hydrogen generating device has means for withdrawing electric energy to outside with the fuel electrode serving as a negative electrode and the oxidizing electrode as a positive electrode, instead of the whole or a part of the electric energy to be supplied from the fuel cell (33) or (33') to the auxiliary machines such as the fuel pump (16), (31) or the air blower (17) and the like, the electric energy withdrawn from the hydrogen generating device to the outside can be supplied to the auxiliary machines (16), (17), (31) and the like to operate them. Moreover, by combining the hydrogen generating device having the means for withdrawing the electric energy to the outside with the hydrogen generating device, which is an open circuit neither having the means for withdrawing the electric energy from the hydrogen generating cell (10) to the outside, nor having the means for providing the electric energy from the outside to the hydrogen generating cell (10), for example, the auxiliary machines of the latter hydrogen generating device can be operated by the electric energy withdrawn from the former hydrogen generating device to the outside without using the fuel cell (33) or (33').

Fig. 1(c) shows an example of layout of the constituent equipment in the standalone hydrogen generating system of the invention.

The hydrogen generating cell (10) constituting the hydrogen generating device, the fuel pump (16), the air blower (17), which are auxiliary machines for operating the hydrogen generating device, the fuel cell (33) for supplying electric energy to these auxiliary machines, the fuel pump (31), which is an auxiliary machine for driving the fuel cell (33) (the air blower (17) is also an auxiliary machine for operating the fuel cell), the power converting device (39) for converting the direct current generated by the fuel cell (33) to a predetermined power, and the control device (40) for controlling the entire power generating device can be incorporated in a package.

In the standalone hydrogen generating system of the invention, since the hydrogen generating cell (10) constituting the hydrogen generating device is operated at a low temperature, unlike the conventional fuel reforming device, the control device (40) can be arranged close to the hydrogen generating cell (10). Also, an insulating material for protecting the control device (40) from the heat generated by the hydrogen generating cell (10) is not needed any more.

In this figure, the fuel tank (20) and the fuel control vessel (21) are incorporated in the package, but it may be so constructed that fuel (aqueous solution of methanol) is supplied from the outside the package or only the fuel control vessel (21) is incorporated in the package.

Also, it is preferable that a gas/liquid separator (23) is provided to separate an unreacted aqueous solution of methanol from the hydrogen-containing gas so that the unreacted aqueous solution of methanol is circulated in the hydrogen generating cell (10). Besides them, a gas/liquid separator (28) for separating generated water and the unreacted aqueous solution of methanol from exhaust air may be provided.

Moreover, as a hydrogen control portion, the compressor (24), the carbon dioxide removing device (25), the hydrogen permeable membrane (26) are preferably provided.

Though not shown, a backup battery may be provided in addition to them.

The hydrogen generating cell (10) in the hydrogen generating device used in the standalone hydrogen generating system of the invention is basically composed of a partition membrane (11), a fuel electrode (12) provided on one surface of partition membrane (11) and an oxidizing electrode (14) provided on the other surface of partition membrane (11) as described above. The element configured as described above may be represented by an MEA (membrane/electrode assembly) used in a direct methanol fuel cell.

The method for fabricating an MEA is not limited to any specific one, but a method similar to a conventional one may be employed wherein a fuel electrode and an oxidizing electrode (air electrode) with a partition membrane inserted therebetween are compressed at a high temperature to be assembled.

The MEA fabricated as above is held between the fuel electrode separator provided with the channel groove (13) for flowing the fuel containing an organic compound and water to the fuel electrode and an oxidizing electrode separator provided with the channel groove (15) for flowing the oxidizing agent to the oxidizing electrode so as to constitute the hydrogen generating cell.

In order that hydrogen can be generated easily, it is preferable that the channel grooves of the both are displaced from each other in provision so that the channel groove of the fuel electrode separator is opposed to the ridge portion other than the channel groove of the oxidizing electrode separator at least partially.

Also, the hydrogen generating cell may be constituted by providing a channel for flowing the fuel containing the organic compound and water to the fuel electrode without using the fuel electrode separator and combining only the oxidizing electrode separator with the MEA.

Suitable partition membranes may include a proton conducting solid electrolyte membrane which has been used as a polymer electrolyte membrane of a fuel cell. The proton conducting solid electrolyte membrane preferably includes a membrane based on perfluorocarbon sulfonate having sulfonic acid group such as Nation provided by Dupont.

The fuel electrode or oxidizing (air) electrode is preferably an electrode which is conductive and has a catalytic activity. Production of such an electrode may be achieved by providing a catalyst paste onto a gas diffusion layer and drying the paste, wherein the paste is comprised of a catalyst obtained by blending a precious metal with carbon powder serving as a base, a binding agent such as a PTFE resin, and an ion conductivity conferring substance such as Nafion solution.

The gas diffusion layer is preferably made of a carbon paper treated to be water-repellent.

The catalyst to be applied to fuel electrode is not limited to any specific one, but is preferably a platinum-ruthenium alloy supported by carbon powder serving as a base.

The catalyst applied to air electrode is not limited to any specific one, but is preferably platinum supported by carbon powder serving as a base.

For a hydrogen generating device configured as described above, when fuel containing an organic compound such as an aqueous solution of methanol is supplied to the fuel electrode, and an oxidizing agent such as air, oxygen or hydrogen peroxide is supplied to the oxidizing (air) electrode, gas containing hydrogen evolves on the fuel electrode under specified conditions.

The hydrogen generating method of the hydrogen generating device used in the standalone hydrogen generating system of the invention are quite different from conventional hydrogen generating methods, and it is still difficult at present to explain the mechanism. The hypothesis which is currently thought most likely to be true will be described below, but it can not be denied that the hypothesis would be upset by new reactions which will shed new light to the phenomenon.

According to the hydrogen generating device used in the standalone hydrogen generating system of the invention, hydrogen-containing gas evolves, at a temperature as low as 30 to 90°C, from the fuel electrode which receives the supply of methanol and water as will be described below. When no electric energy is supplied from outside to the hydrogen generating cell, gas containing hydrogen at 70 to 80% evolves, while when electric energy is supplied from outside to the cell, gas containing hydrogen at 80% or higher evolves. The evolution of gas depends on the open circuit voltage or operation voltage between the two electrodes. Base on these results, the most likely explanation of the mechanism underlying the evolution of hydrogen is as follows. For brevity, description will be given below on the premise that the cell is kept under circuit-open condition.

Let's assume for example that methanol is applied, as fuel, to a hydrogen generating device used in the standalone hydrogen generating system of the invention. Firstly proton is likely to be generated on the fuel electrode by virtue of a catalyst, as is the case with a DMFC.

$$CH_3OH + H_2O \longrightarrow CO_2 + 6H^+ + 6e^- \qquad (1)$$

When Pt-Ru is used as a catalyst, methanol is adsorbed to the surface of Pt, and undergoes a series of electrochemical oxidization reactions as described below, resulting in the production of chemical species firmly adhered to the surface of the catalyst ultimately leading to reaction (1) described above, so it is contended ("Handbook of Electric Cell," Feb 20, 2001, p. 406, Maruzen, 3rd edition).

$$CH_3OH + Pt \longrightarrow Pt\text{-}(CH_3OH)ads \longrightarrow Pt\text{ -}(CH_2OH)ads + H^+ + e^-$$

$$Pt\text{-}(CH_2OH)ads \longrightarrow Pt\text{- ( CHOH ) ads} + H^+ + e^-$$

$$Pt\text{-}(CHOH)ads \longrightarrow Pt\text{-}(COH)ads + H^+ + e^-$$

$$Pt\text{-}(COH)ads \longrightarrow Pt\text{-}(CO)ads + H^+ + e^-$$

To further oxidize Pt-(CO)ads, it is necessary to prepare (OH)ads from water.

$$Ru + H_2O \longrightarrow Ru\text{-}(H_2O) \text{ ads} \longrightarrow Ru\text{-}(OH) \text{ ads} + H^+ + e^-$$

$$Ru\text{-}(OH) \text{ ads} + Pt \text{ - }(CO)ads \longrightarrow Ru + Pt + CO_2 + H^+ + e^-$$

For a DMFC, $H^+$ (proton) generated on the fuel electrode as a result of the reaction represented by formula (1) migrates through a proton conducting solid electrolyte membrane to reach the oxidizing electrode where it reacts with oxygen-containing gas or oxygen supplied to the oxidizing electrode as represented by the following reaction formula.

$$3/2O_2 + 6H^+ + 6e^- \longrightarrow 3H_2O \qquad (2)$$

Since the hydrogen generating device used in the standalone hydrogen generating system of the invention works under open-circuit condition, $e^-$ generated as a result of the reaction represented by formula (1) can not be supplied through an external circuit to the oxidizing electrode. Therefore, for the reaction represented by formula (2) to occur, it is necessary to supply $e^-$ to the oxidizing electrode from a different reaction.

By the way, with regard to a DMFC using a proton conducting solid electrolyte membrane such as Nafion, there has been known a phenomenon called methanol crossover, that is, the crossover of methanol from the fuel electrode to the oxidizing electrode. Thus, it is possible that crossed methanol undergoes electrolytic oxidization represented by the following formula on the oxidizing electrode.

$$CH_3OH + H_2O \longrightarrow CO_2 + 6H^+ + 6e^- \qquad (3)$$

If the reaction represented by formula (3) occurs, $e^-$ produced as a result of the reaction is supplied to allow the reaction represented by formula (2) to occur there.

The $H^+$ (proton) produced as a result of the reaction represented by formula (3) migrates through the proton conducting solid electrolyte membrane to reach the fuel electrode to undergo there a reaction represented by the following formula to produce hydrogen.

$$6H^+ + 6e^- \longrightarrow 3H_2 \qquad (4)$$

In this sequence of reactions, the transfer of $H^+$ and $e^-$ produced as a result of the reaction represented by formula (1) on the fuel electrode to the oxidizing electrode and the transfer of $H^+$ and $e^-$ produced as a result of the reaction represented by formula (3) on the oxidizing electrode to the fuel electrode are likely to be apparently canceled out by each other.

Then, on the oxidizing electrode there arises reaction as represented by formula (2) based on $H^+$ and $e^-$ produced as a result of the reaction represented by formula (3), while on the fuel electrode there arises reaction as represented by formula (4) based on $H^+$ and $e^-$ produced as a result of the reaction represented by formula (1).

Assumed that reactions represented by formulas (1) and (4) occur on the fuel electrode while reactions represented by formulas (2) and (3) occur on the oxidizing electrode, the net balance of chemical reactions is likely to be expressed by the following formula (5).

$$2CH_3OH + 2H_2O + 3/2O_2 \longrightarrow 2CO_2 + 3H_2O + 3H_2 \qquad (5)$$

The theoretical efficiency of this reaction is 59% (calorific value of 3 mol. hydrogen/calorific value of 2 mol. methanol).

The standard electrode potential E0 of the reaction represented by formula (1) is EO = 0.046 V, while the standard electrode potential EO of the reaction represented by formula (4) is EO = 0.0 V. Thus, if the two reactions are combined to form a cell, the electrode where the reaction of formula (1) will occur will serve as a positive electrode while the electrode where the reaction of formula (4) will occur will serve as a negative electrode. The reaction of formula (1) will proceed in the direction opposite to the arrow represented direction. Similarly, the reaction of formula (4) will also proceed in the direction opposite to the arrow represented direction. Thus, the cell will not generate hydrogen.

For the cell to generate hydrogen, it is necessary to make both the reactions of formulas (1) and (4) proceed in the direction represented by the arrow. For this purpose, it is absolutely necessary to make the reaction of formula (1) occur on a negative electrode and the reaction of formula (4) on a positive electrode. If it is assumed that the entire area of fuel electrode is uniformly at a constant level, it is necessary to shift the methanol oxidizing potential to a lower level or to shift the hydrogen generating potential to a higher level.

However, if the entire area of fuel electrode is not at a constant potential level, reaction on the fuel electrode where methanol and water react to produce $H^+$ according to formula (1) and reaction on the oxidizing electrode where $H^+$ and $e^-$ react to produce hydrogen according to formula (4) are likely to proceed simultaneously.

As will be described later in relation to Example, a reaction system exposed to a higher temperature is more apt to generate hydrogen, and thus endothermic reactions (1) and (3) are likely to proceed in the arrow-indicated direction, being supplied heat from outside via other exothermic reactions.

Methanol not only undergoes reactions as represented by formulas (1) and (3), but is also subject, as a result of crossover, to the subsidiary reaction where methanol permeating from the fuel electrode is oxidized by oxygen on the surface of catalyst coated on the air electrode as represented by the following formula.

$$CH_3OH + 3/2O_2 \longrightarrow CO_2 + 2H_2O \qquad (6)$$

Since the reaction of formula (6) is an exothermic reaction, heat generated by this reaction is most likely to be used to allow reactions represented by formulas (1) and (3) to occur.

With regard to a hydrogen generating device used in the standalone hydrogen generating system as described in Claim 2 of the invention (open-circuit condition hereinafter), as apparent in relation to Example described later, supply of oxygen (air) is decreased, and when the open-circuit voltage is 300 to 800 mV, hydrogen evolves. However, this is probably because the oxidization of methanol permeated to air electrode as represented by formula (6) is suppressed, evolution reaction of $H^+$ as represented by formula (3) becomes dominant, and the $H^+$ undergoes reaction represented by formula (4) to produce hydrogen.

Also, in the embodiment which will be described later, the same structure as a typical direct methanol type fuel cell is used, and a channel groove for flowing an oxidizing agent (air) is provided at the oxidizing electrode (air electrode) separator. Thus, a large volume of air flows at the portion of the channel groove and the reactions in (2) and (6) are dominant. However, when the supply of air is reduced, air (oxygen) lacks at the portion other than the channel groove and the $H^+$ evolution reaction in the formula (3) is considered to be dominant.

With regard to a hydrogen generating device used in the standalone hydrogen generating system as described in Claim 3 of the invention (discharging condition hereinafter), hydrogen is likely to be generated depending on the same mechanism as in the open-circuit condition. However, in contrast with the open-circuit condition, it is necessary with this system for H$^+$ corresponding in volume to discharge current to migrate from the fuel electrode to the oxidizing electrode in order to establish the neutralized electrical condition of the cell. Therefore, it is likely that reaction of formula (1) rather than reaction of formula (4) will occur on the fuel electrode while reaction of formula (2) rather than reaction of formula (3) will occur on the oxidizing electrode.

If discharge current becomes large (because of a large volume of e$^-$ being supplied to the oxidizing electrode), and if discharge voltage is lower than 200 mV, hydrogen will not evolve as will be described later in relation to Example. This is probably because the voltage is not so high as to permit the aqueous solution of methanol to be electrolyzed.

If a large volume of oxygen (air) is supplied or discharge voltage is higher than 600 mV, hydrogen will not evolve either. This is probably because methanol permeated to the air electrode is oxidized there according to the reaction shown in formula (6), instead of the H$^+$ evolution reaction shown in formula (3).

On the contrary, if supply of oxygen (air) is marginal, the discharge current will be reduced, and if discharge voltage (operation voltage) becomes 200 to 600 mV, hydrogen will still evolve. However, this is probably because the oxidation of methanol permeated to the air electrode as represented by formula (6) is suppressed, evolution reaction of H$^+$ as represented by formula (3) becomes dominant, and the H$^+$ undergoes reaction represented by formula (4) to produce hydrogen.

Even in the discharging condition, similarly to the open-circuit condition case, a large volume of air flows at the portion of the channel groove of the air electrode separator and the reactions in (2) and (6) becomes dominant, but when the supply of air is reduced, air (oxygen) lacks at the portion other than the channel groove and the H$^+$ evolution reaction in the formula (3) is considered to be dominant.

With regard to a hydrogen generating device used in the standalone hydrogen generating system as described in Claim 4 of the invention (charging condition hereinafter), hydrogen is likely to be generated depending on the same mechanism as in the open-circuit condition. However, in contrast with the open-circuit condition, it is necessary with this system for H$^+$ corresponding in volume to electrolysis current to migrate from the oxidizing electrode to the fuel electrode in order to establish the neutralized electrical condition of the cell. Therefore, it is likely that reaction of formula (4) rather than reaction of formula (1) will occur on the fuel electrode while reaction of formula (3) rather than reaction of formula (2) will occur on the oxidizing electrode.

To put it more specifically, with regard to the charging condition where the fuel electrode serves as cathode while the oxidizing electrode serves as anode, electric energy is supplied from outside (e$^-$ is supplied from outside to the fuel electrode). Then, basically electrolysis occurs in the system. As electric energy supplied (voltage applied) is increased, more hydrogen will be produced. This is probably because as more e$^-$ is supplied from outside to the fuel electrode, oxidization of methanol represented by formula (3) and reaction represented by formula (4) ($6H^+ + 6e^- \longrightarrow 3H_2$) will be more enhanced as will become apparent from the description given below in relation to Example.

However, as will be described later, if supply of oxygen (air) is marginal, the energy efficiency of the system becomes high when applied voltage (operation voltage) is at a low range of 400 to 600 mV. This is probably because the oxidation of methanol permeated to air electrode as represented by formula (6) is suppressed, air (oxygen) lacks at the portion other than the channel groove of the air electrode separator board, evolution reaction of H$^+$ as represented by formula (3) becomes dominant, and the H$^+$ undergoes reaction represented by formula (4) to produce hydrogen at the fuel electrode on the opposite side as described above even in the case of open-circuit condition or discharging condition where electric energy is not provided from outside. Evolution of hydrogen in the charging condition is likely to be generated depending on the same mechanism as in the open-circuit condition and discharging condition as well as on the electric energy supplied from outside.

The meaning of the potential of the cell will be described here. Generally, the voltage of a cell having two electrodes with an electrolyte membrane inserted therebetween is determined by the difference between the two electrodes of chemical potentials of ions which serve as conductors in electrolyte.

If polarizations at the two electrodes are ignored, the voltage in question indicates the difference between the two electrodes of chemical potentials of hydrogen, in other words, partial pressures of hydrogen, since this cell uses a proton (hydrogen ion) conducting solid electrolyte membrane.

According to the invention, as will be described later in relation to Example, if there is voltage between the fuel and oxidizing electrodes that is in a certain range, this indicates the evolution of hydrogen on the fuel electrode. Thus, if the difference of chemical potentials of hydrogen between the two electrodes falls within a certain range, reactions as represented by formulas (1) to (6) cited above will proceed which will result in the production of hydrogen.

According to the hydrogen generating device used in the standalone hydrogen generating system of the invention, it is possible to adjust the evolution volume of hydrogen-containing gas by varying the voltage (open-circuit voltage or operation voltage) between the fuel electrode and oxidizing (air) electrode, regardless of whether electric energy is withdrawn to outside from the hydrogen generating cell of the device or whether electric energy is supplied from outside to the hydrogen generating cell of that.

As will be described below in relation of Example, the open-circuit condition evolves hydrogen at the open-circuit voltage of 300 to 800 mV; the discharging condition evolves hydrogen at the discharge voltage (operation voltage) of 200 to 600 mV; and the charging condition evolves hydrogen at the applied voltage (operation voltage) of 300 to 1000 mV (energy efficiency is high at 400 to 600 mV). Thus, it is possible to adjust the evolution volume of hydrogen-containing gas by varying open-circuit voltage or operation voltage in accordance with the voltage range cited above.

As will be described below in relation of Example, it is possible to adjust the open-circuit voltage or operation voltage and/or the evolution volume (rate of hydrogen evolution) of hydrogen-containing gas by varying the supply volume of an oxidizing agent (oxygen-containing gas or oxygen, or hydrogen peroxide-containing liquid), or the concentration of an oxidizing agent (oxygen concentration of oxygen-containing gas), or the supply volume of organic compound-containing fuel, or the concentration of organic compound-containing fuel.

It is also possible to adjust the operation voltage and/or the evolution volume of hydrogen-containing gas by varying, for the discharging condition, electric energy withdrawn to outside, (varying current withdrawn to outside, or varying the voltage withdrawn to outside using a constant-voltage controllable power source, for example, so-called potentiostat), or, for the charging condition, electric energy supplied to the system (or current supplied to the system, or by varying the voltage of the system using a constant-voltage power source, for example, so-called potentiostat).

Since according to the hydrogen generating device used in the standalone hydrogen generating system of the invention, it is possible to decompose organic compound-containing fuel at 100°C or lower, the temperature at which the device can be operated is made 100°C or lower. The operation temperature is preferably 30 to 90°C. This is because, when the operation temperature is adjusted to be between 30 and 90°C, it will become possible to adjust the open-circuit voltage or operation voltage, and/or the evolution volume of hydrogen-containing gas as will be described later in relation to Example.

Incidentally, for a hydrogen generating cell based on conventional fuel conversion technology, the operation temperature should be kept at 100°C or higher. At this temperature range, water will become vapor and organic compound-containing fuel become gas, and even when hydrogen evolves under this condition, it is necessary to provide means specifically adapted for separating hydrogen. The system of the present invention is also advantageous in this point.

Indeed, there will arise a problem as described above, when organic compound-containing fuel is decomposed at 100°C or higher. But a hydrogen generating device of the invention may be operated at a temperature slightly above 100°C if there be need to do so.

As long as based on the putative principle, the organic compound-containing fuel may be liquid or gaseous fuel capable of producing proton as a result of electrochemical oxidization that can pass through a proton conductive partition membrane, and liquid fuel containing alcohol such as methanol, ethanol, ethylene glycol, 2-propanol, aldehyde such as formaldehyde, carboxyl acid such as formic acid, or ether such as diethyl ether is preferred. Since the organic compound-containing fuel is supplied with water, an aqueous solution of these liquid fuels or aqueous solution of alcohol and particularly methanol and water is preferred. The aqueous solution of methanol cited above as a preferred example of fuel is an aqueous solution containing at least methanol, and its concentration of methanol at a region where hydrogen-containing gas evolves may be arbitrarily determined as needed.

Suitable oxidizing agents may include gaseous or liquid oxidizing agents. Suitable gaseous oxidizing agents may include oxygen-containing gas or oxygen. The concentration of oxygen in oxygen-containing gas is preferably chosen to be 10% or higher particularly.

Suitable liquid oxidizing agents may include hydrogen peroxide-containing liquid.

For a hydrogen generating device of the invention, since the fraction of fuel converted into hydrogen is rather small, it is desirable to provide fuel circulating means to improve thereby the fraction of fuel to be converted into hydrogen.

The hydrogen generating device used in the standalone hydrogen generating system of the invention has means for collecting hydrogen-containing gas provided from the fuel electrode. The means is preferably so constructed as to be able to collect carbon dioxide as well as hydrogen. Since the device operates at a temperature as low as 100°C or lower, it is possible to attach a carbon dioxide absorbing portion for absorbing carbon dioxide contained in hydrogen-containing gas to the system by simple means.

Also, since the hydrogen-containing gas generated from the fuel electrode side of the hydrogen generating device contains not only carbon dioxide but also water, unreacted original material and the like, a hydrogen permeable membrane is preferably provided at the outlet of the hydrogen-containing gas of the hydrogen generating device so that only hydrogen is selectively permeated to have hydrogen with high purity.

The hydrogen permeable membrane is not limited, but a hydrogen permeable metal membrane with the thickness of 5 to 50 $\mu$m which is formed on an inorganic porous layer and can selectively permeate hydrogen can be used. The inorganic porous layer is a support for holding the hydrogen permeable metal membrane and is formed from porous stainless steel unwoven cloth, ceramics, glass and the like with the thickness in a range from 0.1 to 1 mm. As the hydrogen permeable metal membrane, an alloy containing Pd, an alloy containing Ni or an alloy containing V can be used, but the alloy containing Pd is preferable. As the alloy containing Pd, Pd·Ag alloy, Pd·Y alloy, Pd·Ag·Au alloy and the like can be cited.

By using the above hydrogen permeable membrane, hydrogen with high purity of 99.999% or above can be obtained, and this hydrogen with high purity is useful as a fuel for a fuel cell or a treatment gas for manufacturing a semiconductor device.

Next, illustrative examples (examples of hydrogen generation) of the present invention will be presented. However, the fractions of catalysts, PTFE, Nafion, etc., and the thickness of catalyst layer, gas diffusion layer and electrolyte membrane are not limited to the values cited in the examples, but may take any appropriate values.

EXAMPLE 1

Illustrative examples of generating hydrogen based on the hydrogen generating device used in the standalone hydrogen generating system (open-circuit condition) as defined by Claim 2 will be presented below.

[Hydrogen generating example 1-1]

Hydrogen generating cells described in Example 1 (generating examples 1-1 to 1-10) have the same structure as that of representative DMFCs.

The structure of the hydrogen generating cell is outlined in Fig. 2.
The electrolyte membrane consists of a proton conducting electrolyte membrane provided by Dupont (Nafion 115); and the air electrode is obtained by immersing carbon paper (Toray) in a solution where polytetrafluoroethylene is dispersed at 5%, and baking the paper at 360°c to make it water-repellent, and coating, on one surface of the paper, air electrode catalyst paste comprised of air electrode catalyst (carbon-supported platinum, Tanaka Precious Metal), fine powder of PTFE, and 5% Nafion solution (Aldrich). Thus, the air electrode exists as a gas diffusion layer with air electrode catalyst. In the preparation of the air electrode catalyst paste, the percent contents by weight of air electrode catalyst, PTFE, and Nafion were made 65%, 15% and 20%, respectively. The loading level of catalyst of the air electrode prepared as above was 1 mg/cm$^2$ in terms of the weight of platinum per unit area.

Another carbon paper was similarly treated to be made water-repellent. One surface of the paper was coated with fuel electrode catalyst paste comprised of fuel electrode catalyst (carbon-supported platinum-ruthenium, Tanaka Precious Metal), fine powder of PTFE, and 5% Nafion solution. Thus, the fuel electrode exists as a gas diffusion layer with fuel electrode catalyst. In the preparation of the fuel electrode catalyst paste, the percent contents by weight of fuel electrode catalyst, PTFE, and Nation were made 55%, 15% and 30%, respectively. The loading level of catalyst of the fuel electrode prepared as above was 1 mg/cm$^2$ in terms of the weight of platinum-ruthenium per unit area.

The electrolyte membrane, gas diffusion layer with air electrode catalyst and gas diffusion layer with fuel electrode catalyst were laid one over another to be hot-pressed at 140°C under a pressure of 100 kg/cm$^2$ so that they were assembled to form an MEA. The MEA prepared as above had an active electrode area of 60.8 cm$^2$. The thicknesses of air and fuel electrode catalyst layers were practically the same about 30 $\mu$m, and the thicknesses of air and fuel electrode gas diffusion layers were similarly the same about 170 $\mu$m.

The MEA was further provided on its both surfaces with flow passages through which air can flow and fuel can flow, and was enclosed from outside with an air electrode separator and a fuel electrode separator respectively both made of graphite into which phenol resin is impregnated, in order to prevent the leak of gas from the MEA. At that time, similarly to the case of a conventional typical direct methanol type fuel cell (See Japanese Unexamined Patent Publication No. 2002-208419, paragraph [0020], Fig. 1, Japanese Unexamined Patent Publication No. 2003-123799, paragraph [0015], Fig. 1, for example), a groove is machined in the air electrode separator board to be a flow passage to flow air and the fuel electrode separator board to be a flow passage to flow fuel. The air electrode separator board and the fuel electrode separator board both have the thickness of 2 mm, and the flow passage for flowing air on the air electrode separator board is formed by making three parallel grooves (groove width: 2 mm, ridge width: 1 mm, groove depth: 0.6 mm) meander in the diagonal direction from the upper part to the lower part of the separator board (the number of turns: 8), while the flow passage for flowing fuel on the fuel electrode separator board is formed by making three parallel grooves (groove width: 1.46 mm, ridge width: 0.97 mm, groove depth: 0.6 mm) meander in the diagonal direction from the lower part to the upper part of the separator board (the number of turns: 10). To further ensure the seal of MEA against the leak of fuel and air, MEA was surrounded with silicon-rubber made packing.

In this case, the evolution volume of hydrogen is changed with the position relation of the grooves and ridges on the air electrode separator board and the fuel electrode separator board. That is, as mentioned above, it is presumed that methanol is diffused to the portion other than the channel groove (ridge portion) of the air electrode separator and H$^+$ generation reaction represented by the formula (3) occurs. Thus, if the ridge portion of the air electrode separator is at the same position opposed to the ridge portion of the fuel electrode separator, methanol diffusion from the fuel electrode is prevented and hydrogen is hardly generated. Then, the grooves (ridges) of the air electrode separator and the fuel electrode separator are provided at positions slightly displaced.

The hydrogen generating cell prepared as above was placed in an electric furnace where hot air was circulated. The temperature (operation temperature) of the cell was kept at 30 to 70°C, air was flowed at a rate of 0 to 400 ml/min to the air electrode, and 0.5 to 2M aqueous solution of methanol (fuel) was flowed at a rate of 2 to 15 ml/min to the fuel electrode. Then, the voltage difference between the fuel electrode and the air electrode (open voltage), the volume of gas evolved on the fuel electrode and the composition of the gas were monitored and analyzed.

First, the flow rate of aqueous solution of methanol (fuel) to the cell was kept 8 ml/min, and the temperature of air was kept at 30, 50, or 70°C, thereby altering the flow rate of air, and the volume of gas evolving from the fuel electrode was measured. The evolution volume of gas was determined by underwater conversion. The concentration of hydrogen in the evolved gas was determined by gas chromatography, and the rate of hydrogen evolution was determined based on the result.

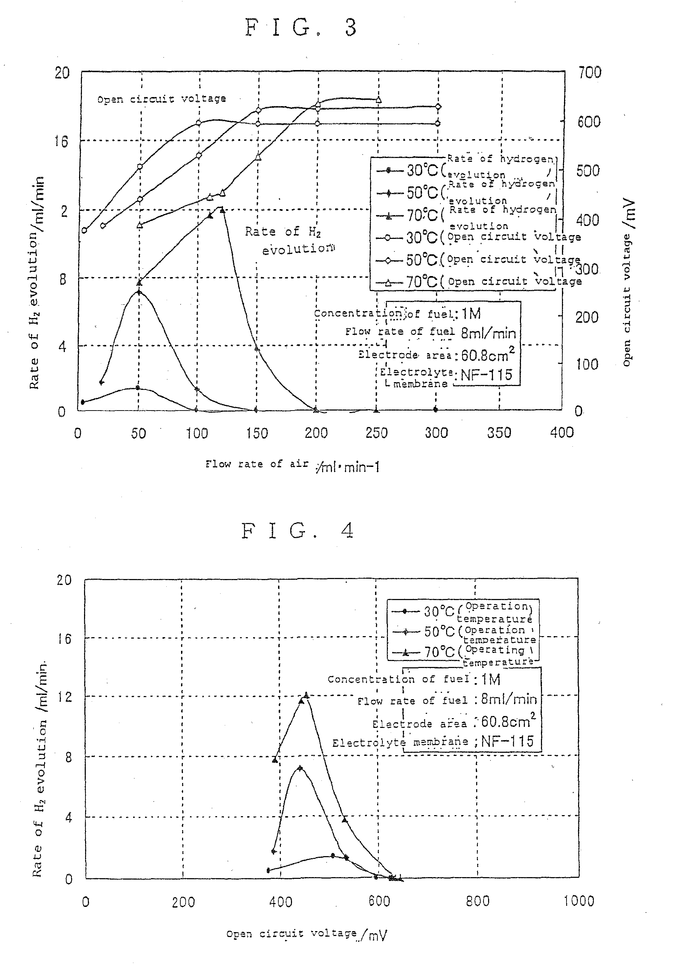

The results are shown in Fig. 3. Evolution of hydrogen from the fuel electrode of the cell was confirmed with reduction of the flow rate of air for all the temperatures tested. The rate of hydrogen evolution becomes high as the temperature is raised. Studies of relation of the open-circuit voltage (open voltage) with the flow rate of air indicate that as the flow rate of air becomes low, the open-circuit voltage of the cell tends to decline.

Fig. 4 shows a graph for indicating relationship between the open-circuit voltage and the rate of hydrogen evolution, both adapted from the results of Fig. 3.

From this, it was found that the rate of hydrogen evolution (volume of hydrogen evolution) tends to depend on the open-circuit voltage, and that hydrogen evolves when the open-circuit voltage is in the range of 400 to 600 mV. The rate of hydrogen evolution is the highest around 450 mV for all the temperatures tested.

Next, fuel was flowed at 8 ml/min and air at 120 ml/min at 70°C to allow gas to evolve, and the concentration of hydrogen in the gas was determined by gas chromatography.

As a result, it was found that the gas contains hydrogen at about 70%, and carbon dioxide at about 15%. CO was not detected.

[Hydrogen generating example 1-2]

The same hydrogen generating cell as that of hydrogen generating example 1-1 was used. The temperature of the cell was kept at 70°C, and 1M aqueous solution of methanol (fuel) was applied at the flow rate of 2, 8, or 15 ml/min. Then, relations of the flow rate of fuel, the flow rate of air, the rate of hydrogen evolution and open-circuit voltage with the flow rate of air were shown in Fig. 5.

From the graph it was found that as the flow rate of fuel decreases, the rate of hydrogen evolution becomes larger.

Fig. 6 shows a graph for indicating relationship between the open-circuit voltage and the rate of hydrogen evolution, both adapted from the results of Fig. 5.

From this, it was found that the rate of hydrogen evolution depends on the open-circuit voltage, and is the highest around 450 mV for all the fuel flows tested as in hydrogen generating example 1-1.

In this generating example, the highest rate of hydrogen evolution 14.48 ml/min was obtained at the open-circuit voltage of 442 mV (operation temperature: 70°C; concentration of fuel : 1M; flow rate of fuel: 2 ml/min; and flow rate of air: 100 ml/min). The concentration of hydrogen in the evolved gas was determined by gas chromatography as in example 1-1, and found to be about 70%.

[Hydrogen generating example 1-3]

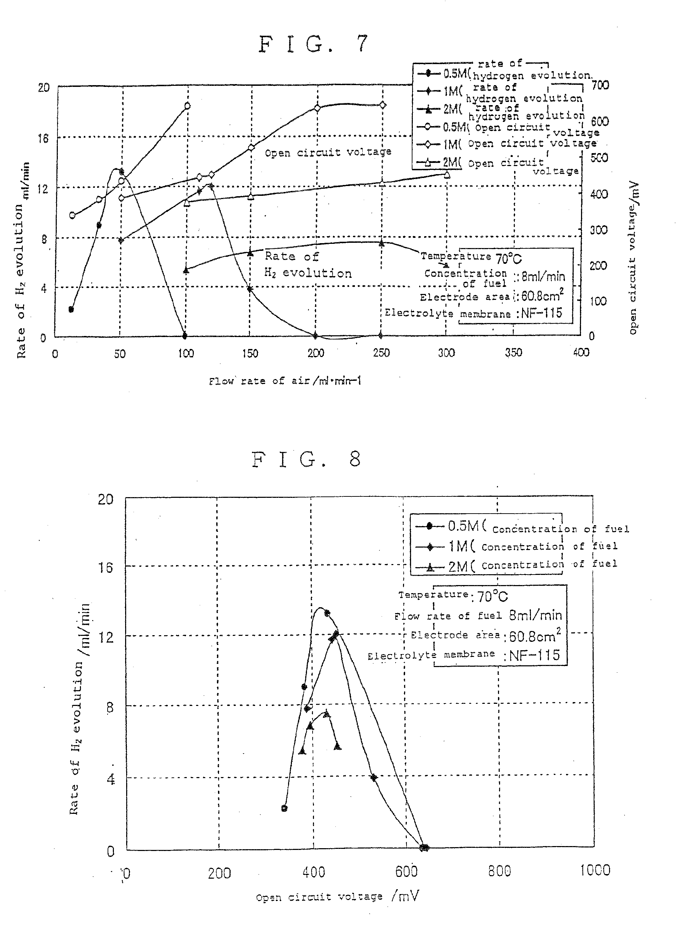

The same hydrogen generating cell as that of hydrogen generating example 1-1 was used. The temperature of the cell was kept at 70°C, and aqueous solution of methanol (fuel) at a fuel concentration of 0.5, 1 or 2M was applied at a constant flow rate of 8 ml/min. Then, relations of the flow rate of fuel, the flow rate of air, the rate of hydrogen evolution and open-circuit voltage with the flow rate of air were shown in Fig. 7.

From the graph it was found that as the concentration of fuel decreases, the rate of hydrogen evolution becomes larger.

Fig. 8 shows a graph for indicating relationship between the open-circuit voltage and the rate of hydrogen evolution, both adapted from the results of Fig. 7.

From this, it was found that the rate of hydrogen evolution depends on the open-circuit voltage, and that hydrogen evolves when the open-circuit voltage is in the range of 300 to 600 mV. The rate of hydrogen evolution is the highest around 450 mV for all the fuel concentrations tested as in hydrogen generating example 1-1.

[Hydrogen generating example 1-4]

Next, effect of the thickness of electrolyte membrane on the evolution volume of gas was studied.

The hydrogen generating cell was constructed similarly to the above examples, using a Nation 112 (Dupont) having a thickness of 50 $\mu$m, instead of Nafion 115 (Dupont) having a thickness of 130 $\mu$m as used in the above examples 1-1 to 1-3. The cell was operated: temperature at 70°C; concentration of fuel at 1M; and flow rate of fuel at 8 ml/min, and relations of the flow rate of fuel, the flow rate of air and the rate of hydrogen evolution with the flow rate of air were studied.

Both Nafion 115 and 112 membranes are made of the same material as a single difference in their thickness.

Thus, only the thickness of electrolyte membranes serves as a parameter to be studied in the experiment. The study results are summarized in Fig. 9.

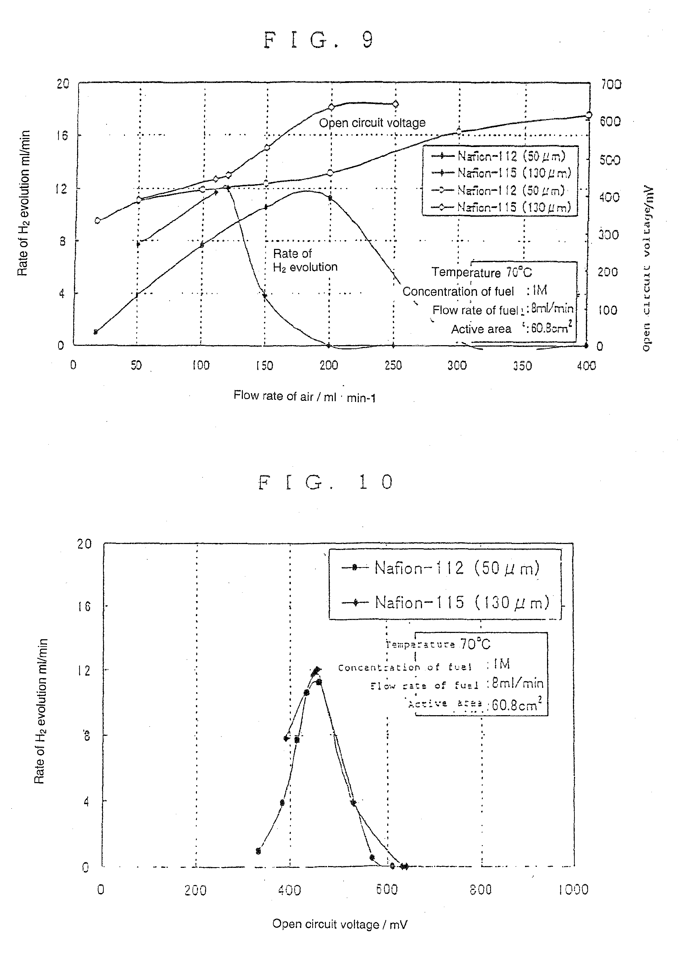

Fig. 10 shows a graph for indicating relationship between the open-circuit voltage and the rate of hydrogen evolution, both adapted from the results of Fig. 9.

From this, it was found that the rate of hydrogen evolution was similar regardless of the thickness of electrolyte membrane. As seen from the figure, the rate of hydrogen evolution depends on the open-circuit voltage, and is the highest around 450 mV.

[Hydrogen generating example 1-5]

A hydrogen generating cell constructed as in hydrogen generating example 1-1 was placed in an electric furnace where hot air was circulated. The temperature of the cell was kept at 30, 50, 70, or 90°C, air was flowed at a rate of 0 to 250 ml/min to the air electrode, and 1M aqueous solution of methanol was flowed at a rate of 5 ml/min to the fuel electrode. Then, the open-circuit voltage, and the rate of hydrogen evolution from the fuel electrode were monitored and analyzed.

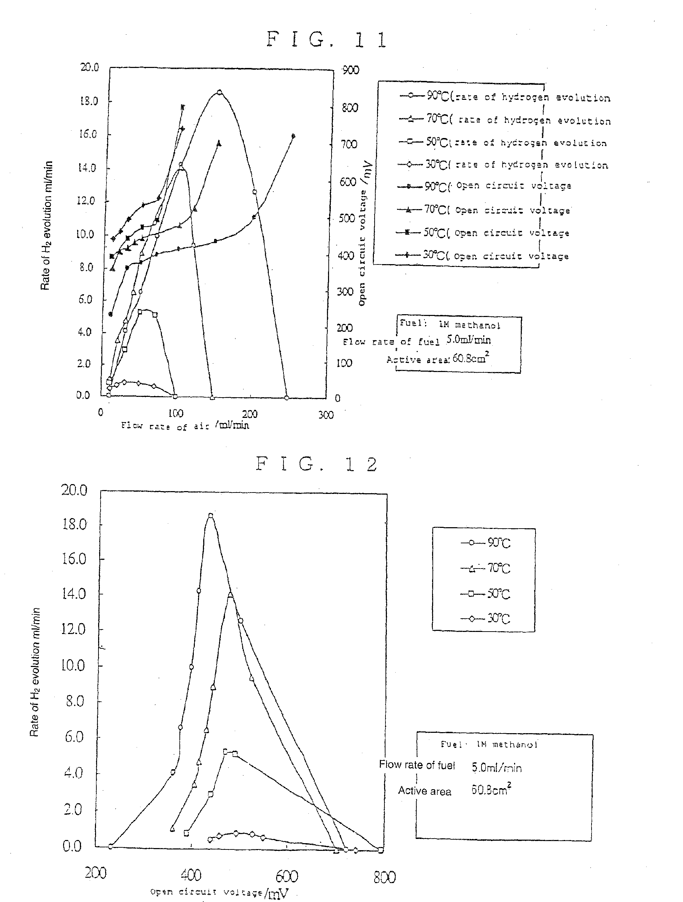

Relation of the rate of hydrogen evolution with the flow rate of air is represented in Fig. 11.

Similarly to example 1-1, the evolution of hydrogen from the fuel electrode was confirmed with reduction of the flow rate of air for all the temperatures tested. The rate of hydrogen evolution becomes high as the temperature is raised. Studies of relation of the open-circuit voltage (open voltage) with the flow rate of air indicate that as the flow rate of air becomes low, the open-circuit voltage of the cell tends to decline.

Fig. 12 shows a graph for indicating relationship between the open-circuit voltage and the rate of hydrogen evolution, both adapted from the results of Fig. 11.

From this, it was found that the rate of hydrogen evolution depends on the open-circuit voltage, and hydrogen evolves when the open-circuit voltage is in the range of 300 to 700 mV. The rate of hydrogen evolution is the highest around 470 to 480 mV when the temperature is kept at 30 to 70°C, while the peak is shifted to 440 mV when the temperature is raised to 90°C.

[Hydrogen generating example 1-6]

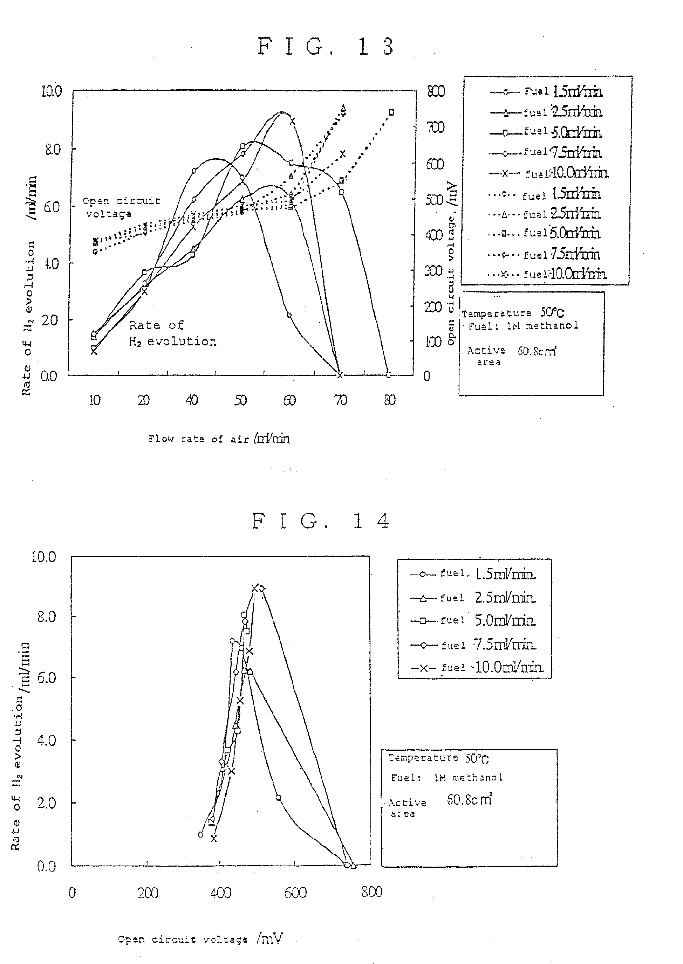

The same hydrogen generating cell as that of hydrogen generating example 1-1 was used. The temperature of cell was kept at 50°C, and fuel was applied at the flow rate of 1.5, 2.5, 5.0, 7.5, or 10. ml/min. Then, relations of the flow rate of fuel, the flow rate of air and the rate of hydrogen evolution, with the flow rate of air were shown in fig. 13.

From this, it was found that in contrast with example 1-2 where the temperature was kept at 70°C as the flow rate of fuel increases, the rate of hydrogen evolution becomes larger.

Fig. 14 shows a graph for indicating relationship between the open-circuit voltage and the rate of hydrogen evolution, both adapted from the results of Fig. 13.

From this, it was found that the rate of hydrogen evolution depends on the open-circuit voltage, and hydrogen evolves when the open-circuit voltage is in the range of 300 to 700 mV. The rate of hydrogen evolution is the highest around 450 to 500 mV.

After determining the consumption of methanol in fuel and the rate of hydrogen evolution when the flow rate of fuel is varied, the energy efficiency under open-circuit condition was determined by calculation in accordance with the equation described below (which is different from the equation used for determining the energy efficiency of a charging condition). As a result it was found that, under open-circuit condition, the energy efficiency was 17% when fuel flows at 5.0 ml/min, and 22% when fuel flows at 2.5 ml/min.

Efficiency (%) of a hydrogen generating system under open-circuit condition = (change of the standardized enthalpy of hydrogen evolved/change of enthalpy of methanol consumed) x 100

[Hydrogen generating example 1-7]

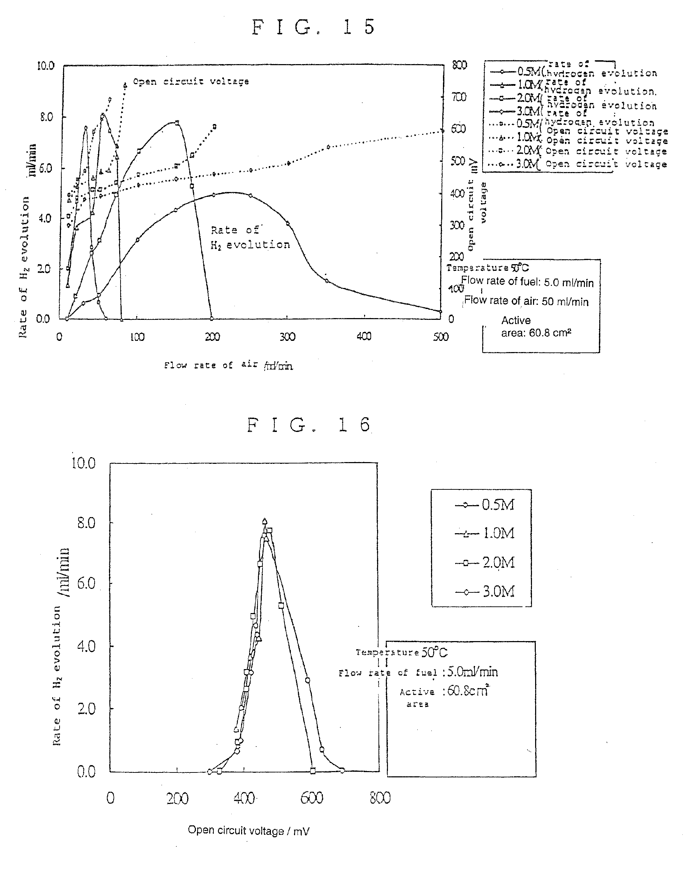

The same hydrogen generating cell as that of hydrogen generating example 1-1 was used. The temperature of cell was kept at 50°C, and aqueous solution of methanol (fuel) was applied at a constant flow rate of 5 ml/min while the concentration of fuel was varied to 0.5, 1, 2, 3M. Then, relations of the flow rate of air and the rate of hydrogen evolution with the flow rate of air were shown in Fig. 15.

From this, it was found that as the concentration of fuel decreases, the peak of the rate of hydrogen evolution is observed with reduction of the flow rate of air.

Fig. 16 shows a graph for indicating relationship between the open-circuit voltage and the rate of hydrogen evolution, both adapted from the results of Fig. 15.

From this, it was found that the rate of hydrogen evolution depends on the open-circuit voltage, and hydrogen evolves when the open-circuit voltage is in the range of 300 to 700 mV. The rate of hydrogen evolution is the highest around 470 mV for all the concentrations of fuel tested.

[Hydrogen generating example 1-8]

The same hydrogen generating cell as that of hydrogen generating example 1-1 was used (except that the air electrode consisted of an oxidizing electrode to which oxidizing gas was flowed) . The cell was operated:

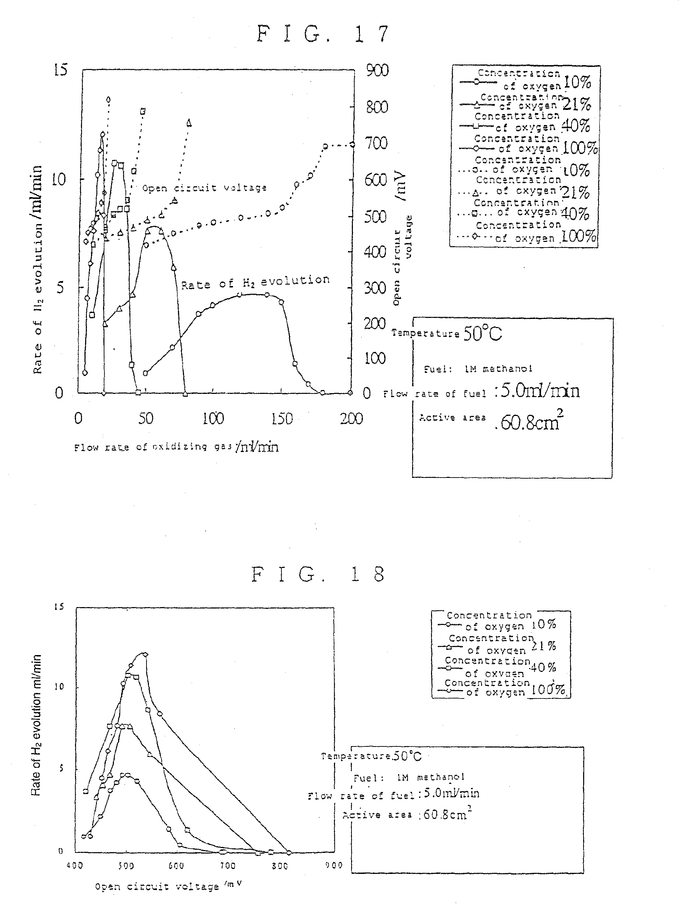

temperature at 50°C; concentration of fuel at 1M; and flow rate of fuel at 5 ml/min, while the concentration of oxygen being varied to 10, 21, 40, or 100% and relations of the open-circuit voltage and the rate of hydrogen evolution with the flow rate of oxidizing gas were studied. The results are shown in Fig. 17. The oxidizing gas containing 21% oxygen was represented by air, and the oxidizing gas containing 10% oxygen was obtained by mixing air with nitrogen. The oxidizing gas containing 40% oxygen was obtained by adding oxygen (100% oxygen) to air.

From this, it was found that as the concentration of oxygen increases, the flow rate of oxidizing gas becomes smaller.
Fig. 18 shows a graph for indicating relationship between the open-circuit voltage and the rate of hydrogen evolution, both adapted from the results of Fig. 17.
From this, it was found that the rate of hydrogen evolution depends on the open-circuit voltage, and hydrogen evolves when the open-circuit voltage is in the range of 400 to 800 mV. The rate of hydrogen evolution is the highest at 490 to 530 mV.

[Hydrogen generating example 1-9]

The same hydrogen generating cell as that of hydrogen generating example 1-1 was used. The cell was operated at 50°C with the flow of air to the air electrode kept at 60 ml/min and the flow of aqueous solution of methanol (fuel) to the fuel electrode kept at 2.6 ml/min to cause gas to evolve. A 200 cc of sample was collected from the gas, and the concentration of CO of the gas was determined by gas chromatography. No CO was detected in the gas (1 ppm or lower) . Under the measurement condition the open-circuit voltage of the cell was 477 mV and the rate of hydrogen evolution was 10 ml/min.

[Hydrogen generating example 1-10]

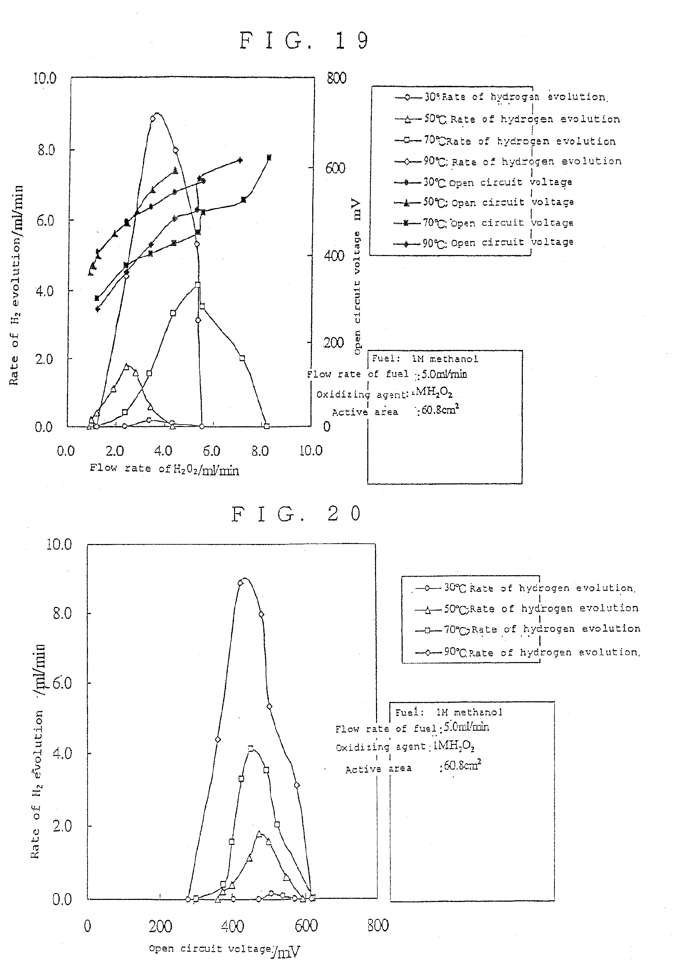

The same hydrogen generating cell with that of Example 1-1 was used (except that the air electrode consisted of an oxidizing electrode to which liquid hydrogen peroxide was flowed). The cell was placed in an electric furnace where hot air was circulated. The cell was operated while the temperature being kept at 30, 50, 70, or 90°C with the flow of 1M $H_2O_2$ (hydrogen peroxide) to the oxidizing electrode kept at 1 - 8 ml/min and the flow of 1M aqueous solution of methanol (fuel) to the fuel electrode kept at 5 ml/min. Relations of the open-circuit voltage and the rate of hydrogen evolution with the flow rate of hydrogen peroxide were studied. Relation of the rate of hydrogen evolution with the flow rate of $H_2O_2$ is represented in Fig. 19.
Similarly to hydrogen generating example 1-1, the evolution of hydrogen from the fuel electrode of the cell was confirmed with reduction of the flow rate of $H_2O_2$ for all the temperatures tested. The rate of hydrogen evolution becomes high as the temperature is raised.
Studies of relation of the open-circuit voltage with the flow rate of $H_2O_2$ indicate that as the flow rate of $H_2O_2$ becomes low, the open-circuit voltage of the cell tends to decline.
Fig. 20 shows a graph for indicating relationship between the open-circuit voltage and the rate of hydrogen evolution, both adapted from the results of Fig. 19.
From this, it was found that the rate of hydrogen evolution depends on the open-circuit Voltage, and hydrogen evolves when the open-circuit voltage is in the range of 300 to 600 mV. The rate of hydrogen evolution is the highest around 500 mV when the temperature is kept at 30 to 50°C, while the peak is shifted to 450 mV when the temperature is raised to 70 to 90°C.
What is important here is that no current or voltage was applied from outside to the hydrogen generating cells of Example 1. The cell was only connected to an electrometer for monitoring the open-circuit voltage which has an internal impedance of 1 GΩ or higher, while the cell was supplied with fuel and oxidizing agent.
In other words, the hydrogen generating cell of Example 1 converted part of fuel into hydrogen receiving no external energy except for fuel and oxidizing agent.
In addition, reforming occurred at a surprisingly low temperature of 30 to 90°C. In view of these facts, the hydrogen generating device of the invention is likely to be novel and the effect to use this hydrogen generating device in the standalone hydrogen generating system is profound.

EXAMPLE 2

Illustrative examples of the hydrogen generating device used in the standalone hydrogen generating system as defined by Claim 3 of the invention (discharging condition) will be presented below.

[Hydrogen generating example 2-1]

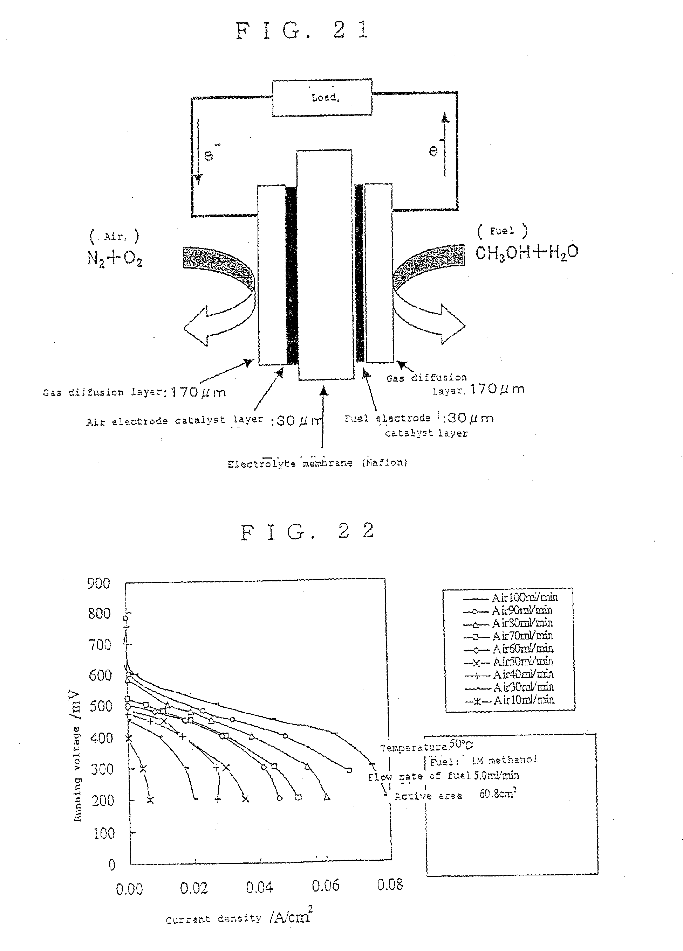

The structure of hydrogen generating cells described in Example 2 (illustrative examples 2-1 to 2-8) with means for withdrawing electric energy is outlined in Fig. 21.

The hydrogen generating cells of Example 2 are the same in structure as those of hydrogen generating example 1-1 except that the cell comprises a fuel electrode as a negative electrode and an air electrode as a positive electrode with means for withdrawing electric energy.

The hydrogen generating cell was placed in an electric furnace where hot air was circulated. The cell was operated while the temperature (operation temperature) being kept at 50°C with the flow rate of air to the air electrode kept at 10 to 100 ml/min and the flow of 1M aqueous solution of methanol (fuel) to the fuel electrode kept at 5 ml/min to cause gas to evolve. Then, while the external current flowing between the air electrode and the fuel electrode being varied, the operation voltage between the fuel electrode and the air electrode, the volume of gas evolved from the fuel electrode and gas composition were monitored and analyzed. The concentration of hydrogen in the generated gas was determined by gas chromatography.

Relation of the operation voltage with the current density withdrawn revealed in the test is shown in Fig. 22. It was found that as the flow rate of air is reduced, the dischargeable limit current density becomes smaller with the reduction of the operation voltage.

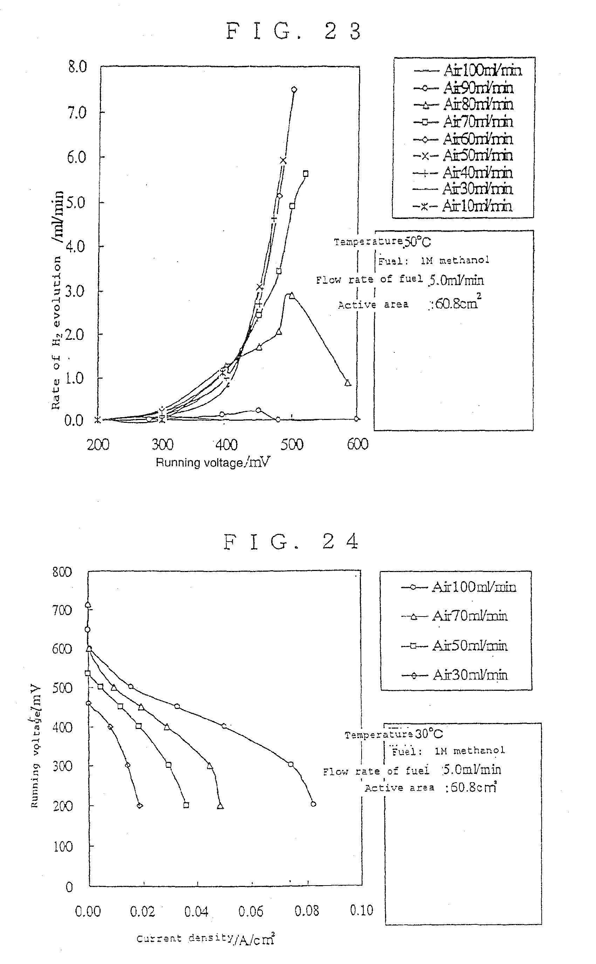

Fig. 23 shows a graph for indicating relationship between the rate of hydrogen evolution and the operation voltage, both adapted from the results of Fig. 22.

From this, it was found that the rate of hydrogen evolution (volume of hydrogen evolution) depends on the operation voltage, and gas evolves when the operation voltage is in the range of 300 to 600 mV. Moreover, when the flow rate of air is in the range of 50 to 60 ml/min, hydrogen evolves most readily: when the flow rate of air is excessively large as 100 ml/min, no evolution of hydrogen is detected.

Next, the cell was operated: temperature at 50°C; flow rate of fuel at 5 ml/min; flow rate of air at 60 ml/min; and current density at 8.4 mA/cm$^2$ to cause gas to evolve. The concentration of hydrogen in the gas was determined by gas chromatography.

As a result, it was found that the gas contained hydrogen at about 74%, and hydrogen evolved at a rate of 5.1 ml/min. No CO was detected.

[Hydrogen generating example 2-2]

The same hydrogen generating cell as that of hydrogen generating example 2-1 was used. The cell was operated while the temperature being kept at 30°C with the flow rate of air to the air electrode kept at 30 - 100 ml/min and the flow of 1M aqueous solution of methanol (fuel) to the fuel electrode kept at 5 ml/min. Then, while the current flowing between the air electrode and the fuel electrode being varied, the operation voltage between the fuel electrode and the air electrode, and the rate of hydrogen evolution occurring from the fuel electrode were monitored and analyzed.

Relation of the operation voltage with the current density withdrawn revealed in the test is shown in Fig. 24. It was found that as the flow rate of air is reduced, the dischargeable limit current density becomes smaller with the reduction of operation voltage.

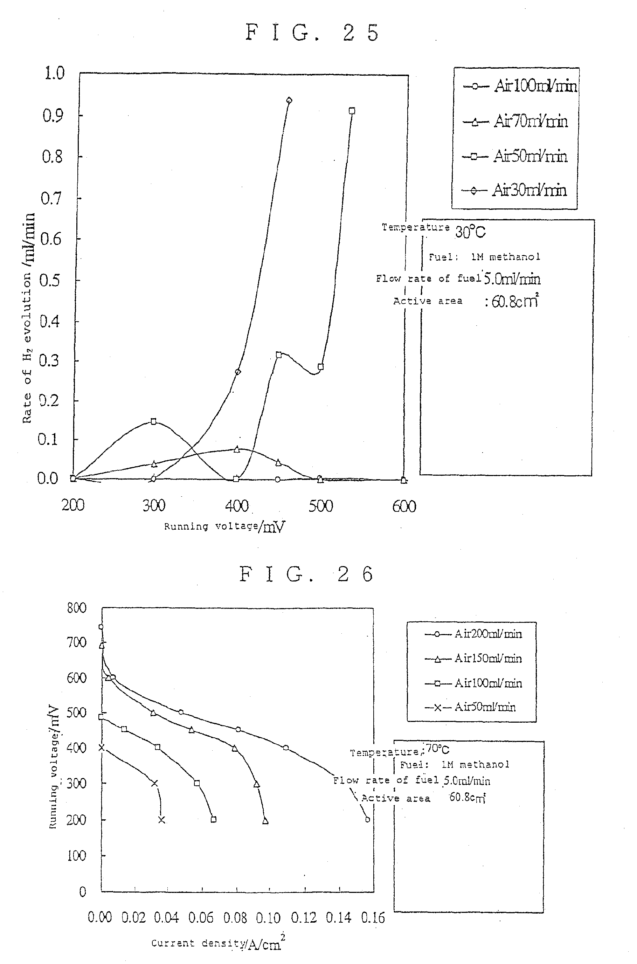

Fig. 25 shows a graph for indicating relationship between the rate of hydrogen evolution and the operation voltage, both adapted from the results of Fig. 24.

From this, it was found that the rate of hydrogen evolution depends on the operation voltage, and hydrogen evolves when the operation voltage is in the range of 200 to 540 mV. Hydrogen evolves when the flow rate of air is in the range of 30 to 70 ml/min. When the flow rate of air is 100 ml/min, scarcely any evolution of hydrogen is detected.

[Hydrogen generating example 2-3]

The same hydrogen generating cell as that of hydrogen generating example 2-1 was used. The cell was operated while the temperature being kept at 70°C with the flow rate of air to the air electrode kept at 50 - 200 ml/min and the flow of 1M aqueous solution of methanol (fuel) to the fuel electrode kept at 5 ml/min. Then, while the current flowing between the air electrode and the fuel electrode being varied, the operation voltage between the fuel electrode and the air electrode, and the rate of hydrogen evolution occurring from the fuel electrode were monitored and analyzed.

Relation of the operation voltage with the current density withdrawn revealed in the test is shown in Fig. 26.

It was found that as the flow rate of air is reduced, the dischargeable limit current density becomes smaller with the reduction of the operation voltage.

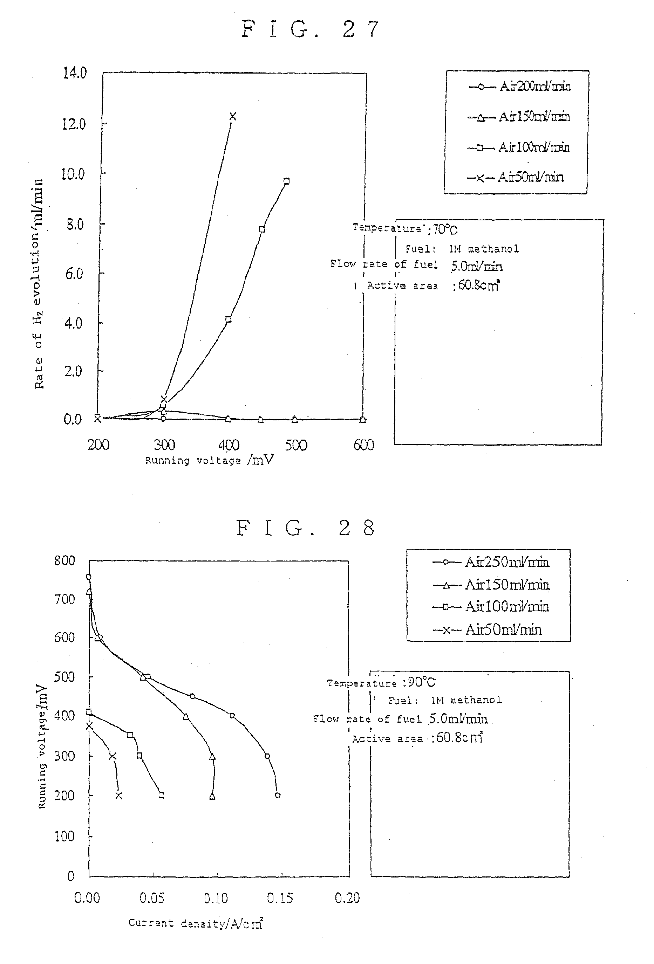

Fig. 27 shows a graph for indicating relationship between the rate of hydrogen evolution and the operation voltage, both adapted from the results of Fig. 26.

From this, it was found that the rate of hydrogen evolution depends on the operation voltage, and hydrogen evolves when the operation voltage is in the range of 200 to 500 mV. Hydrogen is ready to evolve when the flow rate of air is in the range of 50 to 100 ml/min. When the flow rate of air is excessively large as 150 to 200 ml/min, scarcely any evolution of hydrogen is detected.

[Hydrogen generating example 2-4]

The same hydrogen generating cell as that of hydrogen generating example 2-1 was used. The cell was operated while the temperature being kept at 90°C with the flow of air to the air electrode kept at 50 - 250 ml/min and the flow of 1M aqueous solution of methanol (fuel) to the fuel electrode kept at 5 ml/min. Then, while the current flowing between the air electrode and the fuel electrode being varied, the operation voltage between the fuel electrode and the air electrode, and the rate of hydrogen evolution occurring from the fuel electrode were monitored and analyzed.

Relation of the operation voltage with the current density withdrawn revealed in the test is shown in Fig. 28.

It was found that as the flow rate of air is reduced, the dischargeable limit current density becomes smaller with the reduction of the operation voltage.

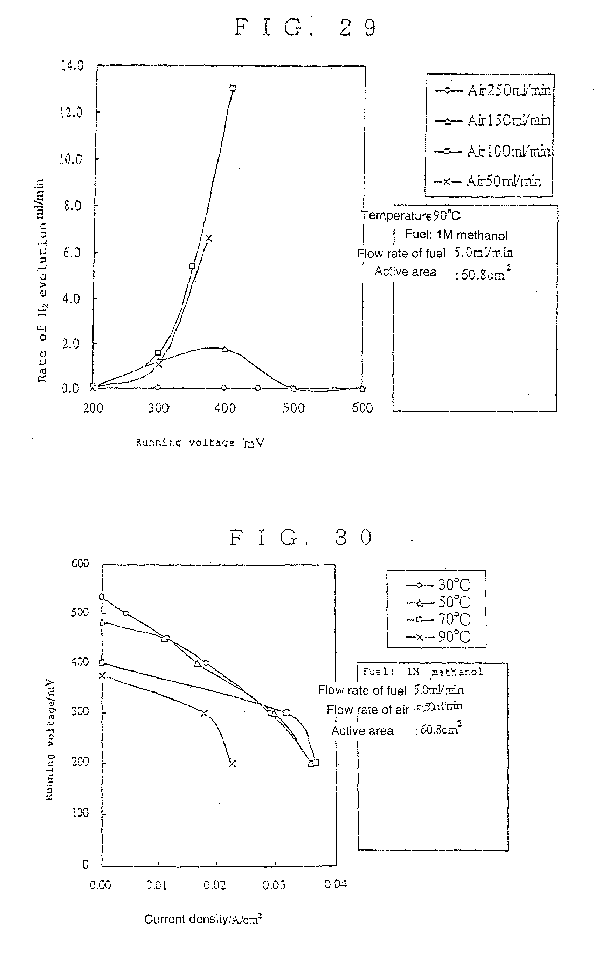

Fig. 29 shows a graph for indicating relationship between the rate of hydrogen evolution and the operation voltage, both adapted from the results of Fig. 28.

From this, it was found that the rate of hydrogen evolution tends to depend on the operation voltage, and hydrogen evolves when the operation voltage is in the range of 200 to 500 mV. Hydrogen is ready to evolve when the flow rate of air is in the range of 50 to 100 ml/min. When the flow rate of air is at 250 ml/min, scarcely any evolution of hydrogen is detected.

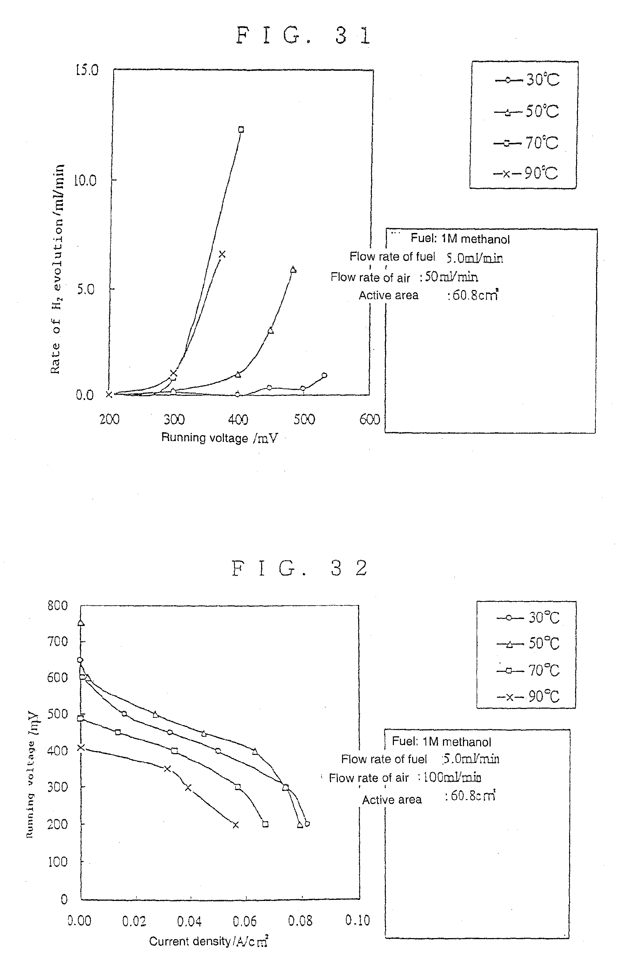

Next, when the cell is operated with the flow of air being kept at 50 ml/min while respective temperatures are varied as in hydrogen generating examples 2-1 to 2-4, Fig. 30 shows relation of the current density withdrawn with the operation voltage while Fig. 31 shows relation of the rate of hydrogen evolution with the operation voltage.

From this, it was found that the rate of hydrogen evolution tends to depend on the operation voltage, and as the temperature becomes higher, hydrogen evolves at a lower operation voltage and the evolution volume becomes larger.

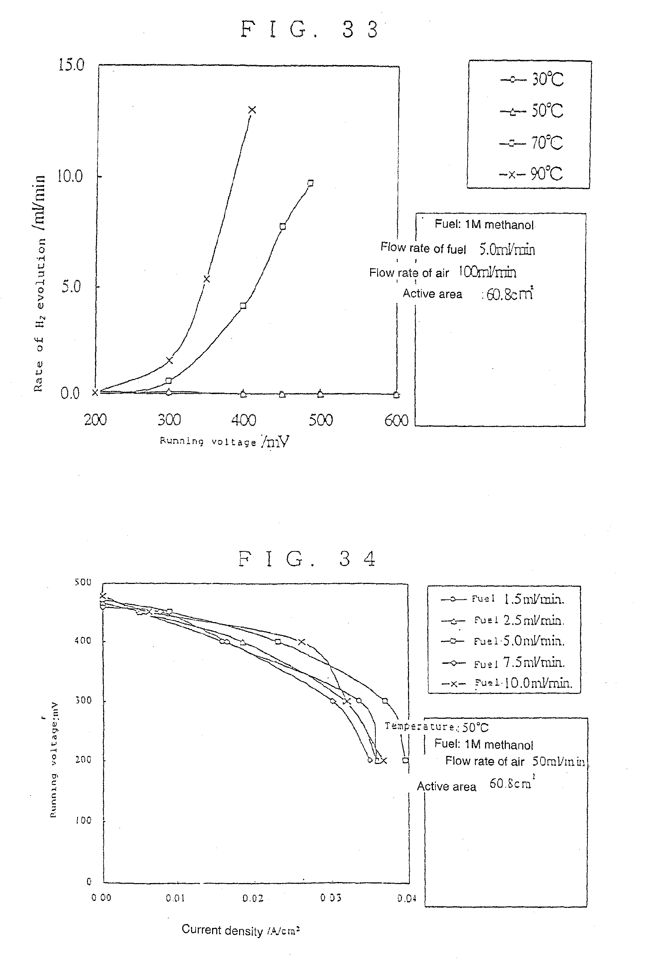

Further, when the cell is operated with the flow of air being kept at 100 ml/min while respective temperatures are varied as in hydrogen generating examples 2-1 to 2-4, Fig. 32 shows relation of the current density withdrawn with the operation voltage while Fig. 33 shows relation of the rate of hydrogen evolution with the operation voltage.

From this, it was found that the rate of hydrogen evolution tends to depend on the operation voltage, and as the temperature becomes higher, hydrogen evolves at a lower operation voltage and the evolution volume becomes larger. It was also found that when the flow rate of air is excessively large as 100 ml/min, scarcely any evolution of hydrogen is detected when the temperature is kept as low as 30 or 50°C.

[Hydrogen generating example 2-5]

The same hydrogen generating cell as that of hydrogen generating example 2-1 was used. The cell was operated while the temperature being kept at 50°C with the flow of air to the air electrode kept at 50 ml/min and the flow rate of fuel to the fuel electrode varied to 1.5, 2.5, 5.0, 7.5, or 10.0 ml/min. Then, while the current flowing between the air electrode and the fuel electrode being varied, the operation voltage between the fuel electrode and the air electrode, and the rate of hydrogen evolution occurring from the fuel electrode were monitored and analyzed.

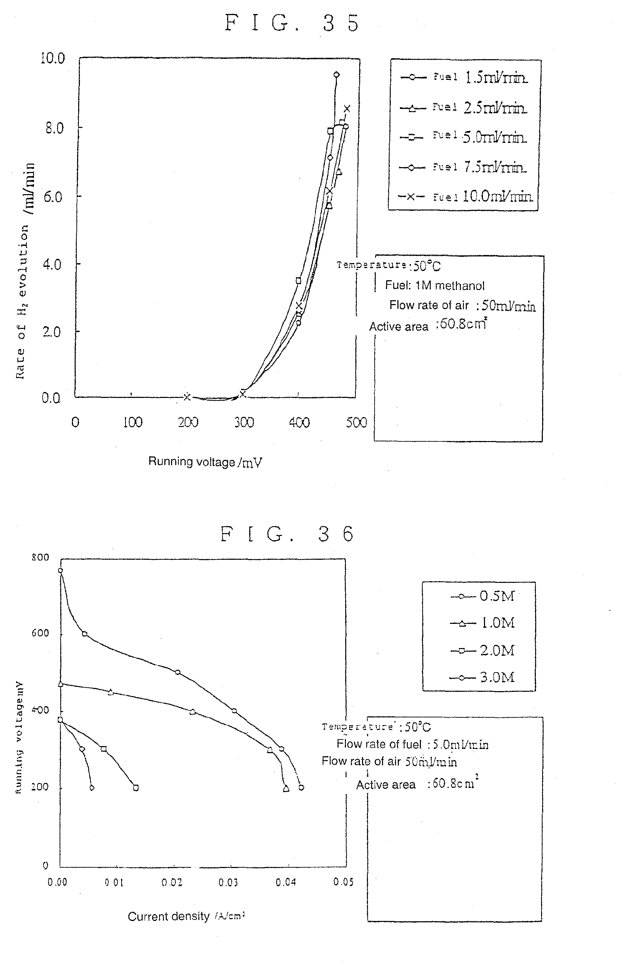

Relation of the operation voltage with the current density withdrawn revealed in the test is shown in Fig. 34.

It was found that the dischargeable limit current density hardly changes even when the flow of fuel is varied.

Fig. 35 shows a graph for indicating relationship between the rate of hydrogen evolution and the operation voltage, both adapted from the results of Fig. 34.

From this, it was found that the rate of hydrogen evolution depends on the operation voltage, and hydrogen evolves when the operation voltage is in the range of 300 to 500 mV. The rate of hydrogen evolution is high when the operation voltage is in the range of 450 to 500 ml/min.

It was found that the rate of hydrogen evolution is hardly affected by the flow rate of fuel.

[Hydrogen generating example 2-6]

The same hydrogen generating cell as that of hydrogen generating example 2-1 was used. The cell was operated while the temperature being kept at 50°C with the flow of air to the air electrode kept at 50 ml/min and the constant flow of fuel to the fuel electrode kept at 5 ml/min while fuel concentration being varied to 0.5, 1, 2, or 3M. Then, while the current flowing between the air electrode and the fuel electrode being varied, the operation voltage between the fuel electrode and the air electrode, and the rate of hydrogen evolution occurring from the fuel electrode were monitored and analyzed.

Relation of the operation voltage with the current density withdrawn revealed in the test is shown in Fig. 36. was found that the dischargeable limit current density declines as the concentration of fuel becomes higher with the reduction of operation voltage.

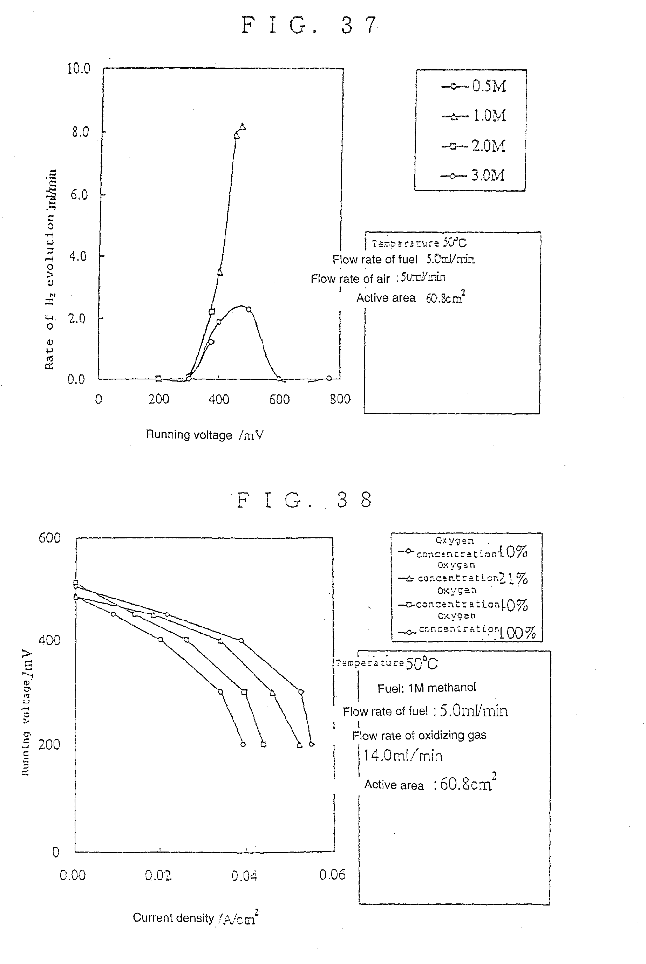

Fig. 37 shows a graph for indicating relationship between the rate of hydrogen evolution and the operation voltage, both adapted from the results of Fig. 36.

From this, it was found that the rate of hydrogen evolution depends on the operation voltage, and hydrogen evolves when the operation voltage is in the range of 300 to 600 mV.

Hydrogen evolves most vigorously when the concentration of fuel is 1M.

[Hydrogen generating example 2-7]

The same hydrogen generating cell as that of hydrogen generating example 2-1 was used (except that the air electrode consisted of an oxidizing electrode to which oxygen was flowed). The cell was operated while the temperature being kept at 50°C with the flow of oxidizing gas to the oxidizing electrode kept at 14.0 ml/min and the constant flow of 1M fuel concentration to the fuel electrode kept at 5 ml/min, while the concentration of oxygen being varied to 10, 21, 40, or 100%. Then, while the current flowing between the oxidizing electrode and the fuel electrode being varied, the operation voltage between the fuel electrode and the oxidizing electrode, and the rate of hydrogen evolution occurring from the fuel electrode were monitored and analyzed. The oxidizing gas containing 21% oxygen was represented by air, and the oxidizing gas containing 10% oxygen was obtained by mixing air with nitrogen. The oxidizing gas containing 40% oxygen was obtained by adding oxygen (100% oxygen concentration) to air.

Relation of the operation voltage with the current density withdrawn revealed in the test is shown in Fig. 38. It was found that the operation voltage declines as the concentration of oxygen becomes smaller with the reduction of dischargeable limit current density.

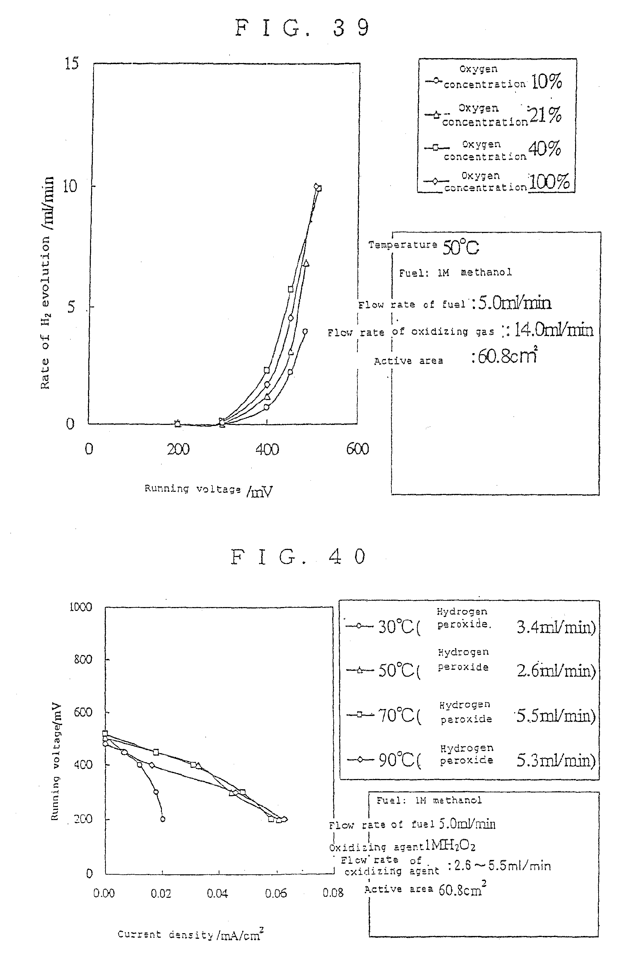

Fig. 39 shows a graph for indicating relationship between the rate of hydrogen evolution and the operation voltage, both adapted from the results of Fig. 38.

From this, it was found that the rate of hydrogen evolution depends on the operation voltage, and hydrogen evolves when the operation voltage is in the range of 300 to 600 mV.

The rate of hydrogen evolution tends to be high as the concentration of oxygen becomes higher.

[Hydrogen generating example 2-8]

The same hydrogen generating cell as that of hydrogen generating example 2-1 was used (except that the air electrode consisted of an oxidizing electrode to which liquid hydrogen peroxide was flowed). The hydrogen generating cell was placed in an electric furnace where hot air was circulated. The cell was operated while the temperature being varied to 30, 50, 70, or 90°C with the flow of 1M aqueous solution of $H_2O_2$ (hydrogen peroxide) to the oxidizing electrode varied from 2.6 to 5.5 ml/min, and the flow of 1M aqueous solution of methanol (fuel) to the fuel electrode kept at 5 ml/min. Then, while the current flowing between the oxidizing electrode and the fuel electrode being varied, the operation voltage between the fuel electrode and the oxidizing electrode, and the rate of hydrogen evolution occurring from the fuel electrode were monitored and analyzed. The flow rate of hydrogen peroxide was adjusted such that the open-circuit voltage was approximately equal to 500 mV for all the temperatures tested.

Relation of the operation voltage with the current density withdrawn revealed in the test is shown in Fig. 40. It was found that the decline of operation voltage with the increase of current density takes a similar course when the temperature is kept at 70 to 90°C, while operation voltage undergoes a sharp fall when the temperature is decreased to 30°C with the reduction of dischargeable limit current density.

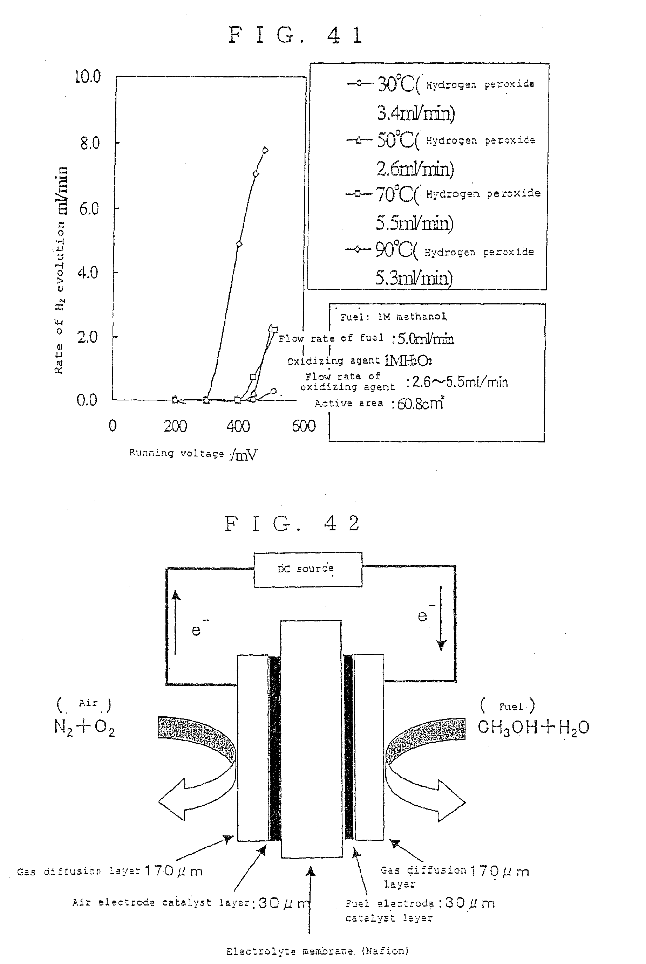

Fig. 41 shows a graph for indicating relationship between the rate of hydrogen evolution and the operation voltage, both adapted from the results of Fig. 40.

From this, it was found that the rate of hydrogen evolution tends to depend on the operation voltage, and hydrogen evolves when the operation voltage is in the range of 300 to 500 mV. Hydrogen is most ready to evolve when the temperature is 90°C. Hydrogen does not evolve unless the operation voltage is raised sufficiently high, when the temperature is at the low level tested.

What is important here is that current was withdrawn outside from the hydrogen generating cells of Example 2. In other words, the hydrogen generating cell of Example 2 converted part of fuel into hydrogen while withdrawing electric energy to outside. In addition, reforming occurred at a surprisingly low temperature of 30 to 90°C. In view of these facts, the hydrogen generating device of the invention is likely to be novel and the effect to use this hydrogen generating device in the standalone hydrogen generating system is profound.

EXAMPLE 3

Illustrative examples of the hydrogen generating device used in the standalone hydrogen generating system as defined by Claim 4 of the invention (charging condition) will be presented below.

[Hydrogen generating example 3-1]

The structure of hydrogen generating cells described in Example 3 (hydrogen generating examples 3-1 to 3-8) with means for providing electric energy from outside is outlined in Fig. 42.

The hydrogen generating cells are the same in structure as those of hydrogen generating example 1-1 except that the cell comprises a fuel electrode as cathode and an oxidizing electrode as anode with means for providing electric energy from outside.

The hydrogen generating cell was placed in an electric furnace where hot air was circulated. The cell was operated while the temperature (operation temperature) being kept at 50°C with the flow of air to the air electrode kept at 10 to 80 ml/min and the flow of 1M aqueous solution of methanol (fuel) to the fuel electrode kept at 5 ml/min. Then, while the current flowing between the air electrode and the fuel electrode being varied by means of a DC power source from outside, the operation voltage between the fuel electrode and the air electrode, the volume of gas evolved from the fuel electrode and gas composition were monitored and analyzed. The energy efficiency of charging condition was defined as a ratio of the chemical energy of hydrogen evolved to the electric energy supplied from outside. The concentration of hydrogen in the generated gas was determined by gas chromatography, and rate of hydrogen evolution also determined.

The energy efficiency of a charging condition was calculated based on the following equation:

$$\text{Energy efficiency (\%)} = (\text{combustion heat of } H_2/\text{electric energy provided}) \times 100$$

$$\text{Combustion heat (kJ) of } H_2 \text{ per minute} = (\text{rate of } H_2 \text{ evolution ml/min}/24.47/1000) \times 286 \text{ kJ/mol [HHV]}$$

$$\text{Electric energy (kJ) per minute} = (\text{voltage mV}/1000 \times \text{current A} \times 60 \text{ sec})\text{Wsec}/1000$$

To avoid undue misunderstanding, a few comments are added here. The object of this invention lies in obtaining hydrogen gas having a higher energy content than the electric energy supplied from outside, and the invention does not aim to gain more energy than the sum of paid energy without taking any heed to the law of conservation of energy taught by thermodynamics. When the energy balance of the entire system is taken into view, since part of organic compound-based fuel is oxidized, the energy expenditure includes, in addition to the electric energy supplied from outside, the chemical energy consumed for the oxidization of the fuel, which will amount to a value equal to or less than 100%. To distinguish more clearly the inventive method from conventional methods for obtaining hydrogen via the electrolysis of water, the energy efficiency of a system defined by the ratio of the chemical energy of evolved hydrogen to the electric energy supplied from outside will be used here.

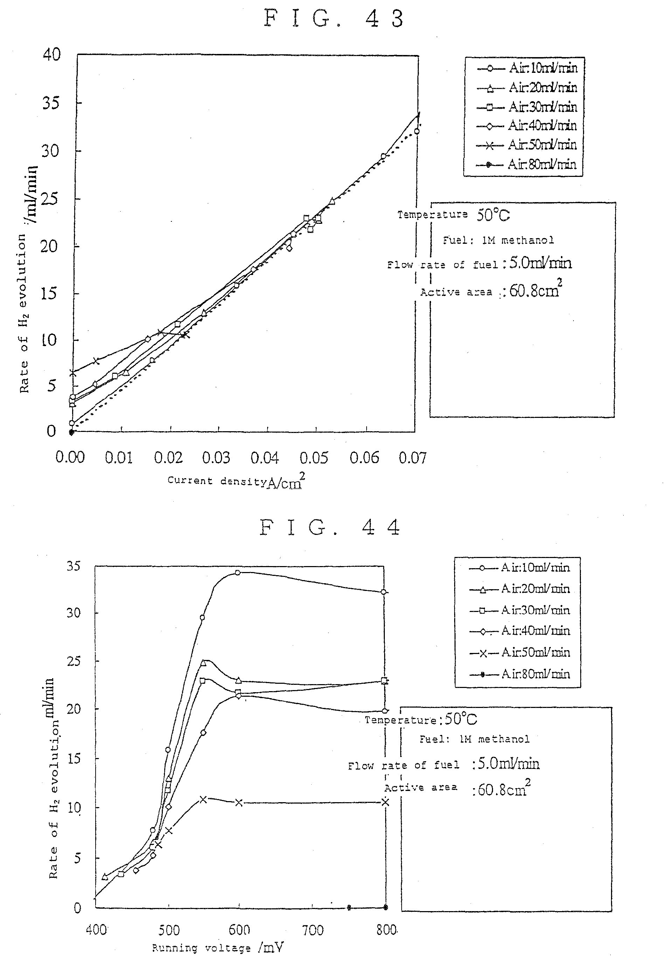

Relation of the rate of hydrogen evolution with the current density applied in the test is shown in Fig. 43. It was found that the efficiency of hydrogen evolution (efficiency of hydrogen evolution relative to electric energy supplied) becomes equal to or more than 100% (100% efficiency of hydrogen evolution is represented by the dashed line in Fig. 43) in certain areas when the current density is kept not more than 40 mA/cm$^2$. This suggests that it is possible to obtain hydrogen whose energy content is larger than the electric energy supplied from outside by operating the cell in those areas.

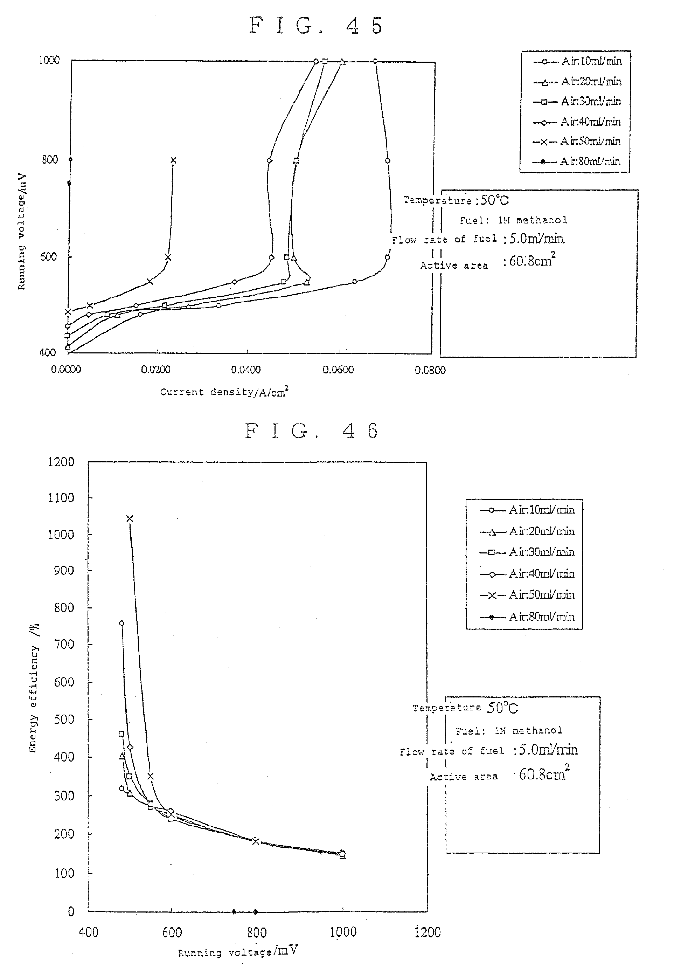

Fig. 44 shows a graph for indicating relationship between the rate of hydrogen evolution and the operation voltage, both adapted from the results of Fig. 43.

From this, it was found that the rate of hydrogen evolution (volume of hydrogen evolution) tends to depend on the operation voltage, and hydrogen evolves when the operation voltage is equal to or larger than 400 mV, and the rate of hydrogen evolution becomes virtually constant when the operation voltage becomes equal to or larger than 600 mV, and the rate of hydrogen evolution becomes larger (hydrogen is readier to evolve) with reduction of the flow rate of air.

Relation of the operation voltage with the current density applied is shown in Fig. 45.

The areas in Fig. 43 where the efficiency of hydrogen evolution is 100% or more fall below the line defined by the operation voltage being equal to or lower than 600 mV in Fig. 45.

Relation of the energy efficiency with the operation voltage is shown in Fig. 46.

From this, it was found that the energy efficiency is equal to or larger than 100% even when the operation voltage is around 1000 mV, and the energy efficiency is particularly high when the operation voltage is kept equal to or smaller than 600 mV, and the flow of air is kept at 30 to 50 ml/min.

Next, the cell was operated under a condition of high energy efficiency (1050%): temperature at 50°C; flow rate of fuel at 5 ml/min; flow rate of air at 50 ml/min; and current density at 4.8 mA/cm$^2$ to cause gas to evolve. The concentration of hydrogen in the gas was determined by gas chromatography. As a result it was found that the gas contained hydrogen at about 86%, and hydrogen evolved at a rate of 7.8 ml/min. No CO was detected.

[Hydrogen generating example 3-2]

The same hydrogen generating cell as that of hydrogen generating example 3-1 was used. The cell was operated while the temperature being kept at 30°C with the flow of air to the air electrode varied from 10 to 70 ml/min and the flow of 1M aqueous solution of methanol (fuel) to the fuel electrode kept at 5 ml/min. Then, while the current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

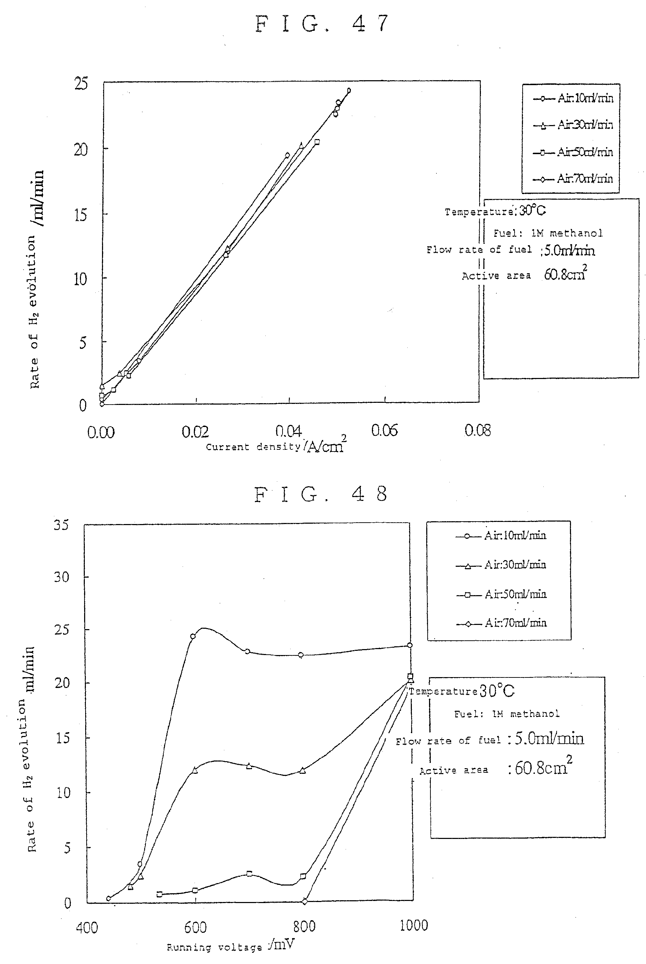

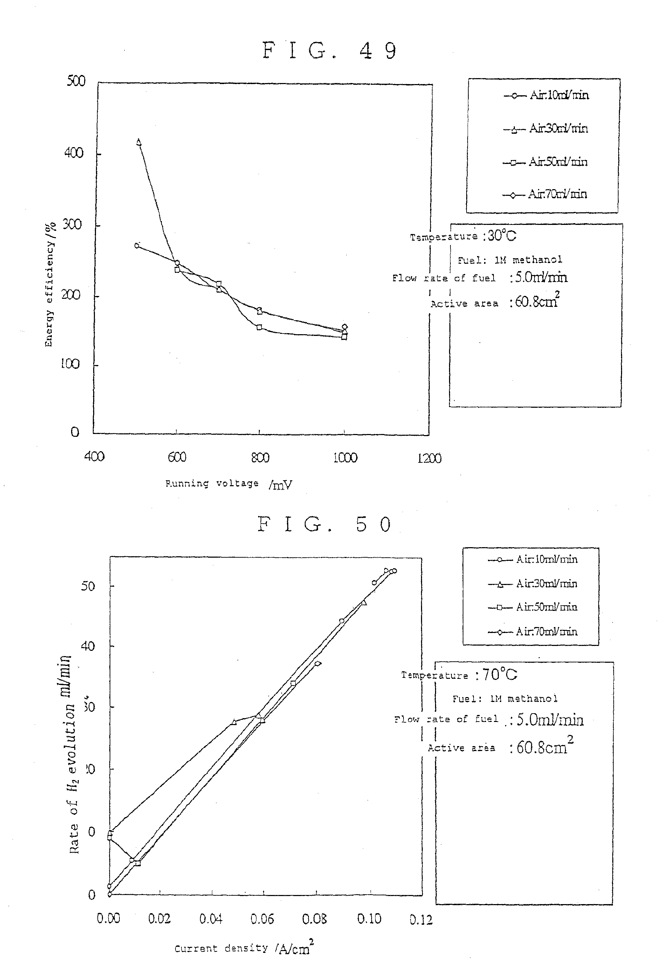

In this test, relation of the rate of hydrogen evolution with the current density applied is shown in Fig. 47, and relation of the rate of hydrogen evolution with the operation voltage is shown in Fig. 48.

From this, it was found that the rate of hydrogen evolution tends to depend on the operation voltage, and hydrogen evolves when the operation voltage is equal to or larger than 400 mV; hydrogen is readier to evolve with reduction of the flow rate of air; and the rate of hydrogen evolution becomes virtually constant with the air flow of 10 ml/min, when the operation voltage becomes equal to or larger than 600 mV, while the rate of hydrogen evolution tends to grow with the air flow of 30 ml/min, when the operation voltage becomes equal to or larger than 800 mV, and thus no hydrogen will evolve when air flows at a higher rate unless the operation voltage is raised sufficiently high.

Relation of the energy efficiency with the operation voltage is shown in Fig. 49.

From this, it was found that the energy efficiency is equal to or larger than 100% even when the operation voltage is around 1000 mV, and the energy efficiency is particularly high with the air flow of 30 ml/min when the operation voltage is kept equal to or smaller than 600 mV.

[Hydrogen generating example 3-3]

The test was performed under the same condition as in hydrogen generating example 3-2 except that the temperature of the cell was kept at 70°C. The operation voltage between the fuel electrode and the air electrode, and rate of hydrogen evolution on the fuel electrode and energy efficiency were monitored and analyzed.

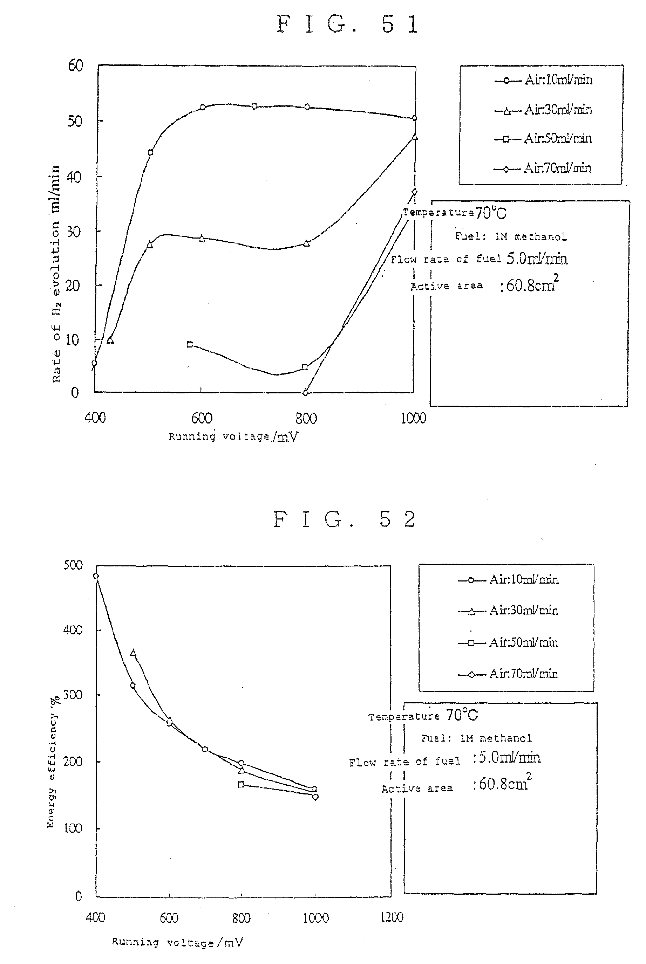

Relation of the rate of hydrogen evolution with the current density applied during the test is shown in Fig. 50, and relation of the rate of hydrogen evolution with the operation voltage is shown in Fig. 51.

From this, it was found that the rate of hydrogen evolution tends to depend on the operation voltage, and hydrogen evolves when the operation voltage is equal to or larger than 400 mV; hydrogen is readier to evolve with reduction of the flow rate of air; and the rate of hydrogen evolution becomes virtually constant with the air flow of 10 ml/min, when the operation voltage becomes equal to or larger than 600 mV, while the rate of hydrogen evolution tends to grow with the air flow of 30 ml/min, when the operation voltage becomes equal to or larger than 800 mV, and thus no hydrogen will evolve when air flows at a higher rate unless the operation voltage is raised sufficiently high.

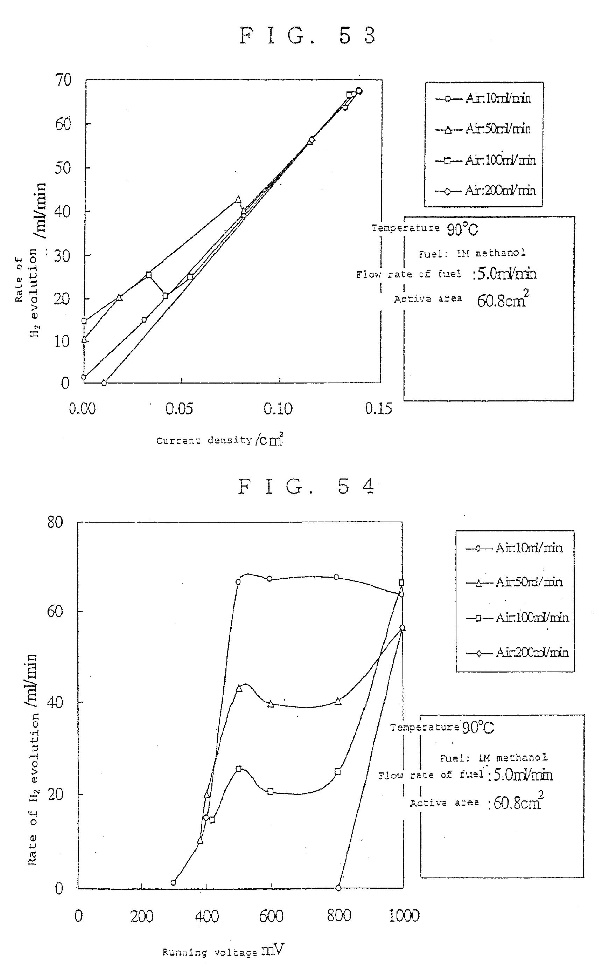

Relation of the energy efficiency with the operation voltage is shown in Fig. 52.

It was found that the energy efficiency is equal to or larger than 100% even when the operation voltage is around 1000 mV, and the energy efficiency is particularly high with the flow rate of air of 10 to 30 ml/min when the operation voltage is kept equal to or smaller than 600 mV.

[Hydrogen generating example 3-4]

The same hydrogen generating cell as that of hydrogen generating example 3-1 was used. The cell was operated while the temperature being kept at 90°C with the flow rate of air to the air electrode varied from 10 to 200 ml/min and the flow of 1M aqueous solution of methanol (fuel) to the fuel electrode kept at 5 ml/min. Then, while the current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

Relation of the rate of hydrogen evolution with the current density applied is shown in Fig. 53, and relation of the rate of hydrogen evolution with the operation voltage is shown in Fig. 54.

From this, it was found that the rate of hydrogen evolution tends to depend on the operation voltage, and hydrogen evolves when the operation voltage is equal to or larger than 300 mV; hydrogen is readier to evolve with reduction of the flow rate of air; and the rate of hydrogen evolution becomes virtually constant with the air flow of 10 ml/min, when the operation voltage becomes equal to or larger than 500 mV, while the rate of hydrogen evolution tends to grow with the air flow of 50 to 100 ml/min, when the operation voltage becomes equal to or larger than 800 mV, and thus no hydrogen will evolve when air flows at 200 ml/min unless the operation voltage is raised higher than 800 mV.

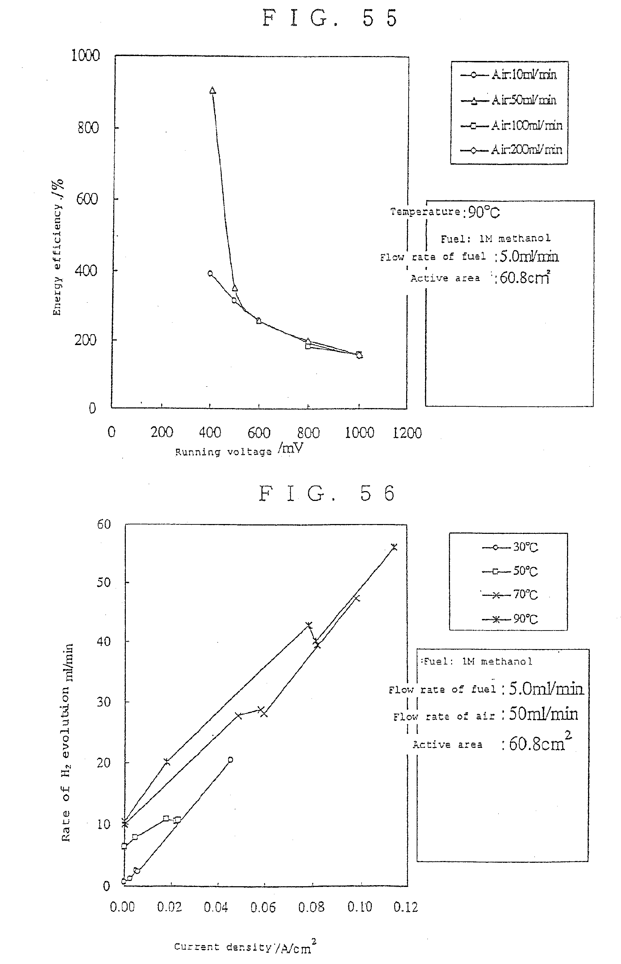

Relation of the energy efficiency with the operation voltage is shown in Fig. 55.

From this, it was found that the energy efficiency is equal to or larger than 100% even when the operation voltage is around 1000 mV, and the energy efficiency is particularly high with the flow of air of 50 ml/min when the operation voltage is kept equal to or smaller than 500 mV.

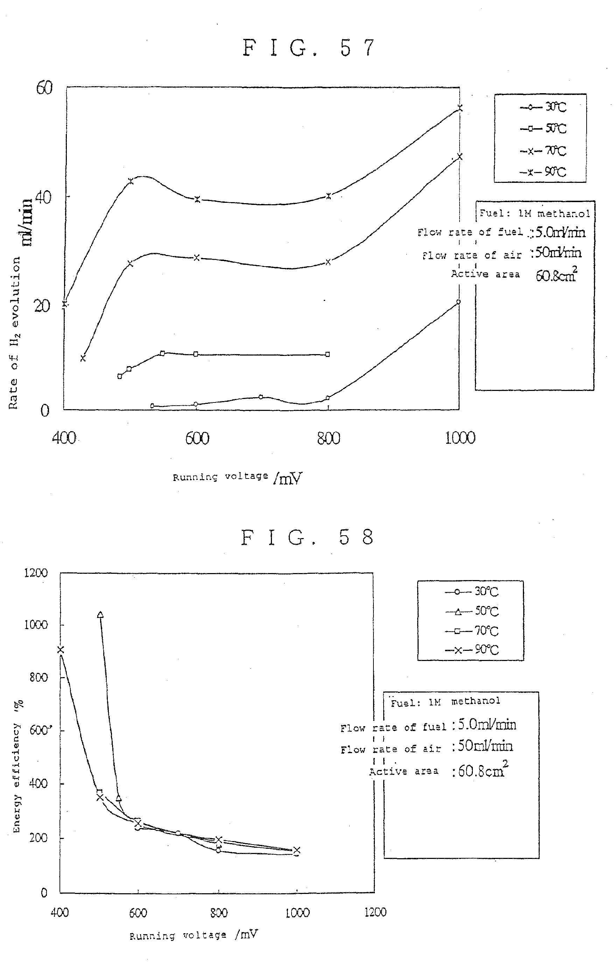

Next, for hydrogen generating examples 3-1 to 3-4 where operation temperature was varied with the flow of air kept at 50 ml/min, relation of the rate of hydrogen evolution with the current density applied is shown in Fig. 56, while relation of the rate of hydrogen evolution with the operation voltage is shown in Fig. 57.

From this, it was found that the rate of hydrogen evolution tends to depend on the temperature: hydrogen evolves at a low operation voltage and the rate of hydrogen evolution becomes higher as the temperature is raised.

Relation of the energy efficiency with the operation voltage is shown in Fig. 58.

It was found that the energy efficiency is equal to or larger than 100% even when the operation voltage is around 1000 mV, and the energy efficiency is particularly high when the operation voltage is kept equal to or smaller than 600 mV.

[Hydrogen generating example 3-5]

The same hydrogen generating cell with that of hydrogen generating example 3-1 was used. The cell was operated while the temperature being kept at 50°C with the flow of air to the air electrode kept at 50 ml/min and the flow of fuel to the fuel electrode varied to 1.5, 2.5, 5.0, 7.5, or 10.0 ml/min. Then, while the current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

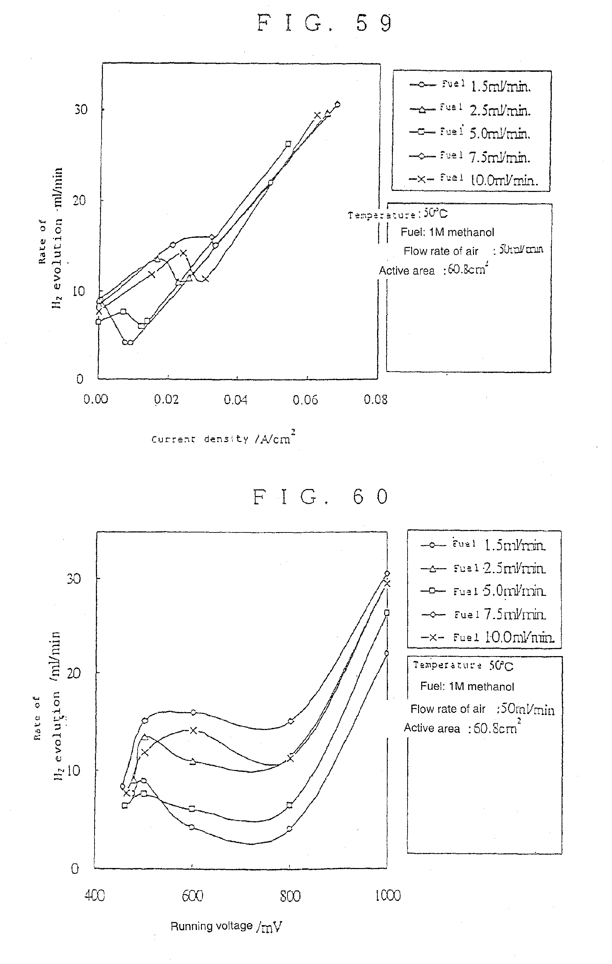

Relation of the rate of hydrogen evolution with the current density applied is shown in Fig. 59, and relation of the rate of hydrogen evolution with the operation voltage is shown in Fig. 60.

It was found that the rate of hydrogen evolution tends to depend on the operation voltage, and hydrogen evolves when the operation voltage is equal to or larger than 400 mV; hydrogen is readier to evolve with increase of the flow rate of fuel; and the rate of hydrogen evolution tends to grow when the operation voltage is equal to or larger than 800 mV for all the flow rates of fuel tested.

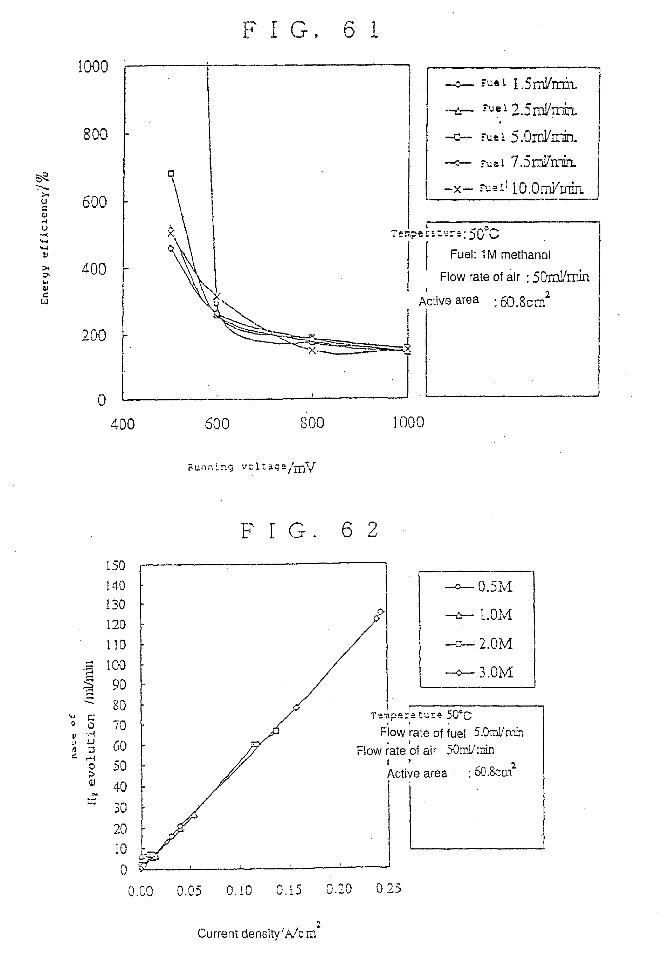

Relation of the energy efficiency with the operation voltage is shown in Fig. 61.

It was found that the energy efficiency is equal to or larger thar: 100% even when the operation voltage is around 1000 mV, and the energy efficiency is particularly high when the operation voltage is kept equal to or smaller than 600 mV.

[Hydrogen generating example 3-6]

The same hydrogen generating cell as that of hydrogen generating example 3-1 was used. The cell was operated while the temperature being kept at 50°C with the flow of air to the air electrode kept at 50 ml/min and the constant flow of fuel to the fuel electrode kept at 5 ml/min while fuel concentration being varied to 0.5, 1, 2, or 3M. Then, while the external current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

Relation of the rate of hydrogen evolution with the current density applied is shown in Fig. 62, and relation of the rate of hydrogen evolution with the operation voltage is shown in Fig. 63.

From this, it was found that the rate of hydrogen evolution grows almost linearly with the increase of current density provided that the current density is equal to or higher the 0.02A/cm$^2$.

It was also found that the rate of hydrogen evolution tends to depend on the operation voltage, and hydrogen evolves when the operation voltage is equal to or larger than 400 mV; hydrogen is readier to evolve with increase of the concentration of fuel, and the rate of hydrogen evolution grows sharply under the fuel concentration of 2M or 3M, when the operation voltage approaches 400 to 500 mV; and the rate of hydrogen evolution becomes virtually constant under the fuel concentration of 1M when the operation voltage is in the range of 400 to 800 mV, while the rate of hydrogen evolution tends to grow when the operation voltage becomes equal to or larger than 800 mV, and no hydrogen will evolve when the fuel concentration is lower than this level (1M) unless the operation voltage is raised sufficiently high.

Relation of the energy efficiency with the operation voltage is shown in Fig. 64.

It was found that the energy efficiency is equal to or larger than 100% even when the operation voltage is around 1000 mV except for a case where the fuel concentration is kept at 0.5M, and the energy efficiency is particularly high with the concentration of the fuel being 1, 2 or 3M when the operation voltage is kept equal to or smaller than 600 mV. When the concentration of fuel was 0.5M, no hydrogen evolved when the operation voltage was low. Under this condition, the cell behaved quite differently in terms of energy efficiency.

[Hydrogen generating example 3-7]

The same hydrogen generating cell with that of hydrogen generating example 3-1 was used (except that the air electrode consisted of an oxidizing electrode to which oxidizing gas was flowed). The cell was operated while the temperature being kept at 50°C with the constant flow of 1M fuel to the fuel electrode kept at 5 ml/min and the flow of oxidizing gas to the oxidizing electrode kept at 14.0 ml/min while oxygen concentration being varied to 10, 21, 40, or 100%. Then, while the current flowing between the oxidizing electrode and the fuel electrode being varied by means of a DC power source from outside, the operation voltage between the fuel electrode and the oxidizing electrode, the rate of hydrogen evolution occurring from the fuel electrode, and the energy efficiency were monitored and analyzed. The oxidizing gas containing 21% oxygen was represented by air, and the oxidizing gas containing 10% oxygen was obtained by mixing air with nitrogen. The oxidizing gas containing 40% oxygen was obtained by adding oxygen (100% oxygen) to air.

Relation of the rate of hydrogen evolution with the current density applied is shown in Fig. 65, and relation of the rate of hydrogen evolution with the operation voltage is shown in Fig. 66.

From this, it was found that the rate of hydrogen evolution grows almost linearly with the increase of current density provided that the current density is equal to or higher than 0.03 A/cm$^2$.

It was also found that the rate of hydrogen evolution tends to depend on the operation voltage, and hydrogen evolves when the operation voltage is equal to or larger than 400 mV; hydrogen is readier to evolve with increase of the concentration of oxygen; and the rate of hydrogen evolution becomes virtually constant under when the operation voltage is in the range of 400 to 800 mV, while it tends to grow when the operation voltage becomes equal to or larger than 800 mV.

Relation of the energy efficiency with the operation voltage is shown in Fig. 67.

It was found that the energy efficiency is equal to or larger than 100% even When the applied voltage is around 1000 mV, and the energy efficiency is particularly high with the concentration of oxygen being high when the applied voltage is kept equal to or smaller than 600 mV.

[Hydrogen generating example 3-8]

The same hydrogen generating cell as that of hydrogen generating example 3-1 was used (except that the air electrode consisted of an oxidizing electrode to which liquid hydrogen peroxide was flowed). The hydrogen generating cell was placed in an electric furnace where hot air was circulated. The cell was operated while the temperature being varied to 30, 50, 70, or 90°C with the flow of 1M aqueous solution of methanol to the fuel electrode kept at 5 ml/min and the flow of 1M H$_2$O$_2$ (hydrogen peroxide) to the oxidizing electrode varied from 2.6 to 5.5 ml/min,. Then, while the current flowing between the oxidizing electrode and the fuel electrode being varied by means of a DC power source from outside, the operation voltage between the fuel electrode and the oxidizing electrode, the rate of hydrogen evolution occurring from the fuel electrode, and the energy efficiency were monitored and analyzed.

The flow rate of hydrogen peroxide was adjusted such that the open-circuit voltage was approximately equal to 500 mV for all the temperatures tested.

Relation of the rate of hydrogen evolution with the current density applied is shown in Fig. 08, and relation of the rate of hydrogen evolution with the operation voltage is shown in Fig. 69.

From this, it was found that the rate of hydrogen evolution tends to depend on the operation voltage, and hydrogen evolves when the operation voltage is equal to or larger than 500 mV, and tends to grow when the operation voltage is equal to or larger than 800 mV; and hydrogen is readier to evolve with increase of the operation temperature.

Relation of the energy efficiency with the operation voltage is shown in Fig. 70.

It was found that the energy efficiency is equal to or larger than 100% even when the operation voltage is around 1000 mV, and the energy efficiency is particularly high with the temperature of 90°C when the operation voltage is kept equal to or smaller than 800 mV.

What is Important here is that hydrogen was withdrawn from the hydrogen generating cells of Example 3 whose energy content exceeded the electric current supplied from outside. In other words, the hydrogen generating cell of Example 3 generates hydrogen of energy more than inputted electric energy. In addition, reforming occurred at a surprisingly low temperature of 30 to 90°C. in view of these facts, the hydrogen generating device is likely to be novel and the effect to use this hydrogen generating device in the standalone hydrogen generating system is profound.

In the following embodiments, examples to produce hydrogen by the hydrogen generating device used in the standalone hydrogen generating system of the invention using a fuel other than methanol will be described.

EXAMPLE 4

Hydrogen was generated by the hydrogen generating device used in the standalone hydrogen generating system of the invention as described in Claim 2 of the invention (open circuit condition) using ethanol as a fuel.

The same hydrogen generating cell as that of hydrogen generating example 1-1 was used. At the cell temperature of 80°C, the flow rate of 1M aqueous solution Of ethanol was made at 5ml/min to flow to the fuel electrode and the flow rate of air was made at 65 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Table 1:

Table 1:

| Air | Open-circuit voltage | Gas evolution rate | $H_2$ concentration | $H_2$ evolution rate |
|---|---|---|---|---|
| /ml/min | /mV | /ml/min | /% | /ml/min |
| 65 | 478 | 0.6 | 65.2 | 0.39 |

As shown in Table 1, it was confirmed that hydrogen was generated at the open-circuit voltage of 478 mV, but the hydrogen evolution rate was small.

EXAMPLE 5

Hydrogen was generated by the hydrogen generating device used in the standalone hydrogen generating system of the invention as described in Claim 2 of the invention (open circuit condition) using ethylene glycol as a fuel.

The same hydrogen generating cell as that of hydrogen generating example 1-1 was used. At the cell temperature of 80°C, the flow rate of 1M aqueous solution of ethylene glycol was made at 5 ml/min to flow to the fuel electrode and the flow rate of air was made at 105 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Table 2:

Table 2:

| Air | Open-circuit voltage | Gas evolution rate | $H_2$ concentration | $H_2$ evolution rate |
|---|---|---|---|---|
| /ml/min | /mV | /ml/min | /% | /ml/min |
| 105 | 474 | 2.4 | 88.4 | 2.12 |

As shown in Table 2, it was confirmed that hydrogen was generated at the open-circuit voltage of 474 mV. The hydrogen evolution rate was larger than the case of aqueous solution of ethanol as a fuel but considerably smaller than the case of aqueous solution of methanol.

EXAMPLE 6

Hydrogen was generated by the hydrogen generating device used in the standalone hydrogen generating system of the invention as described in Claim 2 of the invention (open circuit condition) using 2-propanol as a fuel.

The same hydrogen generating cell as that of hydrogen generating example 1-1 was used. At the cell temperature of 80°C, the flow rate of 1M aqueous solution of 2-propanol was made at 5 ml/min to flow to the fuel electrode and the flow rate of air was made at 35 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Table 3:

Table 3:

| Air | Open-circuit voltage | Gas evolution rate | $H_2$ concentration | $H_2$ evolution rate |
|---|---|---|---|---|
| /ml/min | /mV | /ml/min | /% | /ml/min |
| 35 | 514 | 3.96 | 95.6 | 3.78 |

As shown in Table 3, it was confirmed that hydrogen was generated at the open-circuit voltage of 514 mV, but the hydrogen evolution rate was larger than the case of the aqueous solution of ethanol or the aqueous solution of ethylene glycol as a fuel and the closest to the aqueous solution of methanol. Particularly, the hydrogen concentration in the generated gas was extremely high.

EXAMPLE 7

Hydrogen was generated by the hydrogen generating device used in the standalone hydrogen generating system of the invention as described in Claim 2 of the invention (open circuit condition) using diethyl ether as a fuel.
The same hydrogen generating cell as that of hydrogen generating example 1-1 was used. At the cell temperature of 80°C, the flow rate of 1M aqueous solution of diethyl ether was made at 5 ml /min to flow to the fuel electrode and the flow rate of air was made at 20 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Table 4:

Table 4:

| Air | Open-circuit voltage | Gas evolution rate | $H_2$ concentration | $H_2$ evolution rate |
|---|---|---|---|---|
| /ml/min | /mV | /ml/min | /% | /ml/min |
| 20 | 565 | 3.0 | 7.6 | 0.23 |

As shown in Table 4, it was confirmed that hydrogen was generated at the open-circuit voltage of 565 mV. The hydrogen concentration in the generated gas was smaller than the cases using alcohol as a fuel and the hydrogen evolution rate was also small.

EXAMPLE 8

Hydrogen was generated by the hydrogen generating device used in the standalone hydrogen generating system of the invention as described in Claim 2 of the invention (open circuit condition) using formaldehyde, formic acid as a fuel.
The same hydrogen generating cell as that of hydrogen generating example 1-1 was used. At the cell temperature of 50°C, the flow rate of 1M aqueous solution of formaldehyde, the flow rate of 1M aqueous solution of formic acid were made at 5 ml/min respectively to flow to the fuel electrode and the flow of air was made at 0 to 100 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Figs. 71 and 72 with the case where methanol was used.
As shown in Fig. 71, in the case of formaldehyde, formic acid, generation of hydrogen was confirmed from the fuel electrode of the cell by reducing the air flow rate as in the case of methanol. Also, the hydrogen evolution rate is the largest with methanol, followed by formaldehyde and formic acid. Moreover, it was found out that hydrogen was not generated unless the air flow rate is reduced in this order.
From Fig. 72, it was found out that in the case of formaldehyde and formic acid, the hydrogen evolution rate (hydrogen evolution volume) also tends to depend on the open-circuit voltage as with methanol and that hydrogen was generated at the open-circuit voltage of 200 to 800 mV. In the case of formic acid, hydrogen was generated in a state where the open-circuit voltage was lower than that for methanol, formaldehyde. Also, the peak of hydrogen evolution rate was observed at a low open-circuit voltage (about 350 mV) for formic acid, while that of methanol, formaldehyde was about 500 mV.

EXAMPLE 9

Hydrogen was generated by the hydrogen generating device used in the standalone hydrogen generating system of the invention as described in Claims 2 and 35 of the invention (open circuit condition) by changing the structure of the hydrogen generating cell in the Examples 1 to 8.
The same hydrogen generating cell as that of hydrogen generating example 1-1 was used to produce the hydrogen generating cell except that only the air electrode separator board is combined except the fuel electrode separator board of the separator boards.

The hydrogen generating cell produced as above was used. At the cell temperature of 50°C, the flow rate of 1M aqueous solution of methanol was made at 5 ml/min to flow to the fuel electrode and the flow rate of air was made at 0 to 150 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.
The result is shown in Figs. 73.

Hydrogen was generated at the air flow rate of 30 to 130 ml/min, but the hydrogen evolution volume was lower than the case where the separator board is used for both the fuel electrode and the air electrode.

The result of Fig. 73 is shown as relation of relation of the rate of hydrogen evolution with the open-circuit voltage in Fig. 74.
From this, the hydrogen evolution rate (hydrogen evolution volume) shows a tendency to depend on the open-circuit voltage as that of hydrogen generating example 1-1, and hydrogen is found to be generated at the open-circuit voltage of 400 to 600 mV. Also, the peak of the hydrogen evolution rate is observed in the vicinity of 470 mV.

INDUSTRIAL APPLICABILITY

As mentioned above, since the hydrogen generating device in the standalone hydrogen generating system of the invention can generate a hydrogen-containing gas by decomposing a fuel containing an organic compound at 100°C or less, hydrogen which is useful as a fuel for a fuel cell or a treatment gas for manufacturing a semiconductor device. Also, since the hydrogen generating device can be operated without operating a commercial power source, the hydrogen generating device can be used at any place for supplying hydrogen to a fuel cell automobile and the like.

**Claims**

1. A standalone hydrogen generating system provided with at least a hydrogen generating cell constituting a hydrogen generating device, an auxiliary machine for driving the hydrogen generating device, and a fuel cell for supplying electric energy to the auxiliary machines, **characterized in that** the hydrogen generating device is to generate a gas containing hydrogen by decomposing a fuel containing an organic compound, comprising a partition membrane, a fuel electrode provided on one surface of the partition membrane, means for supplying a fuel containing the organic compound and water to the fuel electrode, an oxidizing electrode provided on the other surface of the partition membrane, means for supplying an oxidizing agent to the oxidizing electrode, and means for generating and collecting the gas containing hydrogen from the fuel electrode.

2. The standalone hydrogen generating system as described in claim 1, wherein the hydrogen generating cell in the hydrogen generating device is an open circuit having neither means for withdrawing electric energy to outside from the hydrogen generating cell, nor means for providing electric energy from outside to the hydrogen generating cell.

3. The standalone hydrogen generating system as described in claim 1, wherein the hydrogen generating cell in the hydrogen generating device has means for withdrawing electric energy to outside with the fuel electrode serving as a negative electrode and the oxidizing electrode as a positive electrode.

4. The standalone hydrogen generating system as described in claim 1, wherein the hydrogen generating cell in the hydrogen generating device has means for providing electric energy from outside with the fuel electrode serving as cathode and the oxidizing electrode as anode.

5. The standalone hydrogen generating system as described in claim 1, wherein two or more of hydrogen generating devices selected from a group consisting of a hydrogen generating device, which is an open circuit having neither means for withdrawing electric energy to outside from a hydrogen generating cell, nor means for providing electric energy from outside to the hydrogen generating cell, a hydrogen generating device having means for withdrawing electric energy to outside with the fuel electrode of the hydrogen generating cell serving as a negative electrode and the oxidizing electrode of the cell as a positive electrode, and a hydrogen generating device having means for providing electric energy from outside with the fuel electrode of the hydrogen generating cell serving as cathode and the oxidizing electrode of the cell as anode are combined in use.

6. The standalone hydrogen generating system as described in claim 3 or 5, wherein instead of the whole or a part of the electric energy supplied from the fuel cell to the auxiliary machine, the electric energy withdrawn from the hydrogen generating device having means for withdrawing the electric energy to the outside is supplied to the auxiliary machine.

7. The standalone hydrogen generating system as described in any of claims 1 to 5, wherein the fuel cell is a direct methanol fuel cell.

8. The standalone hydrogen generating system as described in any of claims 1 to 5, wherein the fuel cell is a polymer electrolyte fuel cell using hydrogen obtained from the hydrogen-containing gas as a fuel.

9. The standalone hydrogen generating system as described in claim 8, wherein a hydrogen tank storing the hydrogen to be supplied to the polymer electrolyte fuel cell is provided.

10. The standalone hydrogen generating system as described in claim 8, wherein the hydrogen-containing gas generated by the hydrogen generating device is supplied to the polymer electrolyte fuel cell without being cooled.

11. The standalone hydrogen generating system as described in claim 1, wherein voltage between the fuel electrode and the oxidizing electrode is 200 to 1000 mV in the hydrogen generating device.

12. The standalone hydrogen generating system as described in claim 2, wherein voltage between the fuel electrode and the oxidizing electrode is 300 to 800 mV in the hydrogen generating device.

13. The standalone hydrogen generating system as described in claim 3, wherein voltage between the fuel electrode and the oxidizing electrode is 200 to 600 mV in the hydrogen generating device.

14. The standalone hydrogen generating system as described in claim 3 or 13, wherein voltage between the fuel electrode and the oxidizing electrode and/or the evolution volume of hydrogen-containing gas are/is adjusted by varying the volume of electric energy withdrawn from the hydrogen generating device.

15. The standalone hydrogen generating system as described in claim 4, wherein voltage between the fuel electrode and the oxidizing electrode is 300 to 1000 mV in the hydrogen generating device.

16. The standalone hydrogen generating system as described in claim 4 or 15, wherein voltage between the fuel electrode and the oxidizing electrode and/or the evolution volume of hydrogen-containing gas are/is adjusted by varying the volume of electric energy provided in the hydrogen generating device.

17. The standalone hydrogen generating system as described in any of claims 1 to 4, wherein the evolution volume of hydrogen-containing gas is adjusted by varying voltage between the fuel electrode and the oxidizing electrode in the hydrogen generating device.

18. The standalone hydrogen generating system as described in any of claims 1 to 4, wherein voltage between the fuel electrode and the oxidizing electrode and/or the evolution volume of hydrogen-containing gas are/is adjusted by varying the supply volume of the oxidizing agent in the hydrogen generating device.

19. The standalone hydrogen generating system as described in any of claims 1 to 4, wherein voltage between the fuel electrode and the oxidizing electrode and/or the evolution volume of hydrogen-containing gas are/is adjusted by varying the concentration of the oxidizing agent in the hydrogen generating device.

20. The standalone hydrogen generating system as described in any of claims 1 to 4, wherein voltage between the fuel electrode and the oxidizing electrode and/or the evolution volume of hydrogen-containing gas are/is adjusted by varying the supply volume of fuel containing an organic compound and water in the hydrogen generating device.

21. The standalone hydrogen generating system as described in any of claims 1 to 4, wherein voltage between the fuel electrode and the oxidizing electrode and/or the evolution volume of hydrogen-containing gas are/is adjusted by varying the concentration of fuel containing an organic compound and water in the hydrogen generating device.

22. The standalone hydrogen generating system as described in any of claims 1 to 4, wherein the operation temperature of the hydrogen generating device is not higher than 100°C.

23. The standalone hydrogen generating system as described in claim 22, wherein the operation temperature is between 30 and 90°C.

24. The standalone hydrogen generating system as described in any of claims 1 to 4, wherein the organic compound supplied to the fuel electrode of the hydrogen generating cell in the hydrogen generating device is one or two or more organic compounds selected from a group consisting of alcohol, aldehyde, carboxyl acid and ether.

25. The standalone hydrogen generating system as described in claim 24, wherein the alcohol is methanol.

26. The standalone hydrogen generating system as described in any of claims 1 to 4, wherein the oxidizing agent supplied to the oxidizing electrode of the hydrogen generating cell in the hydrogen generating device is an oxygen-containing gas or oxygen.

27. The standalone hydrogen generating system as described in claim 26, wherein the oxidizing agent supplied to the oxidizing electrode of the hydrogen generating cell in the hydrogen generating device is an exhaust air exhausted from the fuel cell or the hydrogen generating device.

28. The standalone hydrogen generating system as described in any of claims 1 to 4, wherein the oxidizing agent supplied to the oxidizing electrode of the hydrogen generating cell in the hydrogen generating device is a liquid containing hydrogen peroxide solution.

29. The standalone hydrogen generating system as described in any of claims 1 to 4, wherein the partition membrane of the hydrogen generating cell in the hydrogen generating device is a proton conducting solid electrolyte membrane.

30. The standalone hydrogen generating system as described in claim 29, wherein the proton conducting solid electrolyte membrane is a perfluorocarbon sulfonate-based solid electrolyte membrane.

31. The standalone hydrogen generating system as described in any of claims 1 to 4, wherein a catalyst of the fuel electrode of the hydrogen generating cell in the hydrogen generating device is made of platinum-ruthenium alloy supported by carbon powder serving as a base.

32. The standalone hydrogen generating system as described in any of claims 1 to 4, wherein a catalyst of the oxidizing electrode of the hydrogen generating cell in the hydrogen generating device is made of platinum supported by carbon powder serving as a base.

33. The standalone hydrogen generating system as described in any of claims 1 to 4, wherein the hydrogen generating cell in the hydrogen generating device has a fuel electrode separator provided with a channel groove for flowing the fuel and an oxidizing electrode separator provided with a channel groove for flowing the oxidizing agent.

34. The standalone hydrogen generating system as described in claim 33, wherein the fuel electrode separator and the oxidizing electrode separator of the hydrogen generating cell in the hydrogen generating device have the channel grooves of the both provided with displacement so that the channel groove of the fuel electrode separator is opposed to a ridge portion other than the channel groove of the oxidizing electrode separator at least partially.

35. The standalone hydrogen generating system as described in any of claims 1 to 4, wherein the hydrogen generating cell in the hydrogen generating device has an oxidizing electrode separator provided with a channel groove for flowing the oxidizing agent and does not have a fuel electrode separator.

36. The standalone hydrogen generating system as described in any of claims 1 to 4, wherein means for circulating fuel containing an organic compound and water is provided at the hydrogen generating device.

37. The standalone hydrogen generating system as described in any of claims 1 to 4, wherein a carbon dioxide absorbing portion for absorbing carbon dioxide contained in the generated hydrogen-containing gas is provided at the hydrogen generating device.

38. The standalone hydrogen generating system as described in any of claims 1 to 4, wherein a hydrogen permeable membrane is provided at an outlet of the hydrogen-containing gas of the hydrogen generating device.

39. The standalone hydrogen generating system as described in any of claims 1 to 4, wherein an insulating material for insulating a heat generated by the hydrogen generating device is not provided.

# FIG. 1 (a)

# FIG. 1 (b)

FIG. 1(c)

24～26     10

33

23

28

16

31

40

39

17

20

21

FIG. 2

( Air. )
$N_2 + O_2$

( Fuel )
$CH_3OH + H_2O$

Gas diffusion layer　170 $\mu$ m

Air electrode catalyst layer: 30 $\mu$ m

Electrolyte membrane (Nafion 115)

Gas diffusion layer　170 $\mu$ m

Fuel electrode catalyst layer:　30 $\mu$ m

# F I G . 3

# F I G . 4

# F I G. 5

# F I G. 6

F I G. 7

F I G. 8

## F I G . 9

## F I G . 1 0

EP 1 837 942 A1

## FIG. 11

Legend:
- 90°C (rate of hydrogen evolution
- 70°C (rate of hydrogen evolution
- 50°C (rate of hydrogen evolution
- 30°C (rate of hydrogen evolution
- 90°C (Open circuit voltage
- 70°C (Open circuit voltage
- 50°C (Open circuit voltage
- 30°C (Open circuit voltage

Fuel: 1M methanol
Flow rate of fuel 5.0ml/min
Active area 60.8cm$^2$

Axes: Rate of H$_2$ evolution ml/min; Open circuit voltage /mV; Flow rate of air /ml/min

## FIG. 12

Legend:
- 90°C
- 70°C
- 50°C
- 30°C

Fuel: 1M methanol
Flow rate of fuel 5.0ml/min
Active area 60.8cm$^2$

Axes: Rate of H$_2$ evolution ml/min; Open circuit voltage /mV

41

F I G . 1 3

Rate of H₂ evolution /ml/min

Open circuit voltage

Rate of
H₂ evolution

open circuit voltage /mV

Flow rate of air /ml/min

Fuel 1.5ml/min
fuel 2.5ml/min
fuel 5.0ml/min
fuel 7.5ml/min
fuel 10.0ml/min
fuel 1.5ml/min
fuel 2.5ml/min
fuel 5.0ml/min
fuel 7.5ml/min
fuel 10.0ml/min

Temperature 50°C
Fuel: 1M methanol

Active 60.8cm²
area

F I G . 1 4

Rate of H₂ evolution /ml/min

Open circuit voltage /mV

fuel 1.5ml/min.
fuel 2.5ml/min.
fuel 5.0ml/min.
fuel 7.5ml/min.
fuel 10.0ml/min.

Temperature 50°C
Fuel: 1M methanol

Active 60.8cm²
area

42

F I G . 1 5

F I G . 1 6

## F I G . 1 7

## F I G . 1 8

# F I G . 1 9

Legend:
- 30℃ Rate of hydrogen evolution
- 50℃ Rate of hydrogen evolution
- 70℃ Rate of hydrogen evolution
- 90℃ Rate of hydrogen evolution
- 30℃ Open circuit voltage
- 50℃ Open circuit voltage
- 70℃ Open circuit voltage
- 90℃ Open circuit voltage

Fuel: 1M methanol
Flow rate of fuel : 5.0ml/min
Oxidizing agent: 1MH$_2$O$_2$
Active area : 60.8cm$^2$

# F I G . 2 0

Legend:
- 30℃ Rate of hydrogen evolution
- 50℃ Rate of hydrogen evolution
- 70℃ Rate of hydrogen evolution
- 90℃ Rate of hydrogen evolution

Fuel: 1M methanol
Flow rate of fuel : 5.0ml/min
Oxidizing agent : 1MH$_2$O$_2$
Active area : 60.8cm$^2$

F I G . 2 1

( Air, )
$N_2 + O_2$

( Fuel )
$CH_3OH + H_2O$

Gas diffusion layer: 170 μm

Gas diffusion layer. 170 μm

Air electrode catalyst layer : 30 μm

Fuel electrode : 30 μm
catalyst layer

Electrolyte membrane (Nafion)

F I G . 2 2

Temperature 50°C
Fuel: 1M methanol
Flow rate of fuel 5.0ml/min
Active area 60.8cm²

## F I G. 2 3

Legend:
- —— Air100ml/min
- —○— Air90ml/min
- —△— Air80ml/min
- —□— Air70ml/min
- —◇— Air60ml/min
- —×— Air50ml/min
- —+— Air40ml/min
- —— Air30ml/min
- —✕— Air10ml/min

Temperature 50°C
Fuel: 1M methanol
Flow rate of fuel 5.0ml/min
Active area :60.8cm$^2$

Rate of H$_2$ evolution /ml/min
Running voltage /mV

## F I G. 2 4

Legend:
- —○— Air100ml/min
- —△— Air70ml/min
- —□— Air50ml/min
- —◇— Air30ml/min

Temperature 30°C
Fuel: 1M methanol
Flow rate of fuel :5.0ml/min
Active area :60.8cm$^2$

Running voltage/mV
Current density/A/cm$^2$

# FIG. 25

Legend:
- —○— Air 100ml/min
- —△— Air 70ml/min
- —□— Air 50ml/min
- —◇— Air 30ml/min

Temperature 30°C
Fuel: 1M methanol
Flow rate of fuel 5.0ml/min
Active area : 60.8cm²

X-axis: Running voltage/mV
Y-axis: Rate of $H_2$ evolution /ml/min

# FIG. 26

Legend:
- —○— Air 200ml/min
- —△— Air 150ml/min
- —□— Air 100ml/min
- —×— Air 50ml/min

Temperature 70°C
Fuel: 1M methanol
Flow rate of fuel 5.0ml/min
Active area 60.8cm²

X-axis: Current density/A/cm²
Y-axis: Running voltage/mV

# F I G . 2 7

Legend:
- —○— Air200ml/min
- —△— Air150ml/min
- —□— Air100ml/min
- —×— Air50ml/min

Temperature : 70°C
Fuel: 1M methanol
Flow rate of fuel 5.0ml/min
Active area : 60.8cm²

Y-axis: Rate of $H_2$ evolution /ml/min
X-axis: Running voltage /mV

# F I G . 2 8

Legend:
- —○— Air250ml/min
- —△— Air150ml/min
- —□— Air100ml/min
- —×— Air50ml/min

Temperature :90°C
Fuel: 1M methanol
Flow rate of fuel 5.0ml/min
Active area :60.8cm²

Y-axis: Running voltage/mV
X-axis: Current density/A/cm²

# FIG. 29

Legend:
- —○— Air 250ml/min
- —△— Air 150ml/min
- —□— Air 100ml/min
- —×— Air 50ml/min

Temperature 90°C
Fuel: 1M methanol
Flow rate of fuel 5.0ml/min
Active area :60.8cm²

Rate of $H_2$ evolution ml/min

Running voltage mV

# FIG. 30

Legend:
- —○— 30°C
- —△— 50°C
- —□— 70°C
- —×— 90°C

Fuel: 1M methanol
Flow rate of fuel 5.0ml/min
Flow rate of air :50ml/min
Active area :60.8cm²

Running voltage/mV

Current density/A/cm²

# FIG. 31

Fuel: 1M methanol
Flow rate of fuel : 5.0ml/min
Flow rate of air : 50ml/min
Active area : 60.8cm²

# FIG. 32

Fuel: 1M methanol
Flow rate of fuel : 5.0ml/min
Flow rate of air : 100ml/min
Active area : 60.8cm²

# F I G . 3 3

# F I G . 3 4

# FIG. 35

Temperature : 50°C
Fuel: 1M methanol
Flow rate of air : 50ml/min
Active area : 60.8cm²

Legend:
- Fuel 1.5ml/min
- Fuel 2.5ml/min
- Fuel 5.0ml/min
- Fuel 7.5ml/min
- Fuel 10.0ml/min

Rate of H₂ evolution /ml/min

Running voltage /mV

# FIG. 36

Temperature : 50°C
Flow rate of fuel : 5.0ml/min
Flow rate of air 50ml/min
Active area : 60.8cm²

Legend:
- 0.5M
- 1.0M
- 2.0M
- 3.0M

Running voltage mV

Current density /A/cm²

## F I G . 3 7

Running voltage /mV

Legend:
- —○— 0.5M
- —△— 1.0M
- —□— 2.0M
- —◇— 3.0M

Temperature 50°C
Flow rate of fuel 5.0ml/min
Flow rate of air : 5ml/min
Active area 60.8cm$^2$

## F I G . 3 8

Current density /A/cm$^2$

Legend:
- —○— Oxygen concentration 10%
- —△— Oxygen concentration 21%
- —□— Oxygen concentration 40%
- —◇— Oxygen concentration 100%

Temperature 50°C
Fuel: 1M methanol
Flow rate of fuel : 5.0ml/min
Flow rate of oxidizing gas 14.0ml/min
Active area : 60.8cm$^2$

# F I G . 3 9

Legend:
- Oxygen concentration 10%
- Oxygen concentration 21%
- Oxygen concentration 40%
- Oxygen concentration 100%

Temperature 50°C
Fuel: 1M methanol
Flow rate of fuel : 5.0ml/min
Flow rate of oxidizing gas : 14.0ml/min
Active area : 60.8cm²

Y-axis: Rate of $H_2$ evolution /ml/min
X-axis: Running voltage /mV

# F I G . 4 0

Legend:
- 30°C ( Hydrogen peroxide. 3.4ml/min)
- 50°C ( Hydrogen peroxide 2.6ml/min)
- 70°C ( Hydrogen peroxide 5.5ml/min)
- 90°C ( Hydrogen peroxide 5.3ml/min)

Fuel: 1M methanol
Flow rate of fuel 5.0ml/min
Oxidizing agent 1M $H_2O_2$
Flow rate of oxidizing agent : 2.6~5.5ml/min
Active area 60.8cm²

Y-axis: Running voltage/mV
X-axis: Current density /mA/cm²

# FIG. 41

Rate of H₂ evolution ml/min

10.0
8.0
6.0
4.0
2.0
0.0

—○— 30°C( Hydrogen peroxide 3.4ml/min)

—△— 50°C( Hydrogen peroxide 2.6ml/min)

—□— 70°C( Hydrogen peroxide 5.5ml/min)

—◇— 90°C( Hydrogen peroxide 5.3ml/min)

Fuel: 1M methanol
Flow rate of fuel : 5.0ml/min
Oxidizing agent 1MH₂O₂
Flow rate of oxidizing agent : 2.6～5.5ml/min
Active area : 60.8cm²

0    200    400    600

Running voltage /mV

# FIG. 42

DC source

e⁻          e⁻

( Air )          ( Fuel )
N₂+O₂          CH₃OH+H₂O

Gas diffusion layer 170 μm

Air electrode catalyst layer : 30 μm

Gas diffusion layer 170 μm

Fuel electrode catalyst layer : 30 μm

Electrolyte membrane (Nafion)

56

# F I G. 4 3

# F I G. 4 4

# F I G. 4 5

Legend:
- Air:10ml/min
- Air:20ml/min
- Air:30ml/min
- Air:40ml/min
- Air:50ml/min
- Air:80ml/min

Temperature : 50°C
Fuel: 1M methanol
Flow rate of fuel : 5.0ml/min
Active area : 60.8cm$^2$

Running voltage/mV vs Current density/A/cm$^2$

# F I G. 4 6

Legend:
- Air:10ml/min
- Air:20ml/min
- Air:30ml/min
- Air:40ml/min
- Air:50ml/min
- Air:80ml/min

Temperature 50°C
Fuel: 1M methanol
Flow rate of fuel : 5.0ml/min
Active area 60.8cm$^2$

Energy efficiency /% vs Running voltage/mV

# FIG. 47

# FIG. 48

## F I G. 4 9

Legend:
- —○— Air:10ml/min
- —△— Air:30ml/min
- —□— Air:50ml/min
- —◇— Air:70ml/min

Temperature : 30°C

Fuel: 1M methanol

Flow rate of fuel : 5.0ml/min

Active area : 60.8cm$^2$

Y-axis: Energy efficiency /%
X-axis: Running voltage /mV

## F I G. 5 0

Legend:
- —○— Air:10ml/min
- —△— Air:30ml/min
- —□— Air:50ml/min
- —◇— Air:70ml/min

Temperature : 70°C

Fuel: 1M methanol

Flow rate of fuel : 5.0ml/min

Active area : 60.8cm$^2$

Y-axis: Rate of $H_2$ evolution ml/min
X-axis: Current density /A/cm$^2$

# F I G. 5 1

# F I G. 5 2

## F I G. 5 3

Legend:
- Air:10ml/min
- Air:50ml/min
- Air:100ml/min
- Air:200ml/min

Temperature 90°C

Fuel: 1M methanol

Flow rate of fuel : 5.0ml/min

Active area 60.8cm$^2$

X-axis: Current density /cm$^2$

Y-axis: Rate of H$_2$ evolution /ml/min

## F I G. 5 4

Legend:
- Air:10ml/min
- Air:50ml/min
- Air:100ml/min
- Air:200ml/min

Temperature 90°C

Fuel: 1M methanol

Flow rate of fuel : 5.0ml/min

Active area : 60.8cm$^2$

X-axis: Running voltage mV

Y-axis: Rate of H$_2$ evolution /ml/min

FIG. 55

FIG. 56

# F I G. 5 7

| | |
|---|---|
| —○— | 30°C |
| —□— | 50°C |
| —×— | 70°C |
| —×— | 90°C |

Fuel: 1M methanol
Flow rate of fuel : 5.0ml/min
Flow rate of air : 50ml/min
Active area : 60.8cm$^2$

Running voltage /mV

# F I G. 5 8

| | |
|---|---|
| —○— | 30°C |
| —△— | 50°C |
| —□— | 70°C |
| —×— | 90°C |

Fuel: 1M methanol
Flow rate of fuel : 5.0ml/min
Flow rate of air : 50ml/min
Active area : 60.8cm$^2$

Running voltage /mV

## F I G . 5 9

Legend:
- Fuel 1.5ml/min.
- Fuel 2.5ml/min.
- Fuel 5.0ml/min.
- Fuel 7.5ml/min.
- Fuel 10.0ml/min.

Temperature : 50°C
Fuel: 1M methanol
Flow rate of air : 50ml/min
Active area : 60.8cm²

Current density /A/cm²

## F I G . 6 0

Legend:
- Fuel 1.5ml/min.
- Fuel 2.5ml/min.
- Fuel 5.0ml/min.
- Fuel 7.5ml/min.
- Fuel 10.0ml/min.

Temperature 50°C
Fuel: 1M methanol
Flow rate of air : 50ml/min
Active area : 60.8cm²

Running voltage /mV

# F I G . 6 1

# F I G . 6 2

# F I G. 6 3

# F I G. 6 4

## F I G. 6 5

Legend:
- Oxygen 10% concentration
- Oxygen 21% concentration
- Oxygen 40% concentration
- Oxygen 100% concentration

Temperature : 50°C
Fuel: 1M methanol
Flow rate of fuel : 5.0ml/min
Flow rate of oxidizing gas : 14.0ml/min
Active area 60.8cm²

Y-axis: Rate of $H_2$ evolution ml/min
X-axis: Current density cm²

## F I G. 6 6

Legend:
- Oxygen 10% concentration
- Oxygen 21% concentration
- Oxygen 40% concentration
- Oxygen 100% concentration

Temperature : 50°C
Fuel: 1M methanol
Flow rate of fuel : 5.0ml/min
Flow rate of oxidizing gas : 14.0ml/min
Active area : 60.8cm²

Y-axis: Rate of $H_2$ evolution ml/min
X-axis: Running voltage/mV

FIG. 67

| | |
|---|---|
| —○— | Oxygen concentration 10% |
| —△— | Oxygen concentration 21% |
| —□— | Oxygen concentration 40% |
| —◇— | Oxygen concentration 100% |

Temperature 50°C
Fuel: 1M methanol
Flow rate of fuel : 5.0ml/min
Flow rate of oxidizing gas : 14.0ml/min
Active area : 60.8cm²

FIG. 68

| | |
|---|---|
| —○— 30°C ( | Hydrogen peroxide 3.4ml/min) |
| —△— 50°C ( | Hydrogen peroxide 2.6ml/min) |
| —□— 70°C ( | Hydrogen peroxide 5.5ml/min) |
| —◇— 90°C ( | Hydrogen peroxide 5.3ml/min) |

Fuel: 1M methanol
Flow rate of fuel : 5.0ml/min
Oxidizing agent 1M H₂O₂
Flow rate of oxidizing agent 2.6~5.5ml/min
Active area 60.8cm²

# FIG. 69

Rate of H₂ evolution ml/min vs Voltage mV

- —○— 30°C( Hydrogen peroxide 3.4ml/min)
- —△— 50°C( Hydrogen peroxide 2.6ml/min)
- —□— 70°C( Hydrogen peroxide 5.5ml/min)
- —◇— 90°C( Hydrogen peroxide 5.3ml/min)

Fuel: 1M methanol
Flow rate of fuel : 5.0ml/min
Oxidizing agent:1MH₂O₂
Flow rate of oxidizing agent 2.6〜5.5ml/min
Active area 60.8cm²

# FIG. 70

Energy efficiency % vs Voltage mV

- —○— 30°C( Hydrogen peroxide 3.4ml/min)
- —△— 50°C( Hydrogen peroxide 2.6ml/min)
- —□— 70°C( Hydrogen peroxide 5.5ml/min)
- —◇— 90°C( Hydrogen peroxide 5.3ml/min)

Fuel: 1M methanol
Flow rate of fuel : 5.0ml/min
Oxidizing agent:1MH₂O₂
Flow rate of oxidizing agent 2.6〜5.5ml/min
Active area :60.8cm²

F I G . 7 1

F I G . 7 2

F I G . 7 3

Temperature :50℃
Concentration of fuel :1M
Flow rate of fuel :5.0ml/min.
Active area :60.8 cm$^2$

(y-axis) Rate of H$_2$ evolution ml/min
(x-axis) Flow rate of air/ml/min

F I G . 7 4

Temperature :50℃
Concentration of fuel :1M
Flow rate of fuel :5.0ml/min.
Active area :60.8 cm$^2$

(y-axis) Rate of H$_2$ evolution/ml/min
(x-axis) Open circuit voltage/mV

<table>
<tr><td colspan="2"><b>INTERNATIONAL SEARCH REPORT</b></td><td>International application No.<br>PCT/JP2005/024209</td></tr>
</table>

A.  CLASSIFICATION OF SUBJECT MATTER
*H01M8/06*(2006.01), *H01M8/04*(2006.01), *H01M8/10*(2006.01), *C01B3/32*
(2006.01), *C25B1/02*(2006.01), *C25B9/08*(2006.01), *C25B15/02*(2006.01)

According to International Patent Classification (IPC) or to both national classification and IPC

B.  FIELDS SEARCHED

Minimum documentation searched (classification system followed by classification symbols)
H01M8/06, H01M8/04, H01M8/10, C01B3/32, C25B1/02, C25B9/08, C25B15/02

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 11-229167 A  (Permelec Electrode Ltd.),<br>24 August, 1999 (24.08.99),<br>Full text<br>(Family: none) | 1-39 |
| A | JP 2001-297779 A  (Matsushita Electric<br>Industrial Co., Ltd.),<br>26 October, 2001 (26.10.01),<br>Full text<br>& US 2001/0033954 A1 | 1-39 |
| A | JP 2003-308869 A  (Takayuki SHIMAMUNE),<br>31 October, 2003 (31.10.03),<br>Full text<br>(Family: none) | 1-39 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
15 March, 2006 (15.03.06)

Date of mailing of the international search report
28 March, 2006 (28.03.06)

Name and mailing address of the ISA/
Japanese Patent Office

Authorized officer

Facsimile No.

Telephone No.

Form PCT/ISA/210 (second sheet) (April 2005)

**INTERNATIONAL SEARCH REPORT**

| | International application No. |
|---|---|
| | PCT/JP2005/024209 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2005-240064 A  (Seiko Epson Corp.),<br>08 September, 2005 (08.09.05),<br>Full text<br>(Family: none) | 1-39 |
| A | JP 6-321501 A  (Sumitomo Electric<br>Industries, Ltd.),<br>22 November, 1994 (22.11.94),<br>Full text<br>(Family: none) | 1-39 |
| A | JP 62-256976 A  (Mitsubishi Heavy<br>Industries, Ltd.),<br>09 November, 1987 (09.11.87),<br>Full text<br>(Family: none) | 1-39 |

Form PCT/ISA/210 (continuation of second sheet) (April 2005)

## REFERENCES CITED IN THE DESCRIPTION

**Patent documents cited in the description**

- JP 2002337999 A
- JP 2004200042 A
- JP 2002161998 A
- JP 2002363779 A
- JP 7045602 A
- JP 3328993 B
- JP 3360349 B
- US 6299744 B
- US 6368492 B

- US 6432284 B
- US 6533919 B
- US 20030226763 A
- JP 2001297779 A
- JP 6073582 A
- JP 6073583 A
- JP 2002208419 A
- JP 2003123799 A

**Non-patent literature cited in the description**

- Development and Practical Application of Solid Polymer type Fuel Cell. Technical Information Institute, Co., Ltd, 28 May 1999, 141-166